# EUROPEAN PATENT SPECIFICATION

(11) **EP 4 191 313 B1**
(45) Date of publication and mention of the grant of the patent: **22.10.2025**
(21) Application number: 21855409.5
(22) Date of filing: 03.08.2021
(51) Int. Cl.: G02B 7/09, H02N 2/04, G02B 27/64, G03B 5/00, G02B 7/08, G02B 13/00, G02B 26/08, G03B 3/10, G03B 30/00, H02N 2/00, H02N 2/02

(54) **ULTRASONIC PIEZOELECTRIC MOTOR, CAMERA MODULE, AND ELECTRONIC DEVICE**
PIEZOELEKTRISCHER ULTRASCHALLMOTOR, KAMERAMODUL UND ELEKTRONISCHE VORRICHTUNG
MOTEUR PIÉZOÉLECTRIQUE À ULTRASONS, MODULE DE CAMÉRA ET DISPOSITIF ÉLECTRONIQUE

(30) Priority: 12.08.2020 CN 202010808647
(43) Date of publication of application: 07.06.2023
(73) Proprietor: Huawei Technologies Co., Ltd., Shenzhen, Guangdong 518129 (CN)
(72) Inventor: LI, Dengfeng, Shenzhen, Guangdong 518129 (CN); HE, Yingyong, Shenzhen, Guangdong 518129 (CN); BIAN, Xinxiu, Shenzhen, Guangdong 518129 (CN); DING, Zhaoyuan, Shenzhen, Guangdong 518129 (CN)
(74) Representative: Goddar, Heinz J.
(86) International application number: PCT/CN2021/110321
(87) International publication number: WO 2022/033356

(56) References cited:
- CN-A- 103 176 261
- CN-A- 103 176 261
- CN-A- 105 676 568
- CN-A- 105 932 900
- CN-A- 109 298 501
- CN-A- 111 246 070
- CN-A- 111 399 163
- CN-A- 111 399 163
- CN-U- 205 051 600
- JP-A- 2006 067 707
- US-A1- 2006 272 440
- US-A1- 2010 091 392
- US-A1- 2012 081 804
- US-A1- 2014 092 265
- US-A1- 2016 161 828

## Description

### TECHNICAL FIELD

This application relates to the field of image shooting technologies, and in particular, to an ultrasonic piezoelectric motor, a camera module, and an electronic device.

### BACKGROUND

Currently, a motor of a camera module of an electronic device (like a mobile phone) is mainly a moving coil motor. The moving coil motor includes a magnet and a coil. The coil is wound around a camera lens. Under a magnetic field of the magnet, an energized coil generates electromagnetic force to push the camera lens to move, implementing auto focus (auto focus, AF) of the camera module. However, because the moving coil motor is driven by magnetic force, and is sensitive to a magnetic material or magnetic field around, magnetic interference is likely to occur, and consequently, focusing or image stabilization precision of the moving coil motor is low, resulting in poor image shooting quality of the camera module.
US 2010/091392 A1 discloses a lens driving unit that generates a precise linear motion in a spatially limited structure by using a bending vibration piezoelectric motor having a new structure, and a camera module comprising the lens driving unit. The lens driving unit includes: a lens carrier supporting a lens and comprising a guide axis exposed at least partially to the outside and extending in a direction substantially perpendicular to the lens; and a piezoelectric driving unit having a center portion contacting the guide axis according to a bending motion of a piezoelectric element and moving the lens carrier in a direction in which the guide axis extends.
US 2012/081804 A1 discloses a driving mechanism that includes a first piezoelectric element that vibrates in a thickness-shear vibration mode in a first direction, a first member that is driven to vibrate in the first direction by the first piezoelectric element, a second piezoelectric element that is supported by the first member and that vibrates in the thickness-shear vibration mode in a second direction, and a second member that is driven to vibrate in the second direction by the second piezoelectric element.
CN 103 176 261 A discloses a driving device that is used for driving a lens module to move. The driving device comprises a fixing support, a movable piece, a magnetic plate, a magnet, a supporting body, a guiding rod, a contact rod and a piezoelectric unit. The fixing support is provided with an accommodating space and an opening. The movable piece is arranged in the accommodating space and provided with a through hole. The magnetic plate is fixed on the fixing support. The magnetic is fixed on the movable piece, and acting force between the magnet and the magnetic plate can fix the movable piece on a preset position in the fixing support. The supporting body is matched with the fixing support and used for accommodating the movable piece. The guiding rod penetrates through the through hole of the movable piece, and two ends of the guiding rod are fixed on the fixing support and the supporting body respectively. The contact rod is fixed on the movable piece. The piezoelectric unit is fixed in the opening, butts against the contact rod and is used for deforming to generate friction between the piezoelectric unit and the contact rod to drive the movable piece to move in the accommodating space along the guiding rod.
CN 111 399 163 A discloses a lens driving device with an optical anti-shake function. The lens driving device comprises a lens supporting part, an X-direction base, a Y-direction base, an X-direction driving part, a Y-direction driving part, wherein the lens supporting part is used for accommodating at least one lens; the X-direction base is used for carrying out anti-shake control in the X direction;the Y-direction base is used for carrying out anti-shake control in the Y direction, and the X-direction base is located between the lens supporting part and the Y-direction base; the X-direction driving part is respectively connected to the lens supporting part and the X-direction base, and comprises an X-direction piezoelectric element; the lens supporting part is driven to move in the X direction by deformation of the X-direction piezoelectric element so as to realize shake prevention in the X direction; a Y-direction drive unit which is connected to the X-direction base and the Y-direction base, and comprises a Y-direction piezoelectric element; and the X-direction base is driven to move in the Y direction by deformation of the Y-direction piezoelectric element so as to achieve anti-shake in the Y direction. The invention further provides a camera device and electronic equipment.

### SUMMARY

An objective of this application is to provide an ultrasonic piezoelectric motor, a camera module, and an electronic device. The ultrasonic piezoelectric motor uses a piezoelectric driving technology to resolve an electromagnetic interference problem of a conventional motor, and has high focusing precision, so that the camera module and the electronic device have better image shooting quality.

According to a first aspect, this application provides an ultrasonic piezoelectric motor. The ultrasonic piezoelectric motor may be applied to a camera module of an electronic device. The ultrasonic piezoelectric motor includes a frame, a carrier and a Z-direction piezoelectric driver. The carrier is installed on an inner side of the frame, and can move in a Z direction relative to the frame. The carrier is used to install the camera lens, and the Z direction is parallel to an optical axis of the camera lens. The Z-direction piezoelectric driver is located between the frame and the carrier. The Z-direction piezoelectric driver includes a Z-direction base block, a Z-direction extend block, and a Z-direction touch block. The Z-direction touch block is disposed close to the carrier. One end of the Z-direction base block is fastened to the frame, one end of the Z-direction extend block is fastened to the other end of the Z-direction base block, and the Z-direction touch block is fastened to the other end of the Z-direction extend block. The Z-direction base block is configured to deform based on a first electrical signal, to drive the Z-direction touch block to abut against the carrier or leave the carrier. The Z-direction extend block is configured to deform based on a second electrical signal, to drive the Z-direction touch block to move in a Z direction. When the Z-direction touch block abuts against the carrier and the Z-direction extend block deforms, the Z-direction touch block drives the carrier to move in the Z direction.

In this application, the Z-direction piezoelectric driver can drive the carrier to move in the Z direction relative to the frame, and the camera lens of the camera module may be installed on the carrier. Therefore, the Z-direction piezoelectric driver may drive the camera lens to move in the Z direction, so that the camera module implements auto focus. Because the ultrasonic piezoelectric motor of the camera module is driven by a piezoelectric effect instead of a magnetic force, the ultrasonic piezoelectric motor can resolve an electromagnetic interference problem of a conventional motor, and has higher focusing precision, so that image shooting quality of the camera module and the electronic device to which the camera module is applied is better.

In addition, the Z-direction piezoelectric driver is a four-axis piezoelectric driver with two deformation directions, can periodically and continuously move the camera lens, and has a stable driving force. Therefore, the Z-direction piezoelectric driver can drive the camera lens having a relatively large weight and a relatively large stroke. In this way, the camera module is more diversified in structure, and better meets a high image shooting requirement on the camera lens, such as a wide angle and a long focal length. The Z-direction piezoelectric driver can maintain an extended or contracted state under control of the electrical signal, to lock the carrier at a target location, so as to improve stability of focusing.

The Z-direction base block and the Z-direction extend block may be two piezoelectric material stacks whose deformation directions are orthogonal. When currents of different phases and different amplitudes are input to the Z-direction base block and the Z-direction extend block respectively, the Z-direction base block and the Z-direction extend block each deform in a corresponding deformation direction, to synthesize movement of an elliptical track or a rectangular track on the Z-direction touch block.

The Z-direction base block may include a bottom, a deformation part, and a top. The bottom and the top of the Z-direction base block may be fixed structures that do not deform. The bottom of the Z-direction base block is fixedly connected to the frame, and the top of the Z-direction base block is fixedly connected to the Z-direction extend block. The deformation part of the Z-direction base block is made of a piezoelectric material, and deforms under control of the electrical signal.

The Z-direction extend block may include a first end part, a deformation part, and a second end part. The first end part and the second end part of the Z-direction extend block may be fixed structures that do not deform. The first end part of the Z-direction extend block is fixedly connected to the top of the Z-direction base block, and the second end part of the Z-direction extend block is fixedly connected to the Z-direction touch block. The deformation part of the Z-direction extend block is made of a piezoelectric material, and deforms under control of the electrical signal.

A top surface of the Z-direction touch block may have a large friction coefficient. For example, a top that is of the Z-direction touch block and that is away from the Z-direction extend block or the entire Z-direction touch block may be made of a material with a large surface friction coefficient, to increase a friction force between the Z-direction touch block and another component. Alternatively, the top surface of the Z-direction touch block may obtain a large friction coefficient by surface roughening. The top of the Z-direction touch block or the entire Z-direction touch block may alternatively be made of a material having a specific flexibility, so that the Z-direction touch block has a specific buffering performance, to protect the Z-direction touch block and a component that touches the Z-direction touch block when the Z-direction piezoelectric driver works. For example, the Z-direction touch block may be made of rubber or the like.

In a possible implementation, the ultrasonic piezoelectric motor may further include a first circuit board. The first circuit board is fastened to the frame, and the Z-direction piezoelectric driver is fastened to the first circuit board and is electrically connected to the first circuit board.

In a possible implementation, the ultrasonic piezoelectric motor further includes a Z-direction drive circuit. The Z-direction drive circuit may be formed on the first circuit board, or may be fastened and electrically connected to the first circuit board. When the Z-direction drive circuit is formed on the first circuit board, the Z-direction drive circuit may include a cable on the first circuit board and one or more components fastened to the first circuit board. The component may be but is not limited to a resistor, an inductor, a capacitor, or the like. When the Z-direction drive circuit is fastened and electrically connected to the first circuit board, the Z-direction drive circuit may be embodied as a chip structure or a circuit assembly including a circuit board and a component. The Z-direction drive circuit is electrically connected to the cable of the first circuit board, to electrically connect to the Z-direction piezoelectric driver through the cable of the first circuit board.

In a possible implementation, the Z-direction drive circuit is electrically connected to the Z-direction piezoelectric driver, and the Z-direction drive circuit is configured to generate the first electrical signal and the second electrical signal based on an auto focus signal, so that the Z-direction piezoelectric driver performs at least once a Z-direction drive action. The Z-direction drive action includes: The Z-direction base block extends to drive the Z-direction touch block to abut against the carrier; the Z-direction extend block extends or contracts to drive the Z-direction touch block to drive the carrier to move in the Z direction; the Z-direction base block contracts to drive the Z-direction touch block to leave the carrier; and the Z-direction extend block contracts or extends to drive the Z-direction touch block to move back to an initial location.

In this embodiment, in the Z-direction drive action, the Z-direction touch block abuts against the carrier by an extending action of the Z-direction base block, and when the Z-direction touch block abuts against the carrier, the Z-direction touch block drives the carrier to move by an extending or contracting action of the Z-direction extend block in the Z direction, to drive the camera lens installed on the carrier to move in the Z direction. In the Z-direction drive action, the Z-direction touch block leaves the carrier by a contracting action of the Z-direction base block, and when the Z-direction touch block leaves the carrier, the Z-direction touch block moves back to the initial location by an extending or contracting action of the Z-direction extend block, to prepare to start the Z-direction drive action next time.

In this embodiment, under control of the first electrical signal and the second electrical signal, the Z-direction piezoelectric driver may perform the Z-direction drive action a plurality of times, and may enable the Z-direction touch block to implement movement of a closed-loop track a plurality of times, to periodically squeeze and drive the carrier to move, leave the carrier, and return to the initial location, so as to drive the carrier to move in the Z direction continuously, to meet a displacement requirement of auto focus.

When a phase difference between the first electrical signal and the second electrical signal changes, a direction in which the Z-direction drive action drives the carrier to move changes, so that the Z-direction drive action can drive the carrier to move forward to get away from an image sensor or move backward to get close to the image sensor, that is, to implement bidirectional movement in the Z direction, so as to meet a displacement requirement of auto focus.

When the Z-direction drive action is performed once, the Z-direction extend block performs the extending action once and the contracting action once, and when the Z-direction drive action is performed for a plurality of times, the extending action and the contracting action of the Z-direction extend block are alternately performed.

A deformation action of the Z-direction base block and a deformation action of the Z-direction extend block may be performed non-synchronously, or may be performed synchronously, and may be controlled by designing a current waveform of the first electrical signal and a current waveform of the second electrical signal.

In a possible implementation, the ultrasonic piezoelectric motor further includes a first magnetic member and a second magnetic member. The first magnetic member is embedded in the frame, the second magnetic member is embedded in the carrier, and the second magnetic member and the first magnetic member are attracted to each other. The carrier is slidably connected to the frame.

In this implementation, a magnetic attraction force between the second magnetic member and the first magnetic member enables the carrier and the frame to be attracted to each other, a sliding connection relationship between the carrier and the frame is stable and reliable, and the carrier and the frame can be self-locked by friction, so that focusing stability of the camera module is high.

In a possible implementation, the ultrasonic piezoelectric motor further includes at least one first ball, and the at least one first ball is located between the carrier and the frame. When the carrier slides relative to the frame, the at least one first ball rolls. A magnetic attraction force between the second magnetic member and the first magnetic member can enable the carrier and the frame to press the first ball tightly.

In some other possible implementations, the carrier and the frame may alternatively be slidably connected by touching each other. For example, the carrier is provided with a sliding surface, the frame is provided with a sliding surface, and the sliding surface of the carrier and the sliding surface of the frame touch each other and can slide relatively. For example, the sliding surface of the carrier and the sliding surface of the frame may use a wear-resistant material or be provided with a wear-resistant layer.

In a possible implementation, the frame is provided with a first groove, an extension direction of the first groove is parallel to the Z direction, the carrier is provided with a second groove, the second groove is disposed opposite to the first groove, and the first ball is partially located in the first groove and partially located in the second groove. In this implementation, the first groove and the second groove may be disposed to guide and limit the first ball, which helps ensure reliability when the carrier slides relative to the frame.

In a possible implementation, the ultrasonic piezoelectric motor further includes a base, an X-direction piezoelectric driver, and a Y-direction piezoelectric driver. The frame is installed on the inner side of the base and can move in the X direction and the Y direction. The X direction, the Y direction, and the Z direction are perpendicular to each other. The X-direction piezoelectric driver is located between the base and the bracket.

The X-direction piezoelectric driver includes an X-direction base block, an X-direction extend block, and an X-direction touch block, one end of the X-direction base block is fastened to the base, one end of the X-direction extend block is fastened to the other end of the X-direction base block, and the X-direction touch block is fastened to the other end of the X-direction extend block. The X-direction base block is configured to deform based on a third electrical signal to drive the X-direction touch block to abut against the frame or leave the frame, and the X-direction extend block is configured to deform based on a fourth electrical signal to drive the X-direction touch block to move in the X direction. When the X-direction touch block abuts against the frame and the X-direction extend block deforms, the X-direction touch block drives the frame to move in the X direction.

The Y-direction piezoelectric driver is located between the base and the bracket, the Y-direction piezoelectric driver includes a Y-direction base block, a Y-direction extend block, and a Y-direction touch block, one end of the Y-direction base block is fastened to the base, one end of the Y-direction extend block is fastened to the other end of the Y-direction base block, and the Y-direction touch block is fastened to the other end of the Y-direction extend block. The Y-direction base block is configured to deform based on a fifth electrical signal to drive the Y-direction touch block to abut against the frame or leave the frame, and the Y-direction extend block is configured to deform based on a sixth electrical signal to drive the Y-direction touch block to move in the Y direction. When the Y-direction touch block abuts against the frame and the Y-direction extend block deforms, the Y-direction touch block drives the frame to move in the Y direction.

In this implementation, because the X-direction piezoelectric driver can drive the frame to move in the X direction relative to the base, the Y-direction piezoelectric driver can drive the frame to move in the Y direction relative to the base, and the carrier is installed inside the frame, the X-direction piezoelectric driver and the Y-direction piezoelectric driver can drive the camera lens to move on a plane perpendicular to the optical axis of the camera lens, so that the camera module implements optical image stabilization.

In addition, the X-direction piezoelectric driver and the Y-direction piezoelectric driver each are a four-axis piezoelectric driver with two deformation directions, can periodically and continuously move the camera lens, and have a stable driving force. Therefore, the X-direction piezoelectric driver and the Y-direction piezoelectric driver can drive the camera lens having a relatively large weight and a relatively large stroke. In this way, the camera module is more diversified in structure, and better meets a high image shooting requirement on the camera lens, such as a wide angle and a long focal length. The X-direction piezoelectric driver and the Y-direction piezoelectric driver can maintain an extended or contracted state under control of the electrical signal, to lock the frame at a target location, so as to improve stability of optical image stabilization.

The X-direction base block and the X-direction extend block of the X-direction piezoelectric driver may be two piezoelectric material stacks whose deformation directions are orthogonal. When currents of different phases and different amplitudes are input to the X-direction base block and the X-direction extend block respectively, the X-direction base block and the X-direction extend block each deform in a corresponding deformation direction, to synthesize movement of an elliptical track or a rectangular track on the X-direction touch block. The Y-direction base block and the Y-direction extend block of the Y-direction piezoelectric driver may be two piezoelectric material stacks whose deformation directions are orthogonal. When currents of different phases and different amplitudes are input to the Y-direction base block and the Y-direction extend block respectively, the Y-direction base block and the Y-direction extend block each deform in a corresponding deformation direction, to synthesize movement of an elliptical track or a rectangular track on the Y-direction touch block.

For example, the X-direction base block may be soldered on one solder pad on the base, to electrically connect to a circuit on the base. The X-direction base block may further be bonded to the base, to implement a firm structural connection to the base by soldering and bonding. The X-direction base block may include a bottom, a deformation part, and a top. The bottom and the top of the X-direction base block may be fixed structures that do not deform. The bottom of the X-direction base block is fixedly connected to the base, and the top of the X-direction base block is fixedly connected to the X-direction extend block. The deformation part of the X-direction base block is made of a piezoelectric material, and deforms under control of the electrical signal.

The X-direction extend block may include a first end part, a deformation part, and a second end part. The first end part and the second end part of the X-direction extend block may be fixed structures that do not deform. The first end part of the X-direction extend block is fixedly connected to the top of the X-direction base block, and the second end part of the X-direction extend block is fixedly connected to the X-direction touch block. The deformation part of the X-direction extend block is made of a piezoelectric material, and deforms under control of the electrical signal.

A top surface of the X-direction touch block may have a large friction coefficient. For example, a top that is of the X-direction touch block and that is away from the X-direction extend block or the entire X-direction touch block may be made of a material with a large surface friction coefficient, to increase a friction force between the X-direction touch block and another component. Alternatively, the top surface of the X-direction touch block may obtain a large friction coefficient by surface roughening. The top of the X-direction touch block or the entire X-direction touch block may alternatively be made of a material having a specific flexibility, so that the X-direction touch block has a specific buffering performance, to protect the X-direction touch block and a component that touches the X-direction touch block when the X-direction piezoelectric driver works. For example, the X-direction touch block may be made of rubber or the like.

For example, the Y-direction base block may be soldered on one solder pad on the base, to electrically connect to a circuit on the base. The Y-direction base block may further be bonded to the base, to implement a firm structural connection to the base by soldering and bonding. The Y-direction base block may include a bottom, a deformation part, and a top. The bottom and the top of the Y-direction base block may be fixed structures that do not deform. The bottom of the Y-direction base block is fixedly connected to the base, and the top of the Y-direction base block is fixedly connected to the Y-direction extend block. The deformation part of the Y-direction base block is made of a piezoelectric material, and deforms under control of the electrical signal.

The Y-direction extend block may include a first end part, a deformation part, and a second end part. The first end part and the second end part of the Y-direction extend block may be fixed structures that do not deform. The first end part of the Y-direction extend block is fixedly connected to the top of the Y-direction base block, and the second end part of the Y-direction extend block is fixedly connected to the Y-direction touch block. The deformation part of the Y-direction extend block is made of a piezoelectric material, and deforms under control of the electrical signal.

A top surface of the Y-direction touch block may have a large friction coefficient. For example, a top that is of the Y-direction touch block and that is away from the Y-direction extend block or the entire Y-direction touch block may be made of a material with a large surface friction coefficient, to increase a friction force between the Y-direction touch block and another component. Alternatively, the top surface of the Y-direction touch block may obtain a large friction coefficient by surface roughening. The top of the Y-direction touch block or the entire Y-direction touch block may alternatively be made of a material having a specific flexibility, so that the Y-direction touch block has a specific buffering performance, to protect the Y-direction touch block and a component that touches the Y-direction touch block when the Y-direction piezoelectric driver works. For example, the Y-direction touch block may be made of rubber or the like.

In a possible implementation, the ultrasonic piezoelectric motor further includes an X-direction drive circuit and a Y-direction drive circuit. The ultrasonic piezoelectric motor may further include a second circuit board. The X-direction drive circuit may be formed on the second circuit board, or may be fastened and electrically connected to the second circuit board. The Y-direction drive circuit may be formed on the second circuit board, or may be fastened and electrically connected to the second circuit board.

In a possible implementation, the X-direction drive circuit is electrically connected to the X-direction piezoelectric driver, and the X-direction drive circuit is configured to generate the third electrical signal and the fourth electrical signal based on an image stabilization signal, so that the X-direction piezoelectric driver performs at least once an X-direction drive action.

The X-direction drive action includes: The X-direction base block extends to drive the X-direction touch block to abut against the frame; the X-direction extend block extends or contracts to drive the X-direction touch block to drive the frame to move in the X direction; the X-direction base block contracts to drive the X-direction touch block to leave the frame; and the X-direction extend block contracts or extends to drive the X-direction touch block to move back to an initial location.

In a possible implementation, the Y-direction drive circuit is electrically connected to the Y-direction piezoelectric driver, and the Y-direction drive circuit is configured to generate the fifth electrical signal and the sixth electrical signal based on an image stabilization signal, so that the Y-direction piezoelectric driver performs at least once a Y-direction drive action. The Y-direction drive action includes: The Y-direction base block extends to drive the Y-direction touch block to abut against the frame; the Y-direction extend block extends or contracts to drive the Y-direction touch block to drive the frame to move in the Y direction; the Y-direction base block contracts to drive the Y-direction touch block to leave the frame; and the Y-direction extend block contracts or extends to drive the Y-direction touch block to move back to an initial location.

In a possible implementation, the ultrasonic piezoelectric motor further includes a base and an XY-direction piezoelectric driver, the frame is disposed on an inner side of the base and can move in an X direction and a Y direction relative to the base, and the X direction, the Y direction, and the Z direction are perpendicular to each other.

The XY-direction piezoelectric driver is located between the base and the bracket, the XY-direction piezoelectric driver includes an XY-direction base block, an X-direction extend block, a Y-direction extend block, and an XY-direction touch block that are stacked, one end of the XY-direction base block is fastened to the base, one end of the X-direction extend block is fastened to the other end of the XY-direction base block, one end of the Y-direction extend block is fastened to the other end of the X-direction extend block, and the XY-direction touch block is fastened to the other end of the Y-direction extend block.

The XY-direction base block is configured to deform based on a seventh electrical signal, to drive the XY-direction touch block to abut against the frame or leave the frame, the X-direction extend block is configured to deform based on an eighth electrical signal, to drive the XY-direction touch block to move in the X direction, and the Y-direction extend block is configured to deform based on a ninth electrical signal, to drive the XY-direction touch block to move in the Y direction, the XY-direction touch block abuts against the frame, and when the X-direction extend block and/or the Y-direction extend block deform/deforms, the XY-direction touch block drives the frame to move on an XY plane, where the XY plane is perpendicular to the Z direction.

The XY-direction base block, the X-direction extend block, and the Y-direction extend block may be three piezoelectric material stacks whose deformation directions are orthogonal. When currents of different phases and different amplitudes are input to the XY-direction base block, the X-direction extend block, and the Y-direction extend block respectively, the XY-direction base block, the X-direction extend block, and the Y-direction extend block each deform in a corresponding deformation direction, to synthesize movement of an ellipsoid track or a cylinder track on the XY-direction touch block.

The XY-direction base block may include a bottom, a deformation part, and a top. The bottom and the top of the XY-direction base block may be fixed structures that do not deform. The bottom of the XY-direction base block is fixedly connected to the base, and the top of the XY-direction base block is fixedly connected to the X-direction extend block. The deformation part of the XY-direction base block is made of a piezoelectric material, and deforms under control of the electrical signal.

The X-direction extend block may include a first end part, a deformation part, and a second end part. The first end part and the second end part of the X-direction extend block may be fixed structures that do not deform. The first end part of the X-direction extend block is fixedly connected to the top of the XY-direction base block, and the second end part of the X-direction extend block is fixedly connected to the Y-direction extend block. The deformation part of the X-direction extend block is made of a piezoelectric material, and deforms under control of the electrical signal.

The Y-direction extend block may include a first end part, a deformation part, and a second end part. The first end part and the second end part of the Y-direction extend block may be fixed structures that do not deform. The first end part of the Y-direction extend block is fixedly connected to the top of the X-direction extend block, and the second end part of the Y-direction extend block is fixedly connected to the XY-direction touch block. The deformation part of the Y-direction extend block is made of a piezoelectric material, and deforms under control of the electrical signal.

A top surface that is of the XY-direction touch block and that is away from the Y-direction extend block may have a large friction coefficient. For example, a top that is of the XY-direction touch block and that is away from the Y-direction extend block or the entire XY-direction touch block may be made of a material with a large surface friction coefficient, to increase a friction force between the XY-direction touch block and another component. Alternatively, the top surface of the XY-direction touch block may obtain a large friction coefficient by surface roughening. The top of the XY-direction touch block or the entire XY-direction touch block may alternatively be made of a material having a specific flexibility, so that the XY-direction touch block has a specific buffering performance, to protect the XY-direction touch block and a component that touches the XY-direction touch block when the XY-direction piezoelectric driver works. For example, the XY-direction touch block may be made of rubber or the like.

In a possible implementation, the ultrasonic piezoelectric motor further includes an XY-direction drive circuit, the XY-direction drive circuit is electrically connected to the XY-direction piezoelectric driver, and the XY-direction drive circuit is configured to generate the seventh electrical signal, the eighth electrical signal, and the ninth electrical signal based on an image stabilization signal, so that the XY-direction piezoelectric driver performs at least once an X-direction drive action, at least once a Y-direction drive action, or at least once an XY-direction drive action.

The X-direction drive action includes: The XY-direction base block extends to drive the XY-direction touch block to abut against the frame; the X-direction extend block extends or contracts to drive the XY-direction touch block to drive the frame to move in the X direction; the XY-direction base block contracts to drive the XY-direction touch block to leave the frame; and the X-direction extend block contracts or extends to drive the XY-direction touch block to move back to an initial location. In this embodiment, the Y-direction extend block keeps a specific length, and the Y-direction extend block may not be powered on, or the ninth electrical signal is in a state in which a current does not change. When the X-direction drive action is performed once, the X-direction extend block performs the extending action once and the contracting action once, and when the X-direction drive action is performed for a plurality of times, the extending action and the contracting action of the X-direction extend block are alternately performed.

The Y-direction drive action includes: The XY-direction base block extends to drive the XY-direction touch block to abut against the frame; the Y-direction extend block extends or contracts to drive the XY-direction touch block to drive the frame to move in the XY direction; the Y-direction base block contracts to drive the XY-direction touch block to leave the frame; and the Y-direction extend block contracts or extends to drive the XY-direction touch block to move back to an initial location. In this implementation, the X-direction extend block keeps a specific length, and the X-direction extend block may not be powered on, or the eighth electrical signal is in a state in which a current does not change. When the Y-direction drive action is performed once, the Y-direction extend block performs the extending action once and the contracting action once, and when the Y-direction drive action is performed for a plurality of times, the extending action and the contracting action of the Y-direction extend block are alternately performed.

The XY-direction drive action includes: the XY-direction base block extends to drive the XY-direction touch block to abut against the frame; the X-direction extend block extends or contracts, and the Y-direction extend block extends or contracts, to drive the XY-direction touch block to drive the frame to move on the XY plane, where the XY plane is perpendicular to the Z direction; the XY-direction base block contracts to drive the XY-direction touch block to leave the frame; and the X-direction extend block contracts or extends, and the Y-direction extend block contracts or extends, to drive the XY-direction touch block to move back to an initial location. When the X-direction extend block extends, the Y-direction extend block may extend or contract. When the X-direction extend block contracts, the Y-direction extend block may extend or contract. When the XY-direction drive action is performed once, the X-direction extend block performs the extending action once and the contracting action once, and the Y-direction extend block performs the extending action once and the contracting action once, and when the XY-direction drive action is performed for a plurality of times, the extending action and the contracting action of the X-direction extend block are alternately performed, and the extending action and the contracting action of the Y-direction extend block are alternately performed.

In this implementation, the ultrasonic piezoelectric motor performs at least once the X-direction drive action, at least once the Y-direction drive action, or at least once the XY-direction drive action by using the XY-direction piezoelectric driver, to drive the frame to drive the carrier and the camera lens to move in the X direction and/or move in the Y direction. Therefore, the camera lens can be driven by the ultrasonic piezoelectric motor to move on a plane perpendicular to the Z direction, so that the camera module implements optical image stabilization.

In some use scenarios, if an image stabilization requirement can be met by moving the camera lens only in the X direction, the XY-direction piezoelectric driver performs at least once the X-direction drive action; or if an image stabilization requirement can be met by moving the camera lens only in the Y direction, the XY-direction piezoelectric driver performs at least once the Y-direction drive action; or if an image stabilization requirement needs to be met by moving the camera lens in the X direction and moving the camera lens in the Y direction, the XY-direction piezoelectric driver performs at least once the XY-direction drive action. In some application scenarios, the X-direction drive action, the Y-direction drive action, and the XY-direction drive action may alternatively be combined, to better meet a displacement requirement required by optical image stabilization.

In a possible implementation, the ultrasonic piezoelectric motor further includes a third magnetic member and a fourth magnetic member. The third magnetic member is embedded in the base, the fourth magnetic member is embedded in the frame, the fourth magnetic member and the third magnetic member are attracted to each other, and the frame is slidably connected to the base.

In this implementation, a magnetic attraction force between the fourth magnetic member and the third magnetic member enables the frame and the base to attract each other, a sliding connection relationship between the frame and the base is stable and reliable, and the frame and the base can be self-locked by friction, so that image stabilization stability of the camera module is high.

In some implementations, the first magnetic member and the third magnetic member that are embedded in the frame may be of a same type, for example, both are magnetic conductive members or magnets with same magnetism. In some implementations, sizes and locations of the first magnetic member and the second magnetic member may be set, so that when the carrier and the frame move relative to each other, areas opposite to each other of the first magnetic member and the second magnetic member are consistent or almost unchanged. In this way, an adhesion force between the carrier and the frame is stable and reliable, so that an auto focus process of the camera module is easier to control and adjust. Similarly, sizes and locations of the third magnetic member and the fourth magnetic member may also be set, so that when the frame and the base move relative to each other, areas opposite to each other of the third magnetic member and the fourth magnetic member are consistent or almost unchanged. In this way, an adhesion force between the frame and the base is stable and reliable, so that an optical image stabilization process of the camera module is easier to control and adjust.

In a possible implementation, the ultrasonic piezoelectric motor further includes at least one second ball. The at least one second ball is located between the frame and the base. When the frame slides relative to the base, the at least one second ball rolls.

In some other embodiments, the frame and the base may alternatively be slidably connected by touching each other. For example, the frame is provided with a sliding surface, the base is provided with a sliding surface, and the sliding surface of the frame and the sliding surface of the base touch each other and can slide relatively. For example, the sliding surface of the frame and the sliding surface of the base may be made of a wear-resistant material or provided with a wear-resistant layer.

According to a second aspect, this application further provides an ultrasonic piezoelectric motor. The ultrasonic piezoelectric motor may be applied to a camera module of an electronic device. The ultrasonic piezoelectric motor includes a bracket, a carrier, a Y-direction piezoelectric driver, a rotating frame, a reflector, and an XZ-direction piezoelectric driver. The bracket is provided with installation space and a light-passing hole communicating with the installation space. The carrier is installed in the installation space and can move in a Y direction relative to the bracket. The carrier is configured to install the camera lens. The Y direction is perpendicular to an optical axis of the camera lens. The rotating frame is installed in the installation space and can rotate around the Y direction relative to the bracket. The reflector is fastened to the rotating frame. The reflector is configured to reflect light from the light-passing hole to the camera lens.

The Y-direction piezoelectric driver is located between the bracket and the carrier, the Y-direction piezoelectric driver includes a Y-direction base block, a Y-direction extend block, and a Y-direction touch block, one end of the Y-direction base block is fastened to the bracket, one end of the Y-direction extend block is fastened to the other end of the Y-direction base block, and the Y-direction touch block is fastened to the other end of the Y-direction extend block. The Y-direction base block is configured to deform based on a tenth electrical signal to drive the Y-direction touch block to abut against the carrier or leave the carrier, and the Y-direction extend block is configured to deform based on an eleventh electrical signal to drive the Y-direction touch block to move in the Y direction. When the Y-direction touch block abuts against the carrier and the Y-direction extend block deforms, the Y-direction touch block drives the carrier to move in the Y direction.

The XZ-direction piezoelectric driver is located between the bracket and the rotating frame, the XZ-direction piezoelectric driver includes an XZ-direction base block, an XZ-direction extend block, and an XZ-direction touch block, one end of the XZ-direction base block is fastened to the bracket, one end of the XZ-direction extend block is fastened to the other end of the XZ-direction base block, and the XZ-direction touch block is fastened to the other end of the XZ-direction extend block. The XZ-direction base block is configured to deform based on a twelfth electrical signal, to drive the XZ-direction touch block to abut against the rotating frame or leave the rotating frame, the XZ-direction extend block is configured to deform based on a thirteenth electrical signal, to drive the XZ-direction touch block to move in an XZ direction, where the XZ direction is perpendicular to the Y direction, and when the XZ-direction touch block abuts against the rotating frame and the XZ-direction extend block deforms, the XZ-direction touch block drives the rotating frame to rotate.

In this application, the ultrasonic piezoelectric motor drives the carrier by using the Y-direction piezoelectric driver, to drive the camera lens to move in the Y direction, and drives the rotating frame by using the XZ-direction piezoelectric driver, to drive the reflector to move around the Y direction, so that the camera module can implement auto focus and optical image stabilization.

The XZ direction is any direction in the XZ plane, and includes an X direction and a Z direction. A location for mounting the XZ-direction piezoelectric driver affects a specific direction of the XZ direction. When a deformation direction of the XZ-direction extend block is parallel to the X direction or the Z direction because the XZ-direction piezoelectric driver is mounted at a first location, the XZ direction corresponds to the X direction or the Z direction. When a deformation direction of the XZ-direction extend block is equivalent to being tilted relative to the X direction and being tilted relative to the Y direction because the XZ-direction piezoelectric driver is mounted at a second location, the XZ direction corresponds to a direction between the X direction and the Z direction.

In a possible implementation, the Y-direction base block is soldered on one solder pad on a bearing plate, to electrically connect to a circuit on the bearing plate. The Y-direction base block may further be bonded to the bearing plate, to implement a firm structural connection to the bearing plate by soldering and bonding. The XZ-direction base block is soldered on another solder pad on the bearing plate, to electrically connect to the circuit on the bearing plate. The XZ-direction base block may further be bonded to the bearing plate, to implement a firm structural connection to the bearing plate by soldering and bonding.

In a possible implementation, the ultrasonic piezoelectric motor further includes a Y-direction drive circuit and an XZ-direction drive circuit. The Y-direction drive circuit may be formed on the bearing plate, or may be fastened and electrically connected to the bearing plate. The Y-direction drive circuit is electrically connected to the Y-direction piezoelectric driver, and the Y-direction drive circuit is configured to generate the tenth electrical signal and the eleventh electrical signal based on an image stabilization signal, so that the Y-direction piezoelectric driver performs at least once a Y-direction drive action. The Y-direction drive action includes: The Y-direction base block extends to drive the Y-direction touch block to abut against the carrier; the Y-direction extend block extends or contracts to drive the Y-direction touch block to drive the carrier to move in the Y direction; the Y-direction base block contracts to drive the Y-direction touch block to leave the carrier; and the Y-direction extend block contracts or extends to drive the Y-direction touch block to move back to an initial location.

The XZ-direction drive circuit may be formed on the bearing plate, or may be fastened and electrically connected to the bearing plate. The XZ-direction drive circuit is electrically connected to the XZ-direction piezoelectric driver, and the XZ-direction drive circuit is configured to generate the twelfth electrical signal and the thirteenth electrical signal based on an auto focus signal and an image stabilization signal, so that the XZ-direction piezoelectric driver performs at least once an XZ-direction drive action. In some embodiments, the XZ-direction drive action includes: The XZ-direction base block extends to drive the XZ-direction touch block to abut against the rotating frame; the XZ-direction extend block extends or contracts to drive the XZ-direction touch block to move in the XZ direction and drive the rotating frame to rotate around the Y direction; the XZ-direction base block contracts to drive the XZ-direction touch block to leave the rotating frame; and the XZ-direction extend block contracts or extends to drive the XZ-direction touch block to move back to an initial location.

In a possible implementation, there is a fastening groove and a touch surface on the rotating frame, the reflector is mounted in the fastening groove, the touch surface is disposed opposite to the fastening groove, the touch surface is a curved surface, and the XZ-direction touch block touches the touch surface when abutting against the rotating frame.

In a possible implementation, the ultrasonic piezoelectric motor further includes a fifth magnetic member and a sixth magnetic member. The fifth magnetic member is embedded in the bracket, the sixth magnetic member is embedded in the carrier, the sixth magnetic member and the fifth magnetic member are attracted to each other, and the carrier is slidably connected to the bracket. In this case, a magnetic attraction force between the sixth magnetic member and the fifth magnetic member enables the carrier and the bracket to be attracted to each other, a sliding connection relationship between the carrier and the bracket is stable and reliable, and the carrier and the bracket can be self-locked by friction, so that stability of image stabilization of the camera module is high.

In a possible implementation, the ultrasonic piezoelectric motor further includes at least one third ball. The at least one third ball is located between the carrier and the bracket, and the at least one third ball rolls when the carrier slides relative to the bracket. The third ball may be partially located in a guide groove of the carrier, and partially located in a guide groove of the bracket.

According to a third aspect, this application further provides a camera module, including a camera lens and the ultrasonic piezoelectric motor described in any one of the foregoing implementations. The camera lens is installed on a carrier. The ultrasonic piezoelectric motor may drive the camera lens to move, so that the camera module implements auto focus and optical image stabilization. Because the ultrasonic piezoelectric motor of the camera module is driven by a piezoelectric effect instead of a magnetic force, the ultrasonic piezoelectric motor can resolve an electromagnetic interference problem of a conventional motor, and has higher focusing precision, so that image shooting quality of the camera module and the electronic device to which the camera module is applied is better.

According to a fourth aspect, this application further provides an electronic device, including a processor and the foregoing camera module. The camera module is electrically connected to the processor. The processor may control an image shooting action of the camera module, and may further obtain image data from the camera module and process the image data.

### BRIEF DESCRIPTION OF DRAWINGS

FIG. 1 is a schematic diagram of a structure of an electronic device according to an embodiment of this application;
FIG. 2 is a schematic diagram of a partial structure of a camera module in some embodiments according to an embodiment of this application;
FIG. 3 is a schematic diagram of an inverse piezoelectric effect of a piezoelectric material;
FIG. 4 is a schematic diagram of a structure of an ultrasonic piezoelectric motor of the camera module shown in FIG. 2 in some embodiments;
FIG. 5 is a schematic diagram of a partially-exploded structure of the ultrasonic piezoelectric motor shown in FIG. 4;
FIG. 6 is a schematic diagram of a structure of a base shown in FIG. 5 from another angle;
FIG. 7 is a schematic diagram of a structure of an X-direction piezoelectric driver shown in FIG. 5;
FIG. 8 is a schematic diagram of a use state of the X-direction piezoelectric driver shown in FIG. 7;
FIG. 9 is a schematic diagram of a structure of a Y-direction piezoelectric driver shown in FIG. 5;
FIG. 10 is a schematic diagram of a use state of the Y-direction piezoelectric driver shown in FIG. 9;
FIG. 11 is a schematic diagram of a structure of a frame shown in FIG. 5 from another angle;
FIG. 12 is a schematic diagram of a structure of the frame shown in FIG. 11 from another angle;
FIG. 13 is a schematic diagram of a structure of a Z-direction piezoelectric driver shown in FIG. 5;
FIG. 14 is a schematic diagram of a use state of the Z-direction piezoelectric driver shown in FIG. 13;
FIG. 15 is a schematic sectional view of the ultrasonic piezoelectric motor shown in FIG. 4 cut along a line A-A;
FIG. 16 is a schematic sectional view of the ultrasonic piezoelectric motor shown in FIG. 4 cut along a line B-B;
FIG. 17 is a schematic sectional view of the ultrasonic piezoelectric motor shown in FIG. 4 cut along a line C-C;
FIG. 18 is a schematic diagram of a Z-direction drive action of a Z-direction piezoelectric driver shown in FIG. 15 in a use state;
FIG. 19 is a schematic diagram of a Z-direction drive action of a Z-direction piezoelectric driver shown in FIG. 15 in another use state;
FIG. 20 is a schematic diagram of a current waveform of an electrical signal and displacement of a carrier that are corresponding to the Z-direction drive action shown in FIG. 19;
FIG. 21 is a schematic diagram of a Z-direction drive action of a Z-direction piezoelectric driver shown in FIG. 15 in another use state;
FIG. 22 is a schematic diagram of a current waveform of an electrical signal and displacement of a carrier that are corresponding to the Z-direction drive action shown in FIG. 21;
FIG. 23 is a schematic diagram of movement of an X-direction drive action of an X-direction piezoelectric driver shown in FIG. 15 in a use state;
FIG. 24 is a schematic diagram of movement of an X-direction drive action of an X-direction piezoelectric driver shown in FIG. 15 in another use state;
FIG. 25 is a schematic diagram of a current waveform of an electrical signal and displacement of a frame that are corresponding to the X-direction drive action shown in FIG. 24;
FIG. 26 is a schematic diagram of movement of an X-direction drive action of an X-direction piezoelectric driver shown in FIG. 15 in another use state;
FIG. 27 is a schematic diagram of a current waveform of an electrical signal and displacement of a frame that are corresponding to the X-direction drive action shown in FIG. 26;
FIG. 28 is a schematic diagram of movement of a Y-direction drive action of a Y-direction piezoelectric driver shown in FIG. 15 in a use state;
FIG. 29 is a schematic diagram of a structure of an ultrasonic piezoelectric motor of the camera module shown in FIG. 2 in some other embodiments;
FIG. 30 is a schematic diagram of a partially-exploded structure of the ultrasonic piezoelectric motor shown in FIG. 29;
FIG. 31 is a schematic sectional view of the ultrasonic piezoelectric motor shown in FIG. 29 cut along a line G-G;
FIG. 32 is a schematic diagram of a structure of an XY-direction piezoelectric driver shown in FIG. 30;
FIG. 33 is a schematic diagram of a structure of the XY-direction piezoelectric driver shown in FIG. 32 from another angle;
FIG. 34 is a schematic diagram of movement of an X-direction drive action of an XY-direction piezoelectric driver shown in FIG. 31 in a use state;
FIG. 35 is a schematic diagram of a current waveform of an electrical signal and displacement of a frame that are corresponding to the X-direction drive action shown in FIG. 34;
FIG. 36 is a schematic diagram of a current waveform of an electrical signal and displacement of a frame that are corresponding to an X-direction drive action of an XY-direction piezoelectric driver shown in FIG. 31 in another use state;
FIG. 37 is a schematic diagram of movement of a Y-direction drive action of an XY-direction piezoelectric driver shown in FIG. 31 in another use state;
FIG. 38 is a schematic diagram of a current waveform of an electrical signal and displacement of a frame that are corresponding to the Y-direction drive action shown in FIG. 37;
FIG. 39 is a schematic diagram of a current waveform of an electrical signal and displacement of a frame that are corresponding to a Y-direction drive action of an XY-direction piezoelectric driver shown in FIG. 31 in another use state;
FIG. 40 is a schematic diagram of movement of an XY-direction drive action of an XY-direction piezoelectric driver shown in FIG. 31 in another use state;
FIG. 41 is a schematic diagram of a current waveform of an electrical signal and displacement of a frame that are corresponding to the XY-direction drive action shown in FIG. 40;
FIG. 42 is a schematic diagram of a current waveform of an electrical signal and displacement of a frame that are corresponding to a Y-direction drive action of an XY-direction piezoelectric driver shown in FIG. 31 in another use state;
FIG. 43 is a schematic diagram of a structure of another camera module according to an embodiment of this application;
FIG. 44 is a schematic sectional view of the camera module shown in FIG. 43 cut along H-H;
FIG. 45 is a schematic diagram of an exploded structure of an ultrasonic piezoelectric motor of the camera module shown in FIG. 43;
FIG. 46 is a schematic diagram of a partial structure of an ultrasonic piezoelectric motor of the camera module shown in FIG. 43;
FIG. 47 is a schematic sectional view of the camera module shown in FIG. 43 cut along I-I;
FIG. 48 is a schematic diagram of a structure of a Y-direction piezoelectric driver of the ultrasonic piezoelectric motor shown in FIG. 45;
FIG. 49 is a schematic diagram of a structure of an XZ-direction piezoelectric driver of the ultrasonic piezoelectric motor shown in FIG. 45; and
FIG. 50 is a schematic diagram of movement in which the XZ-direction piezoelectric driver shown in FIG. 49 drives a rotating frame to rotate.

### DESCRIPTION OF EMBODIMENTS

The following describes technical solutions of embodiments in this application with reference to accompanying drawings.

In descriptions of the embodiments of this application, unless otherwise stated, the term "and/or" in this specification merely describes an association relationship for describing associated objects, and indicates that three relationships may exist. For example, A and/or B may indicate the following three cases: Only A exists, both A and B exist, and only B exists. In addition, in the descriptions of the embodiments of this application, "a plurality of" means two or more.

Orientation terms mentioned in embodiments of this application, for example, "on", "below", "front", "back", "left", "right", "inside", "outside", "side face", "top", and "bottom", are merely directions base on the accompanying drawings. Therefore, the orientation terms are used to better and more clearly describe and understand the embodiments of this application, instead of indicating or implying that a specified apparatus or element must have a specific orientation, and be constructed and operated in the specific orientation. Therefore, this cannot be understood as a limitation on embodiments of this application.

In the descriptions of the embodiments of this application, unless otherwise specified and limited, the term "fastened" should be understood in a broad sense. For example, A is fastened to B. This may mean that A is directly connected to B and relative locations do not change after the connection, or that A is indirectly connected to B by using an intermediate medium and relative locations do not change after the connection.

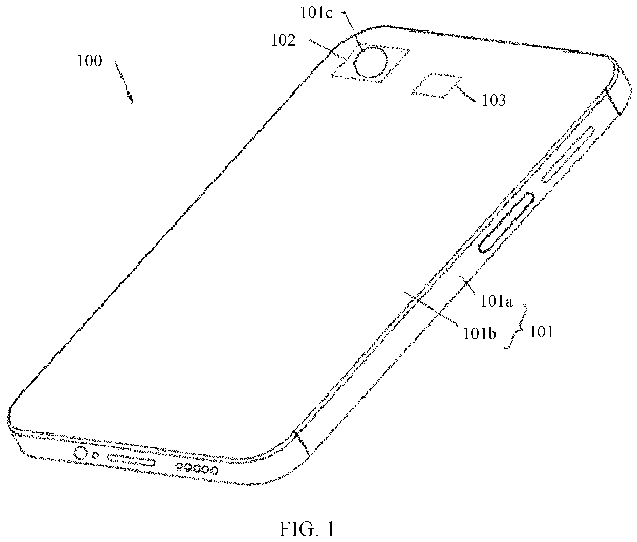

FIG. 1 is a schematic diagram of a structure of an electronic device 100 according to an embodiment of this application.

In some embodiments, the electronic device 100 may include a housing 101, a display module (not shown in the figure), a camera module 102, and a processor 103. The housing 101 may include a bezel 101a and a back cover 101b. The display module and the back cover 101b are respectively fastened to two sides back to each other of the bezel 101a. The bezel 101a and the back cover 101b may be assembled to form an integrated structure, or may be an integrally-formed structure. The display module is configured to display an image, and may further implement a touch function. The back cover 101b is provided with a camera hole 101c, the camera module 102 is installed in the housing 101, and the camera module 102 may collect a light ray through the camera hole 101c, to perform image shooting. The camera module 102 is electrically connected to the processor 103, and the processor 103 may control an image shooting action of the camera module 102, and may further obtain image data from the camera module 102 and process the image data. The processor 103 may include one or more processing units. Different processing units may be independent components, or may be integrated into one or more processors.

In some embodiments, the electronic device 100 may further include components such as a battery, an antenna, a speaker, a receiver, a microphone, a sensor module, and a button. The battery is configured to supply power to the electronic device 100. The antenna is configured to transmit and receive an electromagnetic wave signal. The speaker and the receiver are configured to convert an electrical signal into a sound signal. The microphone is configured to convert a sound signal into an electrical signal. The sensor module is configured to implement detection actions such as environment sensing and movement sensing. The button is used to sense a user operation. It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used.

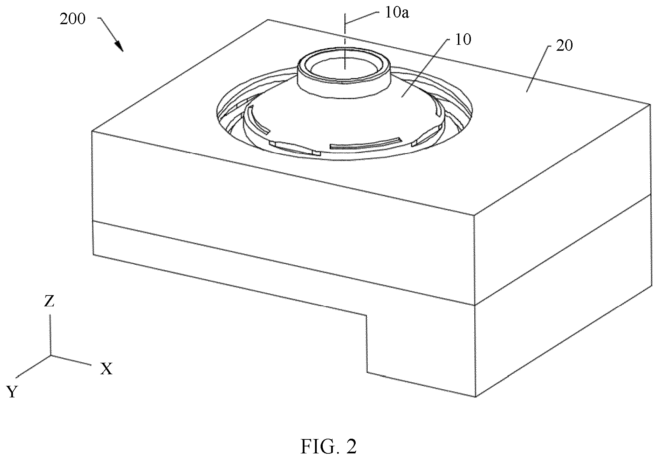

FIG. 2 is a schematic diagram of a partial structure of a camera module 200 in some embodiments according to an embodiment of this application. The camera module 200 in this embodiment is a vertical camera module. The camera module 200 shown in FIG. 2 may be used as a rear-facing camera 102 of the electronic device 100 in this embodiment. In some other embodiments, the camera module 200 may alternatively be used as a front-facing camera of the electronic device 100. This is not strictly limited in this application.

In some embodiments, the camera module 200 includes a camera lens 10 and an ultrasonic piezoelectric motor 20, and the camera lens 10 is installed on the ultrasonic piezoelectric motor 20. The ultrasonic piezoelectric motor 20 may drive the camera lens 10 to move in a Z direction, to change an image distance of the camera module 200, so as to implement auto focus. The Z direction is parallel to an optical axis 10a of the camera lens 10. The optical axis 10a of the camera lens 10 is an axis that passes through a center of each lens of the camera lens 10. The ultrasonic piezoelectric motor 20 may further drive the camera lens 10 to move in an X direction and a Y direction. The X direction, the Y direction, and the Z direction are perpendicular to each other. To be specific, the ultrasonic piezoelectric motor 20 can drive the camera lens 10 to move in a plane parallel to the optical axis 10a of the camera lens 10, so that the camera module 200 implements optical image stabilization (optical image stabilization, OIS).

The ultrasonic piezoelectric motor 20 implements driving by using a piezoelectric driving technology. The ultrasonic piezoelectric motor 20 uses an inverse piezoelectric effect of a piezoelectric material. An electrical signal applied to the piezoelectric material is controlled to enable the piezoelectric material to generate mechanical deformation, so as to push another component of the ultrasonic piezoelectric motor 20 to move through the deformation, and further drive the camera lens 10 to move. For example, the piezoelectric material may be an inorganic piezoelectric material, for example, a piezoelectric crystal or a piezoelectric ceramic, or may be an organic piezoelectric material, for example, polyvinyl fluoride. A type of the piezoelectric material in this application is not strictly limited in this application.

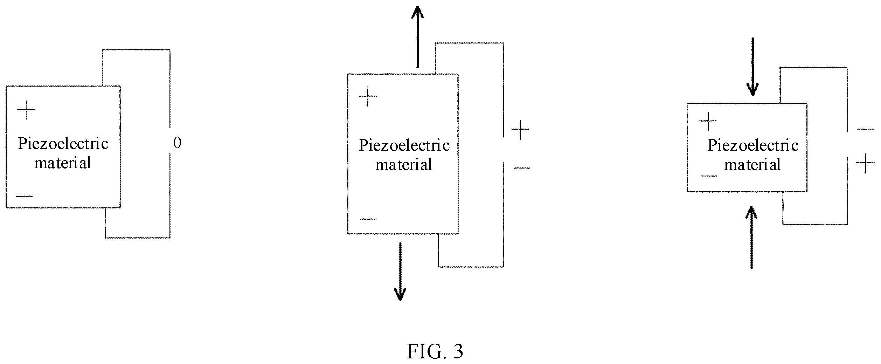

The inverse piezoelectric effect refers to that an electric field is applied in a polarization direction of a dielectric, and the dielectric generates mechanical deformation or mechanical pressure in a specific direction. When the applied electric field is removed, the deformation or stress also disappears. FIG. 3 is a schematic diagram of an inverse piezoelectric effect of a piezoelectric material. In some embodiments, when the piezoelectric material is not energized (a current is 0 or a current is very small), the piezoelectric material is in an initial state; when a positive current is applied to the piezoelectric material, the piezoelectric material extends and is in an extended state; or when a negative current is applied to the piezoelectric material, the piezoelectric material contracts and is in a shortened state. In other words, the piezoelectric material deforms based on the applied electrical signal. When the electrical signal is an alternating signal, the piezoelectric material performs an extending action and a contracting action cyclically.

In this embodiment of this application, because the ultrasonic piezoelectric motor 20 of the camera module 200 is driven by a piezoelectric effect instead of a magnetic force, the ultrasonic piezoelectric motor 20 can resolve an electromagnetic interference problem of a conventional motor, and has higher focusing precision, so that image shooting quality of the camera module 200 and the electronic device 100 to which the camera module 200 is applied is better.

The camera module 200 further includes an image sensor (not shown in the figure) and a circuit board (not shown in the figure). The image sensor is fastened to the circuit board and is electrically connected to the circuit board. The image sensor is configured to: receive an optical signal converged by the camera lens 10, and convert the optical signal into an electrical signal. The circuit board is fastened to the ultrasonic piezoelectric motor 20, and the ultrasonic piezoelectric motor 20 may be electrically connected to the circuit board. The circuit board is in a communication connection to the processor 103 of the electronic device 100.

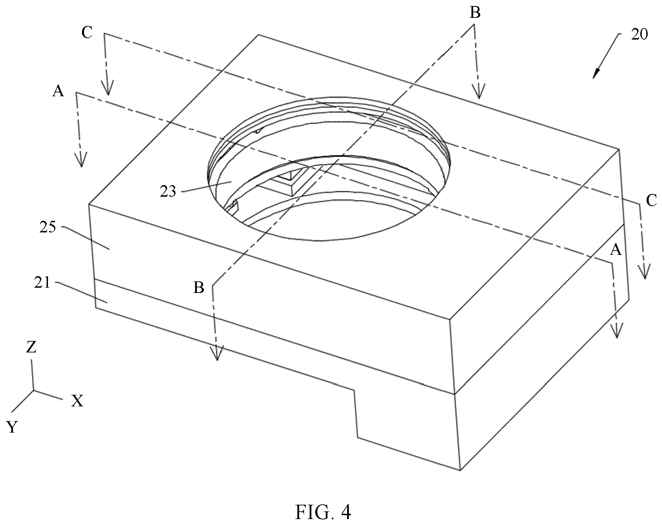

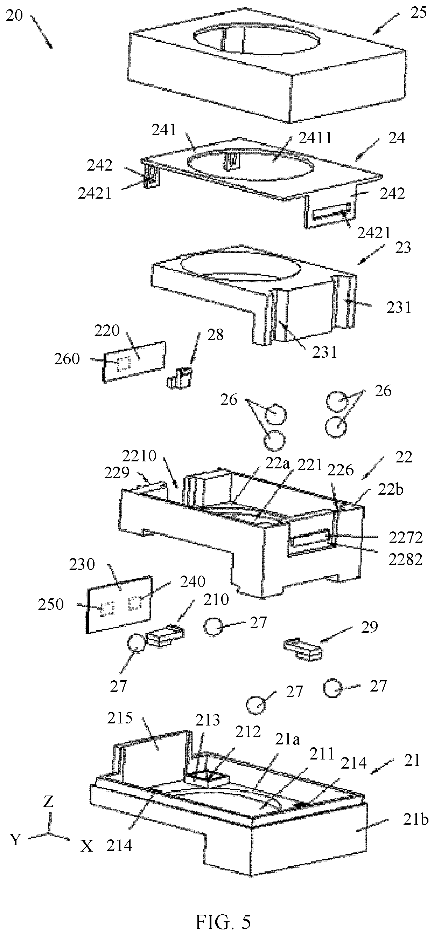

FIG. 4 is a schematic diagram of a structure of the ultrasonic piezoelectric motor 20 of the camera module 200 shown in FIG. 2 in some embodiments. FIG. 5 is a schematic diagram of a partially-exploded structure of the ultrasonic piezoelectric motor 20 shown in FIG. 4.

In some embodiments, the ultrasonic piezoelectric motor 20 may include a base 21, a frame 22, a carrier 23, a frame upper cover 24, an outer cover 25, a plurality of first balls 26, a plurality of second balls 27, a Z-direction piezoelectric driver 28, an X-direction piezoelectric driver 29, a Y-direction piezoelectric driver 210, a first circuit board 220, and a second circuit board 230. The outer cover 25 and the base 21 are fastened to each other to form a housing of the ultrasonic piezoelectric motor 20 together. Other parts of the ultrasonic piezoelectric motor 20 are installed on an inner side of the outer cover 25 and the base 21. The outer cover 25 and the base 21 are configured to protect and limit the other parts of the ultrasonic piezoelectric motor 20. The outer cover 25 and the base 21 may be fastened to each other in a manner of connection by using a buckle, bonding, soldering, connection by using a fastener, or the like.

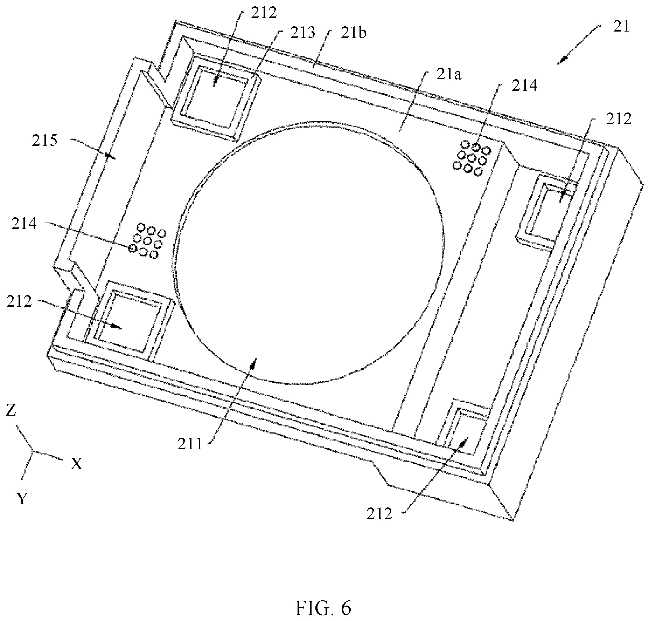

FIG. 6 is a schematic diagram of a structure of the base 21 shown in FIG. 5 from another angle.

In some embodiments, the base 21 includes a bottom 21a and a side part 21b. The side part 21b is fastened around a circumference of the bottom 21a, and the side part 21b and the bottom 21a jointly enclose inner space of the base 21. The bottom 21a is provided with a through hole 211, and the through hole 211 penetrates through the bottom 21a in the Z direction.

In some embodiments, the bottom 21a of the base 21 may be provided with a plurality of limiting grooves 212. For example, there are four limiting grooves 212, and the four limiting grooves 212 are respectively located at four corners of the bottom 21a. In some other embodiments, a quantity of the limiting grooves 212 may alternatively be one, two, three, or the like. The limiting groove 212 may be formed in a plurality of manners. For example, as shown in FIG. 6, the bottom 21a of the base 21 has a plurality of annular protruding bars 213, and the annular protruding bars 213 encircle to form the limiting groove 212. In some other embodiments, the limiting groove 212 may alternatively be formed by sinking a partial region of a top surface of the bottom 21a. A specific manner of forming the limiting groove 212 is not strictly limited in this application.

In some embodiments, the top surface of the bottom 21a of the base 21 may be provided with a solder pad 214. For example, a conducting wire may be embedded in the base 21, to form a circuit on the base 21, and an end part of the conducting wire is connected to the solder pad 214. Alternatively, a circuit board may be embedded in the base 21, and the circuit board includes a solder pad 214, and the solder pad 214 is exposed relative to the top surface of the bottom 21a.

In some embodiments, the side part 21b of the base 21 may be provided with a mounting slot 215. The second circuit board 230 may be mounted in the mounting slot 215 and fastened to the base 21. The second circuit board 230 may be fastened to the base 21 in a manner of bonding (for example, glue bonding), soldering, connection by using a buckle, connection by using a fastener, or the like. When the conducting wire is embedded in the base 21, the second circuit board 230 may be electrically connected to the conducting wire in the base 21, to electrically connect to the solder pad 214. When the circuit board is embedded in the base 21, the second circuit board 230 is electrically connected to the circuit board.

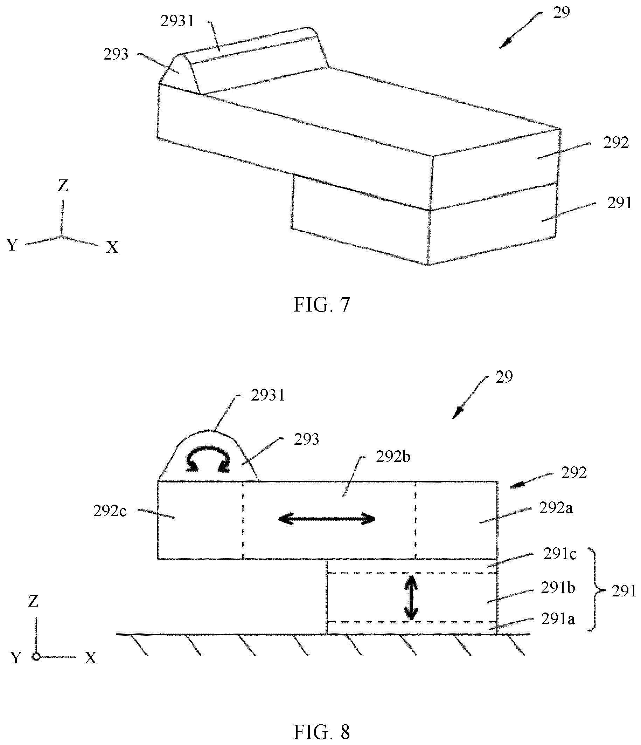

FIG. 7 is a schematic diagram of a structure of the X-direction piezoelectric driver 29 shown in FIG. 5.

In some embodiments, the X-direction piezoelectric driver 29 includes an X-direction base block 291, an X-direction extend block 292, and an X-direction touch block 293. One end of the X-direction base block 291 is fastened to the base 21, one end of the X-direction extend block 292 is fastened to the other end of the X-direction base block 291, and the X-direction touch block 293 is fastened to the other end of the X-direction extend block 292. The X-direction base block 291, the X-direction extend block 292, and the X-direction touch block 293 are stacked. For example, the X-direction base block 291 is soldered on one solder pad 214 on the base 21, to electrically connect to the circuit on the base 21. The X-direction base block 291 may further be bonded to the base 21, to implement a firm structural connection to the base 21 by soldering and bonding. For example, a bottom side of one end of the X-direction extend block 292 is fastened to a top side of the X-direction base block 291, and the X-direction touch block 293 is fastened to a top side of the other end of the X-direction extend block 292. For example, the X-direction touch block 293 may be approximately in a triangular prism shape, and a top surface that is of the X-direction touch block 293 and that is away from the X-direction extend block 292 is in an arc shape 2931. The X-direction touch block 293 may alternatively be in another shape, such as a semi-circle shape or a truncated cone shape.

In this embodiment, the X-direction piezoelectric driver 29 is a four-axis piezoelectric driver, and may be formed by one X-direction base block 291 and one X-direction extend block 292 whose deformation directions are orthogonal. The X-direction base block 291 and the X-direction extend block 292 may be a piezoelectric material stack. When currents of different phases and different amplitudes are input to the X-direction base block 291 and the X-direction extend block 292 respectively, the X-direction base block 291 and the X-direction extend block 292 each deform in a corresponding deformation direction, to synthesize movement of an elliptical track or a rectangular track on the X-direction touch block 293. An "ellipse" in this embodiment of this application includes a special ellipse whose long radius is equal to a short radius, that is, a circle.

The ultrasonic piezoelectric motor 20 further includes an X-direction drive circuit 240. The X-direction drive circuit 240 may be formed on the second circuit board 230, or may be fastened and electrically connected to the second circuit board 230, and the X-direction drive circuit 240 is electrically connected to the X-direction piezoelectric driver 29. The X-direction drive circuit 240 is configured to generate a drive signal for driving the X-direction piezoelectric driver 29. When the X-direction drive circuit 240 is formed on the second circuit board 230, the X-direction drive circuit 240 may include a cable on the second circuit board 230 and one or more components fastened to the second circuit board 230. The component may be but is not limited to a resistor, an inductor, a capacitor, or the like. When the X-direction drive circuit 240 is fastened and electrically connected to the second circuit board 230, the X-direction drive circuit 240 may be embodied as a chip structure or a circuit assembly including a circuit board and a component. The X-direction drive circuit 240 is electrically connected to a cable of the second circuit board 230, to electrically connect to the X-direction piezoelectric driver 29 through the cable of the second circuit board 230. In some other embodiments, the X-direction drive circuit 240 may alternatively be integrated into the processor 103 of the electronic device 100. A drive signal generated by the X-direction drive circuit 240 is transmitted to the X-direction piezoelectric driver 29 through the second circuit board 230.

FIG. 8 is a schematic diagram of a use state of the X-direction piezoelectric driver 29 shown in FIG. 7.

In some embodiments, the X-direction base block 291 can deform under control of an electrical signal, for example, extend and contract in the Z direction, to drive the X-direction extend block 292 and the X-direction touch block 293 to move in the Z direction. In this case, the X-direction touch block 293 can move up and down. The X-direction extend block 292 can deform under control of an electrical signal, for example, extend and contract in the X direction, to drive the X-direction touch block 293 to move in the X direction. In this case, the X-direction touch block 293 can move left and right. Therefore, by controlling deformation of the X-direction base block 291 and the X-direction extend block 292, the X-direction touch block 293 can move in an XZ plane, for example, move along a track such as an elliptical track or a rectangular track.

The X-direction base block 291 may include a bottom 291a, a deformation part 291b, and a top 291c. The bottom 291a and the top 291c of the X-direction base block 291 may be fixed structures that do not deform. The bottom 291a of the X-direction base block 291 is fixedly connected to the base 21, and the top 291c of the X-direction base block 291 is fixedly connected to the X-direction extend block 292. The deformation part 291b of the X-direction base block 291 is made of a piezoelectric material, and deforms under control of the electrical signal.

The X-direction extend block 292 may include a first end part 292a, a deformation part 292b, and a second end part 292c. The first end part 292a and the second end part 292c of the X-direction extend block 292 may be fixed structures that do not deform. The first end part 292a of the X-direction extend block 292 is fixedly connected to the top 291c of the X-direction base block 291, and the second end part 292c of the X-direction extend block 292 is fixedly connected to the X-direction touch block 293. The deformation part 292b of the X-direction extend block 292 is made of a piezoelectric material, and deforms under control of the electrical signal.

The top surface 2931 of the X-direction touch block 293 may have a large friction coefficient. For example, a top that is of the X-direction touch block 293 and that is away from the X-direction extend block 292 or the entire X-direction touch block 293 may be made of a material with a large surface friction coefficient, to increase a friction force between the X-direction touch block 293 and another component. Alternatively, the top surface 2931 of the X-direction touch block 293 may obtain a large friction coefficient by surface roughening. The top of the X-direction touch block 293 or the entire X-direction touch block 293 may alternatively be made of a material having a specific flexibility, so that the X-direction touch block 293 has a specific buffering performance, to protect the X-direction touch block 293 and a component that touches the X-direction touch block 293 when the X-direction piezoelectric driver 29 works. For example, the X-direction touch block 293 may be made of rubber or the like.

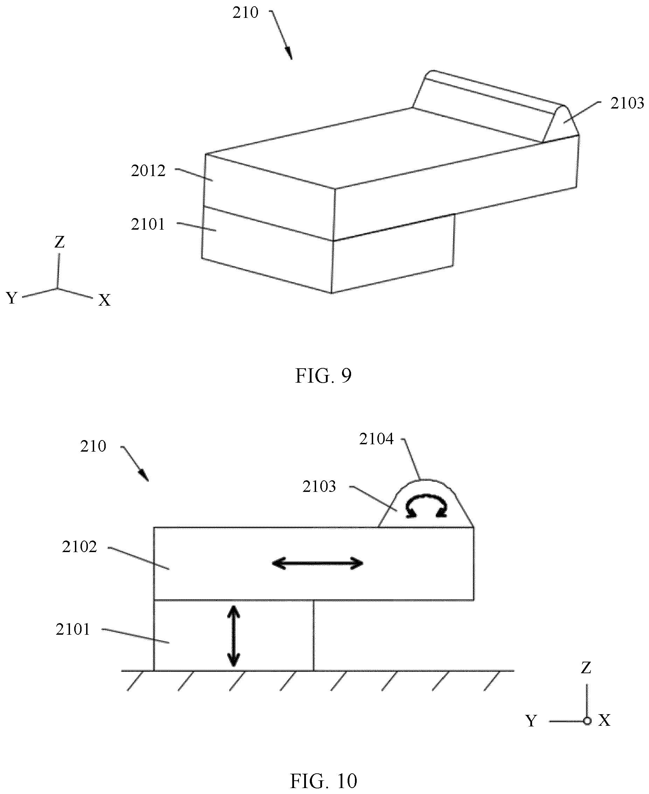

FIG. 9 is a schematic diagram of a structure of the Y-direction piezoelectric driver 210 shown in FIG. 5.

In some embodiments, the Y-direction piezoelectric driver 210 includes a Y-direction base block 2101, a Y-direction extend block 2102, and a Y-direction touch block 2103. One end of the Y-direction base block 2101 is fastened to the base 21, one end of the Y-direction extend block 2102 is fastened to the other end of the Y-direction base block 2101, and the Y-direction touch block 2103 is fastened to the other end of the Y-direction extend block 2102. The Y-direction base block 2101, the Y-direction extend block 2102, and the Y-direction touch block 2103 are stacked. For example, the Y-direction base block 2101 is soldered on one solder pad 214 on the base 21, to electrically connect to the circuit on the base 21. The Y-direction base block 2101 may further be bonded to the base 21, to implement a firm structural connection to the base 21 by soldering and bonding. For example, a bottom side of one end of the Y-direction extend block 2102 is fastened to a top side of the Y-direction base block 2101, and the Y-direction touch block 2103 is fastened to a top side of the other end of the Y-direction extend block 2102. The Y-direction touch block 2103 may be approximately in a triangular prism shape, and a top surface that is of the Y-direction touch block 2103 and that is away from the Y-direction extend block 2102 is in an arc shape. The Y-direction touch block 2103 may alternatively be in another shape, such as a semi-circle shape or a truncated cone shape.

In this embodiment, the Y-direction piezoelectric driver 210 is a four-axis piezoelectric driver, and may be formed by one Y-direction base block 2101 and one Y-direction extend block 2102 whose deformation directions are orthogonal. The Y-direction base block 2101 and the Y-direction extend block 2102 may be a piezoelectric material stack. When currents of different phases and different amplitudes are input to the Y-direction base block 2101 and the Y-direction extend block 2102 respectively, the Y-direction base block 2101 and the Y-direction extend block 2102 each deform in a corresponding deformation direction, to synthesize movement of an elliptical track or a rectangular track on the Y-direction touch block 2103.

The ultrasonic piezoelectric motor 20 further includes a Y-direction drive circuit 250. The Y-direction drive circuit 250 may be formed on the second circuit board 230, or may be fastened and electrically connected to the second circuit board 230, and the Y-direction drive circuit 250 is electrically connected to the Y-direction piezoelectric driver 210. The Y-direction drive circuit 250 is configured to generate a drive signal for driving the Y-direction piezoelectric driver 210. When the Y-direction drive circuit 250 is formed on the second circuit board 230, the Y-direction drive circuit 250 may include a cable on the second circuit board 230 and one or more components fastened to the second circuit board 230. The components may be but are not limited to a resistor, an inductor, a capacitor, or the like. When the Y-direction drive circuit 250 is fastened and electrically connected to the second circuit board 230, the Y-direction drive circuit 250 may be embodied as a chip structure or a circuit assembly including a circuit board and a component. The Y-direction drive circuit 250 is electrically connected to a cable of the second circuit board 230, to electrically connect to the Y-direction piezoelectric driver 210 through the cable of the second circuit board 230. The Y-direction drive circuit 250 and the X-direction drive circuit 240 may be circuits independent of each other, or may be integrated into one circuit. In some other embodiments, the Y-direction drive circuit 250 may alternatively be integrated into the processor 103 of the electronic device 100. A drive signal generated by the Y-direction drive circuit 250 is transmitted to the Y-direction piezoelectric driver 210 through the second circuit board 230.

FIG. 10 is a schematic diagram of a use state of the Y-direction piezoelectric driver 210 shown in FIG. 9.

In some embodiments, the Y-direction base block 2101 can deform under control of an electrical signal, for example, extend and contract in the Z direction, to drive the Y-direction extend block 2102 and the Y-direction touch block 2103 to move in the Z direction. In this case, the Y-direction touch block 2103 can move up and down. The Y-direction extend block 2102 can deform under control of an electrical signal, for example, extend and contract in the Y direction, to drive the Y-direction touch block 2103 to move in the Y direction. In this case, the Y-direction touch block 2103 can move left and right. Therefore, by controlling deformation of the Y-direction base block 2101 and the Y-direction extend block 2102, the Y-direction touch block 2103 can move in a YZ plane, for example, move in a track direction such as an elliptical track or a rectangular track.

The Y-direction base block 2101 may include a bottom, a deformation part, and a top. The bottom and the top of the Y-direction base block 2101 may be fixed structures that do not deform. The bottom of the Y-direction base block 2101 is fixedly connected to the base 21, and the top of the Y-direction base block 2101 is fixedly connected to the Y-direction extend block 2102. The deformation part of the Y-direction base block 2101 is made of a piezoelectric material, and deforms under control of the electrical signal.

The Y-direction extend block 2102 may include a first end part, a deformation part, and a second end part. The first end part and the second end part of the Y-direction extend block 2102 may be fixed structures that do not deform. The first end part of the Y-direction extend block 2102 is fixedly connected to the top of the Y-direction base block 2101, and the second end part of the Y-direction extend block 2102 is fixedly connected to the Y-direction touch block 2103. The deformation part of the Y-direction extend block 2102 is made of a piezoelectric material, and deforms under control of the electrical signal.

The top surface 2104 of the Y-direction touch block 2103 may have a large friction coefficient. For example, a top that is of the Y-direction touch block 2103 and that is away from the Y-direction extend block 2102 or the entire Y-direction touch block 2103 may be made of a material with a large surface friction coefficient, to increase a friction force between the Y-direction touch block 2103 and another component. Alternatively, the top surface 2104 of the Y-direction touch block 2103 may obtain a large friction coefficient by surface roughening. The top of the Y-direction touch block 2103 or the entire Y-direction touch block 2103 may alternatively be made of a material having a specific flexibility, so that the Y-direction touch block 2103 has a specific buffering performance, to protect the Y-direction touch block 2103 and a component that touches the Y-direction touch block 2103 when the Y-direction piezoelectric driver 210 works. For example, the Y-direction touch block 2103 may be made of rubber or the like.

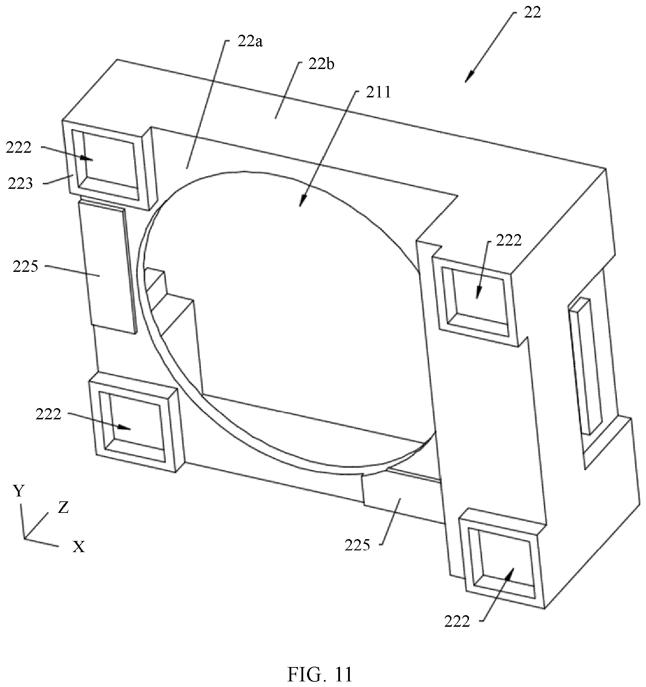

FIG. 11 is a schematic diagram of a structure of the frame 22 shown in FIG. 5 from another angle.

In some embodiments, the frame 22 includes a bottom 22a and a side part 22b. The side part 22b is fastened around a circumference of the bottom 22a, and the side part 22b and the bottom 22a jointly enclose inner space of the frame 22. The bottom 22a of the frame 22 is provided with a through hole 221, and the through hole 221 runs through the bottom 22a in the Z direction. As shown in FIG. 11, a plurality of limiting grooves 222 may be disposed at the bottom 22a of the frame 22. For example, there are four limiting grooves 222, and the four limiting grooves 222 are respectively located at four corners of the bottom 22a. In some other embodiments, a quantity of the limiting grooves 222 may alternatively be one, two, three, or the like. The limiting groove 222 may be formed in a plurality of manners. For example, in this embodiment, the bottom 22a of the frame 22 has a plurality of annular protruding bars 223, and the annular protruding bars 223 encircle to form the limiting groove 222. In some other embodiments, the limiting groove 222 may alternatively be formed by sinking a partial region of a top surface of the bottom 22a. A specific manner of forming the limiting groove 222 is not strictly limited in this application. The bottom 22a of the frame 22 may further have two friction-resistant blocks 225, and the two friction-resistant blocks 225 are spaced from each other.

Refer to FIG. 5 and FIG. 11. The frame 22 may be installed on an inner side of the base 21, and the frame 22 can move in the X direction and the Y direction relative to the base 21. For example, the frame 22 is slidably connected to the base 21. The plurality of limiting grooves 222 of the frame 22 are in a one-to-one correspondence with the plurality of limiting grooves 212 of the base 21, the plurality of second balls 27 are located between the frame 22 and the base 21, and each second ball 27 is partially located in the limiting groove 222 of the frame 22, and partially located in the limiting groove 212 of the base 21. For example, a quantity of second balls 27 is four. In some other embodiments, the quantity of second balls 27 may be one, two, three, or more. In other words, there is at least one second ball 27. The quantity of second balls 27, a quantity of limiting grooves 222 of the frame 22, and a quantity of limiting grooves 212 of the base 21 may be the same.

In this embodiment, the frame 22 is slidably connected to the base 21 by using the second ball 27. In some other embodiments, the frame 22 and the base 21 may alternatively be slidably connected by touching each other. For example, the frame 22 is provided with a sliding surface, the base 21 is provided with a sliding surface, and the sliding surface of the frame 22 and the sliding surface of the base 21 touch each other and can slide relatively. For example, the sliding surface of the frame 22 and the sliding surface of the base 21 may be made of a wear-resistant material or provided with a wear-resistant layer.

In some embodiments, the X-direction piezoelectric driver 29 is located between the bottom 21a of the base 21 and the bottom 22a of the frame 22. The X-direction touch block 293 of the X-direction piezoelectric driver 29 is close to the bottom 22a of the frame 22, and may abut against the bottom 22a of the frame 22 under deformation of the X-direction base block 291, for example, abutting against one of the friction-resistant blocks 225 of the frame 22. In some embodiments, the Y-direction piezoelectric driver 210 is located between the bottom 21a of the base 21 and the bottom 22a of the frame 22. The Y-direction touch block 2103 of the Y-direction piezoelectric driver 210 is close to the bottom 22a of the frame 22, and may abut against the bottom 22a of the frame 22 under deformation of the Y-direction base block 2101, for example, abutting against the other of the friction-resistant blocks 225 of the frame 22. The second circuit board 230 is located between the side part 21b of the base 21 and the side part 22b of the frame 22.

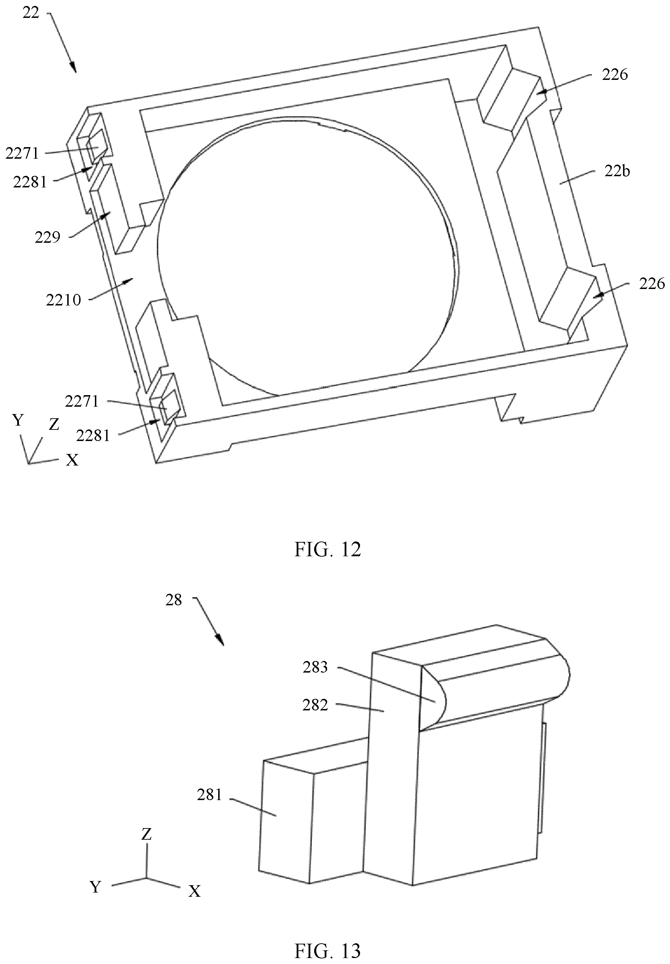

Refer to FIG. 5 and FIG. 12 together. FIG. 12 is a schematic diagram of a structure of the frame 22 shown in FIG. 11 from another angle.

In some embodiments, the frame 22 is further provided with a first groove 226, and an extension direction of the first groove 226 is parallel to the Z direction. A cross-sectional shape of the first groove 226 may be a trapezoid. In some other embodiments, a cross-sectional shape of the first groove 226 may alternatively be a semi-circle, a rectangle, a triangle, or the like. The first groove 226 is connected to the inner space of the frame 22. The first groove 226 is formed on the side part 22b of the frame 22. There may be two first grooves 226, and the two first grooves 226 are spaced from each other. In some other embodiments, there may be one or more than three first grooves 226. A quantity, locations, shapes, and the like of the first grooves 226 are not strictly limited in this application.

In some embodiments, a plurality of protrusions are disposed on the side part 22b of the frame 22, and the plurality of protrusions may be located on different sides of the side part 22b. For example, the plurality of protrusions include a first protrusion 2271 and a second protrusion 2272, and the first protrusion 2271 and the second protrusion 2272 are respectively formed on two sides of the side part 22b in the X direction. The side part 22b may be provided with a first sunken groove 2281 and a second sunken groove 2282, and the second sunken groove 2282 and the first sunken groove 2281 are disposed opposite to each other. The first protrusion 2271 is located in the first sunken groove 2281, and the second protrusion 2272 is located in the second sunken groove 2282, to reduce a structural size of the frame 22 in the X direction, and facilitate miniaturization of the ultrasonic piezoelectric motor 20. In some other embodiments, the plurality of protrusions may alternatively be formed on two sides of the side part 22b in the Y direction, or on one or more sides of the side part 22b in another direction. A specific quantity, locations, shapes, and the like of the protrusions 227 are not strictly limited in this application.

In some embodiments, a mounting slot 229 is disposed on the side part 22b of the frame 22, an opening of the mounting slot 229 is located on an outer surface of the side part 22b of the frame 22, and the mounting slot 229 is disposed against the inner space of the frame 22. The frame 22 is further provided with a communicating hole 2210, and the communicating hole 2210 communicates with the mounting slot 229 and the inner space of the frame 22.

Refer to FIG. 5 again. In some embodiments, the carrier 23 may be installed on an inner side of the frame 22, and the carrier 23 can move in the Z direction relative to the frame 22. For example, the carrier 23 may be slidably connected to the frame 22. A second groove 231 may be disposed on the carrier 23, and the second groove 231 and the first groove 226 are disposed correspondingly. The quantity of first grooves 226 is the same as a quantity of second grooves 231, and may be one or more. For example, in this embodiment, there are two first grooves 226 and two second grooves 231. The plurality of first balls 26 are located between the carrier 23 and the frame 22, and each first ball 26 is partially located in the first groove 226 and partially located in the second groove 231. One or more first balls 26 may be installed in one corresponding group of first grooves 226 and second grooves 231. For example, two first balls 26 are installed in one corresponding group of first grooves 226 and second grooves 231 in this embodiment. The first groove 226 and the second groove 231 may be disposed to guide and limit the first ball 26, which helps ensure reliability when the carrier 23 slides relative to the frame 22.

In this embodiment, the carrier 23 is slidably connected to the frame 22 through the first ball 26. In some other embodiments, the carrier 23 and the frame 22 may alternatively be slidably connected by touching each other. For example, the carrier 23 is provided with a sliding surface, the frame 22 is provided with a sliding surface, and the sliding surface of the carrier 23 and the sliding surface of the frame 22 touch each other and can slide relatively. For example, the sliding surface of the carrier 23 and the sliding surface of the frame 22 may use a wear-resistant material or be provided with a wear-resistant layer.

Still refer to FIG. 5. The first circuit board 220 may be fastened to the frame 22. For example, the first circuit board 220 may be installed in the mounting slot 229 of the frame 22. The Z-direction piezoelectric driver 28 may be fastened to the first circuit board 220 and electrically connected to the first circuit board 220. For example, the Z-direction piezoelectric driver 28 may be soldered to the first circuit board 220 and bonded to the first circuit board 220. In this case, the Z-direction piezoelectric driver 28 is fastened to the frame 22 by using the first circuit board 220. The Z-direction piezoelectric driver 28 may pass through the communicating hole 211 of the frame 22, to be partially located in the inner space of the frame 22.

FIG. 13 is a schematic diagram of a structure of the Z-direction piezoelectric driver 28 shown in FIG. 5.

In some embodiments, the Z-direction piezoelectric driver 28 includes a Z-direction base block 281, a Z-direction extend block 282, and a Z-direction touch block 283. One end of the Z-direction base block 281 may be fastened to the frame 22, one end of the Z-direction extend block 282 is fastened to the other end of the Z-direction base block 281, and the Z-direction touch block 283 is fastened to the other end of the Z-direction extend block 282. The Z-direction base block 281, the Z-direction extend block 282, and the Z-direction touch block 283 are stacked. For example, a bottom side of one end of the Z-direction extend block 282 is fastened to a top side of the Z-direction base block 281, and the Z-direction touch block 283 is fastened to a top side of the other end of the Z-direction extend block 282. The Z-direction touch block 283 may be approximately in a triangular prism shape, and a top surface that is of the Z-direction touch block 283 and that is away from the Z-direction extend block 282 is in an arc shape. The Z-direction touch block 283 may alternatively be in another shape, such as a semi-circle shape or a truncated cone shape. The Z-direction touch block 283 is close to the carrier 23.

In this embodiment, the Z-direction piezoelectric driver 28 is a four-axis piezoelectric driver, and may be formed by one Z-direction base block 281 and one Z-direction extend block 282 whose deformation directions are orthogonal. The Z-direction base block 281 and the Z-direction extend block 282 may be a piezoelectric material stack. When currents of different phases and different amplitudes are input to the Z-direction base block 281 and the Z-direction extend block 282 respectively, the Z-direction base block 281 and the Z-direction extend block 282 each deform in a corresponding deformation direction, to synthesize movement of an elliptical track or a rectangular track on the Z-direction touch block 283.

The ultrasonic piezoelectric motor 20 further includes a Z-direction drive circuit 260. The Z-direction drive circuit 260 may be formed on the first circuit board 220, or may be fastened and electrically connected to the first circuit board 220, and the Z-direction drive circuit 260 is electrically connected to the Z-direction piezoelectric driver 28. The Z-direction drive circuit 260 is configured to generate a drive signal for driving the Z-direction piezoelectric driver 28. When the Z-direction drive circuit 260 is formed on the first circuit board 220, the Z-direction drive circuit 260 may include a cable on the first circuit board 220 and one or more components fastened to the first circuit board 220. The components may be but are not limited to a resistor, an inductor, a capacitor, or the like. When the Z-direction drive circuit 260 is fastened and electrically connected to the first circuit board 220, the Z-direction drive circuit 260 may be embodied as a chip structure or a circuit assembly including a circuit board and a component. The Z-direction drive circuit 260 is electrically connected to a cable of the first circuit board 220, to electrically connect to the Z-direction piezoelectric driver 28 through the cable of the first circuit board 220. In some other embodiments, the Z-direction drive circuit 260 may alternatively be integrated into the processor 103 of the electronic device 100. A drive signal generated by the Z-direction drive circuit 260 is transmitted to the Z-direction piezoelectric driver 28 through the first circuit board 220.

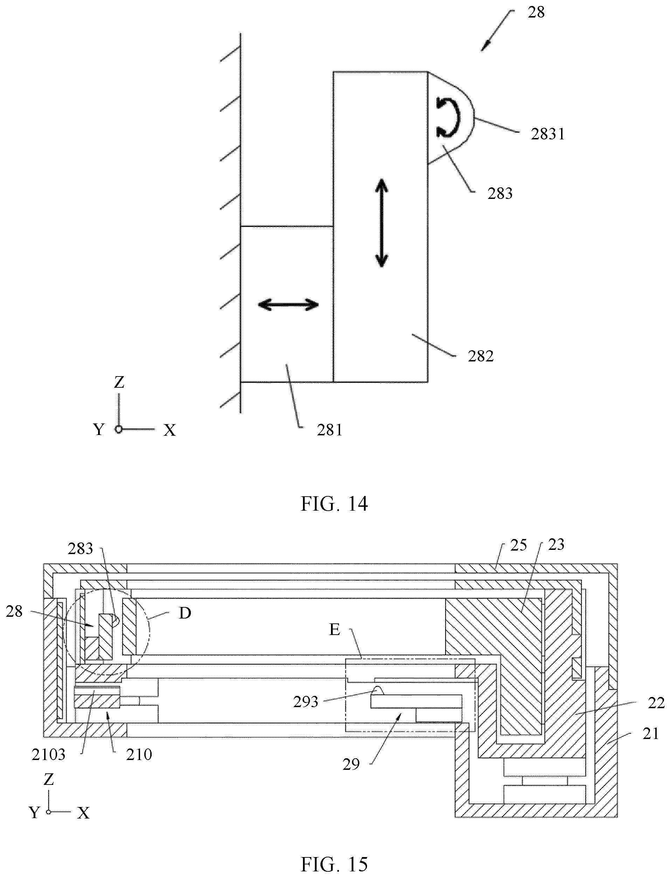

FIG. 14 is a schematic diagram of a use state of the Z-direction piezoelectric driver 28 shown in FIG. 13.

In some embodiments, the Z-direction base block 281 can deform under control of an electrical signal, for example, extend and contract in the X direction, to drive the Z-direction extend block 282 and the Z-direction touch block 283 to move in the X direction. In this case, the Z-direction touch block 283 can move left and right. In some other embodiments, when a mounting location of the Z-direction piezoelectric driver 28 is changed, the Z-direction base block 281 can deform under control of an electrical signal, for example, extend and contract in the Y direction, to drive the Z-direction extend block 282 and the Z-direction touch block 283 to move in the Y direction. In this case, the Z-direction touch block 283 can move forward and backward. In other words, the Z-direction base block 281 can extend and contract in a direction perpendicular to the Z direction under control of the electrical signal. The Z-direction touch block 283 may abut against the carrier 23 and leave the carrier 23 under deformation of the Z-direction base block 281.

The Z-direction extend block 282 can deform under control of an electrical signal, for example, extend and contract in the Z direction, to drive the Z-direction touch block 283 to move in the Z direction. In this case, the Z-direction touch block 283 can move up and down. Therefore, by controlling deformation of the Z-direction base block 281 and the Z-direction extend block 282, the Z-direction touch block 283 can move in the XZ plane (or the YZ plane), for example, move in a track direction such as an elliptical track or a rectangular track.

The Z-direction base block 281 may include a bottom, a deformation part, and a top. The bottom and the top of the Z-direction base block 281 may be fixed structures that do not deform. The bottom of the Z-direction base block 281 is fixedly connected to the frame 22, and the top of the Z-direction base block 281 is fixedly connected to the Z-direction extend block 282. The deformation part of the Z-direction base block 281 is made of a piezoelectric material, and deforms under control of the electrical signal.

The Z-direction extend block 282 may include a first end part, a deformation part, and a second end part. The first end part and the second end part of the Z-direction extend block 282 may be fixed structures that do not deform. The first end part of the Z-direction extend block 282 is fixedly connected to the top of the Z-direction base block 281, and the second end part of the Z-direction extend block 282 is fixedly connected to the Z-direction touch block 283. The deformation part of the Z-direction extend block 282 is made of a piezoelectric material, and deforms under control of the electrical signal.

The top surface 2831 of the Z-direction touch block 283 may have a large friction coefficient. For example, a top that is of the Z-direction touch block 283 and that is away from the Z-direction extend block 282 or the entire Z-direction touch block 283 may be made of a material with a large surface friction coefficient, to increase a friction force between the Z-direction touch block 283 and another component. Alternatively, the top surface of the Z-direction touch block 283 may obtain a large friction coefficient by surface roughening. The top of the Z-direction touch block 283 or the entire Z-direction touch block 283 may alternatively be made of a material having a specific flexibility, so that the Z-direction touch block 283 has a specific buffering performance, to protect the Z-direction touch block 283 and a component that touches the Z-direction touch block 283 when the Z-direction piezoelectric driver 28 works. For example, the Z-direction touch block 283 may be made of rubber or the like.

Refer to FIG. 5 again. The frame upper cover 24 includes a plate body 241 and a plurality of fastening pins 242, a through hole 2411 is disposed on the plate body 241, and a fastening hole 2421 is disposed on each fastening pin 242. The frame upper cover 24 may be fastened above the frame 22, and covers the carrier 23. The plurality of protrusions (2711 and 2712) of the frame 22 are embedded into the fastening holes 2421 of the fastening pins 242, so that the frame upper cover 24 is securely connected to the frame 22. In this embodiment, the frame upper cover 24 is connected to the frame 22 by using a buckle. In some other embodiments, the frame upper cover 24 and the frame 22 may alternatively be fastened to each other in other manners such as bonding, soldering, and fastening connection.

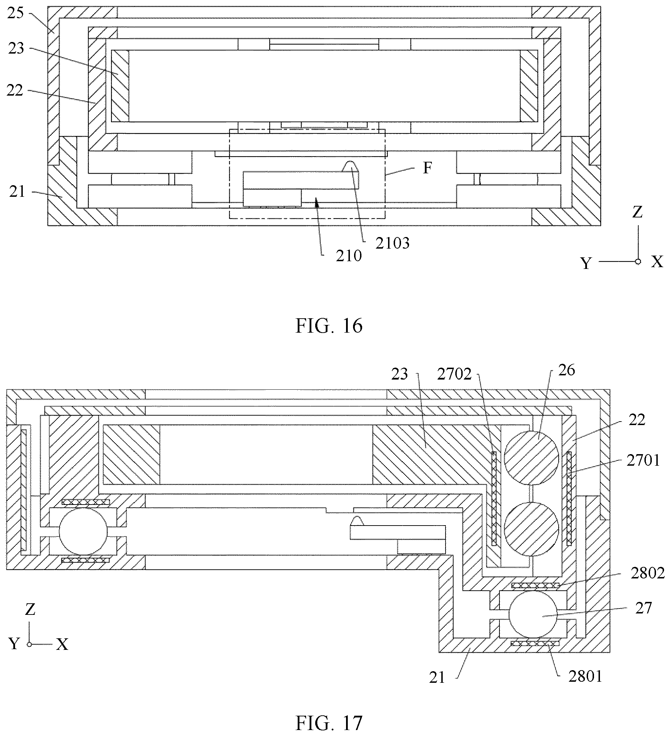

FIG. 15 is a schematic sectional view of the ultrasonic piezoelectric motor 20 shown in FIG. 4 cut along a line A-A, FIG. 16 is a schematic sectional view of the ultrasonic piezoelectric motor 20 shown in FIG. 4 cut along a line B-B, and FIG. 17 is a schematic sectional view of the ultrasonic piezoelectric motor 20 shown in FIG. 4 cut along a line C-C. The following presents a location relationship and a connection relationship between a plurality of components of the ultrasonic piezoelectric motor 20 by using a plurality of sectional views of the ultrasonic piezoelectric motor 20.

As shown in FIG. 15 and FIG. 16, the outer cover 25 and the base 21 of the ultrasonic piezoelectric motor 20 are fastened to each other. The frame 22 is installed on the inner side of the base 21, and the frame 22 can move in the X direction and the Y direction relative to the base 21. The X-direction piezoelectric driver 29 is located between the base 21 and the frame 22. The X-direction piezoelectric driver 29 is fastened to the base 21. When the X-direction piezoelectric driver 29 is not powered on, the X-direction touch block 293 of the X-direction piezoelectric driver 29 is close to the frame 22 but does not touch the frame 22. When the X-direction piezoelectric driver 29 is powered on, the X-direction touch block 293 can move along an elliptical track or a rectangular track under signal control, to periodically touch and squeeze the frame 22, and drive the frame 22 to move, so that the X-direction piezoelectric driver 29 can drive the frame 22 to move in the X direction relative to the base 21.

The Y-direction piezoelectric driver 210 is located between the base 21 and the frame 22. The Y-direction piezoelectric driver 210 is fastened to the base 21. When the Y-direction piezoelectric driver 210 is not powered on, the Y-direction touch block 2103 of the Y-direction piezoelectric driver 210 is close to the frame 22 but does not touch the frame 22. When the Y-direction piezoelectric driver 210 is powered on, the Y-direction touch block 2103 can move along an elliptical track or a rectangular track under signal control, to periodically touch and squeeze the frame 22, and drive the frame 22 to move, so that the Y-direction piezoelectric driver 210 can drive the frame 22 to move in the Y direction relative to the base 21. The carrier 23 is installed on the inner side of the frame 22, and the carrier 23 can move in the Z direction relative to the frame 22.

The Z-direction piezoelectric driver 28 is located between the frame 22 and the carrier 23. The Z-direction piezoelectric driver 28 is fastened to the frame 22. When the Z-direction piezoelectric driver 28 is not powered on, the Z-direction touch block 283 of the Z-direction piezoelectric driver 28 is close to the carrier 23 but does not touch the carrier 23. When the Z-direction piezoelectric driver 28 is powered on, the Z-direction touch block 283 can move along an elliptical track or a rectangular track under signal control, to periodically touch and squeeze the carrier 23, and drive the carrier 23 to move, so that the Z-direction piezoelectric driver 28 can drive the carrier 23 to move in the Z direction relative to the frame 22.

In this embodiment, the Z-direction piezoelectric driver 28 can drive the carrier 23 to move in the Z direction relative to the frame 22, and the camera lens 10 (as shown in FIG. 2) of the camera module 200 may be installed on the carrier 23. Therefore, the Z-direction piezoelectric driver 28 may drive the camera lens 10 to move in the Z direction, so that the camera module 200 implements auto focus. Because the X-direction piezoelectric driver 29 can drive the frame 22 to move in the X direction relative to the base 21, the Y-direction piezoelectric driver 210 can drive the frame 22 to move in the Y direction relative to the base 21, and the carrier 23 is installed on the inner side of the frame 22, the X-direction piezoelectric driver 29 and the Y-direction piezoelectric driver 210 can drive the camera lens 10 to move in the plane perpendicular to the optical axis of the camera lens 10, so that the camera module 200 implements optical image stabilization.

In addition, the Z-direction piezoelectric driver 28, the X-direction piezoelectric driver 29, and the Y-direction piezoelectric driver 210 each are a four-axis piezoelectric driver with two deformation directions, can periodically and continuously move the camera lens 10, and have a stable driving force. Therefore, the Z-direction piezoelectric driver 28, the X-direction piezoelectric driver 29, and the Y-direction piezoelectric driver 210 can drive the camera lens 10 having a relatively large weight and a relatively large stroke. In this way, the camera module 200 is more diversified in structure, and better meets a high image shooting requirement on the camera lens 10, such as a wide angle and a long focal length.

In addition, the Z-direction piezoelectric driver 28, the X-direction piezoelectric driver 29, and the Y-direction piezoelectric driver 210 can maintain an extended or contracted state under control of the electrical signal, to lock the carrier 23 and the frame 22 at a target location, so as to improve stability of focusing and optical image stabilization.

As shown in FIG. 17, in some embodiments, the ultrasonic piezoelectric motor 20 further includes a first magnetic member 2701 and a second magnetic member 2702. The first magnetic member 2701 is embedded in the frame 22, the second magnetic member 2702 is embedded in the carrier 23, and the second magnetic member 2702 and the first magnetic member 2701 are attracted to each other. For example, one of the first magnetic member 2701 and the second magnetic member 2702 may be a magnet, and the other may be a magnetic conductive member, or both of the first magnetic member 2701 and the second magnetic member 2702 may be magnets, and the magnets have opposite magnetism. The carrier 23 is slidably connected to the frame 22.

In this embodiment, a magnetic attraction force between the second magnetic member 2702 and the first magnetic member 2701 enables the carrier 23 and the frame 22 to be attracted to each other, a sliding connection relationship between the carrier 23 and the frame 22 is stable and reliable, and the carrier 23 and the frame 22 can be self-locked by friction, so that focusing stability of the camera module 200 is high.

At least one first ball 26 of the ultrasonic piezoelectric motor 20 is located between the carrier 23 and the frame 22, and when the carrier 23 slides relative to the frame 22, the at least one first ball 26 rolls. A magnetic attraction force between the second magnetic member 2702 and the first magnetic member 2701 can enable the carrier 23 and the frame 22 to press the first ball 26 tightly.

There may be one or more first magnetic members 2701, and there may be one or more second magnetic members 2702. The first magnetic members 2701 and the second magnetic members 2702 may be in a one-to-one correspondence, or may be in a one-to-many or many-to-one relationship. The first magnetic members 2701 and the second magnetic members 2702 may form a group of magnetic structures, or may form a plurality of groups of magnetic structures and may be located at different locations. The first ball 26 may be located between the first magnetic member 2701 and the second magnetic member 2702, or may be located on an outer side of regions opposite to each other of the first magnetic member 2701 and the second magnetic member 2702. A quantity, locations, compositions, and the like of the first magnetic members 2701 and the second magnetic members 2702 are not strictly limited in this application.

In some embodiments, the ultrasonic piezoelectric motor 20 further includes a third magnetic member 2801 and a fourth magnetic member 2802. The third magnetic member 2801 is embedded in the base 21, the fourth magnetic member 2802 is embedded in the frame 22, and the fourth magnetic member 2802 and the third magnetic member 2801 are attracted to each other. For example, one of the third magnetic member 2801 and the fourth magnetic member 2802 may be a magnet, and the other may be a magnetic conductive member, or both of the third magnetic member 2801 and the fourth magnetic member 2802 may be magnets, and the magnets have opposite magnetism. The frame 22 is slidably connected to the base 21.

In this embodiment, a magnetic attraction force between the fourth magnetic member 2802 and the third magnetic member 2801 enables the frame 22 and the base 21 to attract each other, a sliding connection relationship between the frame 22 and the base 21 is stable and reliable, and the frame 22 and the base 21 can be self-locked by friction, so that image stabilization stability of the camera module 200 is high.

At least one second ball 27 of the ultrasonic piezoelectric motor 20 is located between the frame 22 and the base 21, and when the frame 22 slides relative to the base 21, the at least one second ball 27 rolls. A magnetic attraction force between the fourth magnetic member 2802 and the third magnetic member 2801 can enable the frame 22 and the base 21 to press the second ball 27 tightly.

There may be one or more third magnetic members 2801, and there may be one or more fourth magnetic members 2802. The third magnetic members 2801 and the fourth magnetic members 2802 may be in a one-to-one correspondence, or may be in a one-to-many or many-to-one relationship. The third magnetic members 2801 and the fourth magnetic members 2802 may form a group of magnetic structures, or may form a plurality of groups of magnetic structures and may be located at different locations. The second ball 27 may be located between the third magnetic member 2801 and the fourth magnetic member 2802, or may be located on an outer side of regions opposite to each other of the third magnetic member 2801 and the fourth magnetic member 2802. A quantity, locations, compositions, and the like of the third magnetic members 2801 and the fourth magnetic members 2802 are not strictly limited in this application.

It may be understood that, in some embodiments, the first magnetic member 2701 and the third magnetic member 2801 that are embedded in the frame 22 may be of a same type, for example, both are magnetic conductive members or magnets with same magnetism. In some embodiments, sizes and locations of the first magnetic member 2701 and the second magnetic member 2702 may be set, so that when the carrier 23 and the frame 22 move relative to each other, areas opposite to each other of the first magnetic member 2701 and the second magnetic member 2702 are consistent or almost unchanged, so that an adhesion force between the carrier 23 and the frame 22 is stable and reliable, and an auto focus process of the camera module 200 is easier to control and adjust. For example, an area of the first magnetic member 2701 is larger than an area of the second magnetic member 2702. In a process in which the carrier 23 moves relative to the frame 22, the second magnetic member 2702 always faces the first magnetic member 2701, and the areas opposite to each other of the first magnetic member 2701 and the second magnetic member 2702 are as large as the area of the second magnetic member 2702. Similarly, sizes and locations of the third magnetic member 2801 and the fourth magnetic member 2802 may also be set, so that when the frame 22 and the base 21 move relative to each other, areas opposite to each other of the third magnetic member 2801 and the fourth magnetic member 2802 are consistent or almost unchanged, so that an adhesion force between the frame 22 and the base 21 is stable and reliable, and an optical image stabilization process of the camera module 200 is easier to control and adjust.

With reference to the accompanying drawings, the following describes a process in which the Z-direction piezoelectric driver 28 of the ultrasonic piezoelectric motor 20 drives the carrier 23 to move in the Z direction to implement auto focus.

In some embodiments, the Z-direction drive circuit 260 may generate a first electrical signal and a second electrical signal based on an auto focus signal. The Z-direction base block 281 deforms based on the first electrical signal, to drive the Z-direction touch block 283 to abut against the carrier 23 or leave the carrier 23. The Z-direction extend block 282 deforms based on the second electrical signal, to drive the Z-direction touch block 283 to move in the Z direction, so that the Z-direction piezoelectric driver 28 performs a Z-direction drive action at least once, and the Z-direction drive action drives the carrier 23 to move in the Z direction. When the Z-direction touch block 283 abuts against the carrier 23 and the Z-direction extend block 282 deforms, the Z-direction touch block 283 drives the carrier 23 to move in the Z direction. The Z-direction drive circuit 260 may generate the first electrical signal and the second electrical signal based on a movement distance required by the auto focus, so as to control the Z-direction piezoelectric driver 28 to perform the Z-direction drive action a corresponding quantity of times.

For example, a maximum distance that may be used in a single Z-direction drive action to drive the carrier 23 is S1, that is, a drive stroke of the single Z-direction drive action is S1. When the carrier 23 needs to move in the Z direction by a distance S to implement auto focus, if S/S1=N, and N is an integer, the Z-direction piezoelectric driver 28 performs a Z-direction drive action N times whose drive stroke is S1; or if S/S1=N, N is an integer, and there is a remainder S2, the Z-direction piezoelectric driver 28 performs a Z-direction drive action N times whose drive stroke is S1, and performs a Z-direction drive action once whose drive stroke is S2; or if S/S1 is less than 1, the Z-direction piezoelectric driver 28 performs a Z-direction drive action once whose stroke is S.

In some embodiments, the Z-direction drive action includes: The Z-direction base block 281 extends to drive the Z-direction touch block 283 to abut against the carrier 23; the Z-direction extend block 282 extends or contracts to drive the Z-direction touch block 283 to drive the carrier 23 to move in the Z direction; the Z-direction base block 281 contracts to drive the Z-direction touch block 283 to leave the carrier 23; and the Z-direction extend block 282 contracts or extends to drive the Z-direction touch block 283 to move back to an initial location.

In this embodiment, in the Z-direction drive action, the Z-direction touch block 283 abuts against the carrier 23 by an extending action of the Z-direction base block 281, and when the Z-direction touch block 283 abuts against the carrier 23, the Z-direction touch block 283 drives the carrier 23 to move by an extending or contracting action of the Z-direction extend block 282 in the Z direction, to drive the camera lens 10 installed on the carrier 23 to move in the Z direction. In the Z-direction drive action, the Z-direction touch block 283 leaves the carrier 23 by a contracting action of the Z-direction base block 281, and when the Z-direction touch block 283 leaves the carrier 23, the Z-direction touch block moves back to the initial location by an extending or contracting action of the Z-direction extend block 282, to prepare to start the Z-direction drive action next time.

When a phase difference between the first electrical signal and the second electrical signal changes, a direction in which the Z-direction drive action drives the carrier 23 to move changes, so that the Z-direction drive action can drive the carrier 23 to move forward to get away from the image sensor or move backward to get close to the image sensor, that is, to implement bidirectional movement in the Z direction, so as to meet a displacement requirement of auto focus.

It may be understood that, when the Z-direction drive action is performed once, the Z-direction extend block 282 performs the extending action once and the contracting action once, and when the Z-direction drive action is performed for a plurality of times, the extending action and the contracting action of the Z-direction extend block 282 are alternately performed.

A deformation action of the Z-direction base block 281 and a deformation action of the Z-direction extend block 282 may be performed non-synchronously, or may be performed synchronously, and may be controlled by designing a current waveform of the first electrical signal and a current waveform of the second electrical signal.

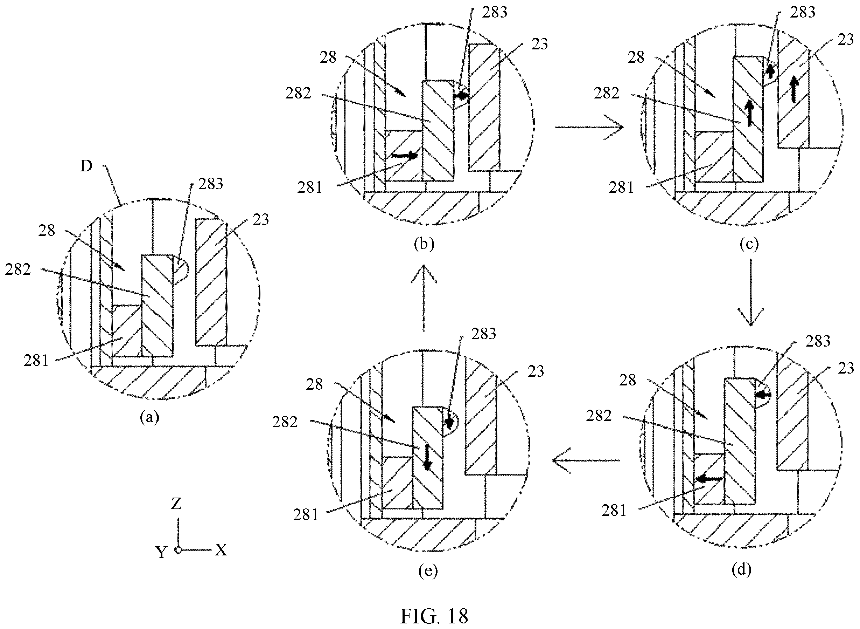

FIG. 18 is a schematic diagram of a Z-direction drive action of the Z-direction piezoelectric driver 28 shown in FIG. 15 in a use state. The schematic structure in FIG. 18 corresponds to a structure at D in FIG. 15.

In some embodiments, a deformation action of the Z-direction base block 281 and a deformation action of the Z-direction extend block 282 are performed non-synchronously. An initial location of the carrier 23 and an initial state of the Z-direction piezoelectric driver 28 are shown in (a) in FIG. 18, and the Z-direction touch block 283 is in an initial location.

In a use state, as shown in (b) in FIG. 18, in the Z-direction drive action, the Z-direction base block 281 first extends, so that the Z-direction touch block 283 moves left to abut against the carrier 23; as shown in (c) in FIG. 18, after the Z-direction touch block 283 abuts against the carrier 23, the Z-direction extend block 282 extends, so that the Z-direction touch block 283 drives the carrier 23 to move upward; as shown in (d) in FIG. 18, the Z-direction base block 281 contracts, so that the Z-direction touch block 283 moves right to leave the carrier 23; and as shown in (e) in FIG. 18, the Z-direction extend block 282 contracts, so that the Z-direction touch block 283 moves downward to move back to the initial location. In this embodiment, a movement track of the Z-direction touch block 283 of the Z-direction piezoelectric driver 28 is a rectangular track, and the Z-direction piezoelectric driver 28 can drive the carrier 23 to move upward, to drive the camera lens 10 to move away from the image sensor, so as to implement auto focus.

In another use state, the Z-direction drive action may control the Z-direction extend block 282 to contract after the Z-direction base block 281 extends and the Z-direction touch block 283 abuts against the carrier 23, so that the Z-direction touch block 283 drives the carrier 23 to move downward, and after the Z-direction base block 281 contracts and the Z-direction touch block 283 leaves the carrier 23, control the Z-direction extend block 282 to extend, so that the Z-direction touch block 283 moves back to the initial location. In this embodiment, the Z-direction piezoelectric driver 28 can drive the carrier 23 to move downward, to drive the camera lens 10 to move away from the image sensor, to implement auto focus.

In some other embodiments, when an end of the Z-direction extend block 282 connected to the Z-direction touch block 283 is located on a lower part of an end of the Z-direction extend block 282 connected to the Z-direction base block 281 (that is, closer to the image sensor), and when the foregoing drive action is performed, the carrier 23 moves in a direction opposite to that in the foregoing embodiment.

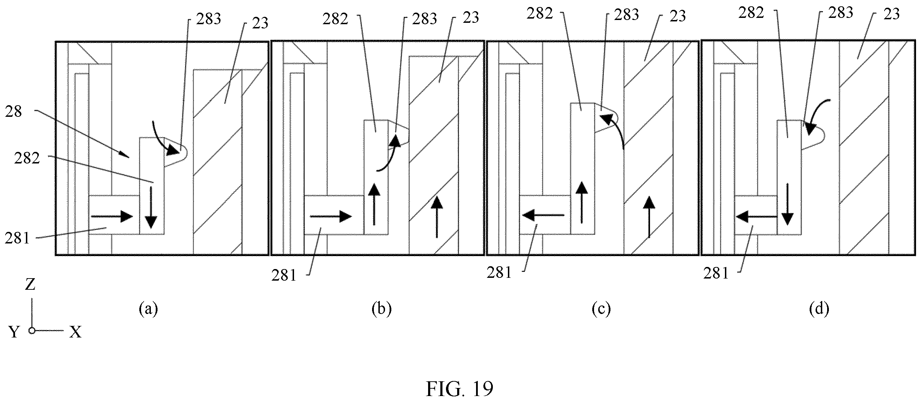

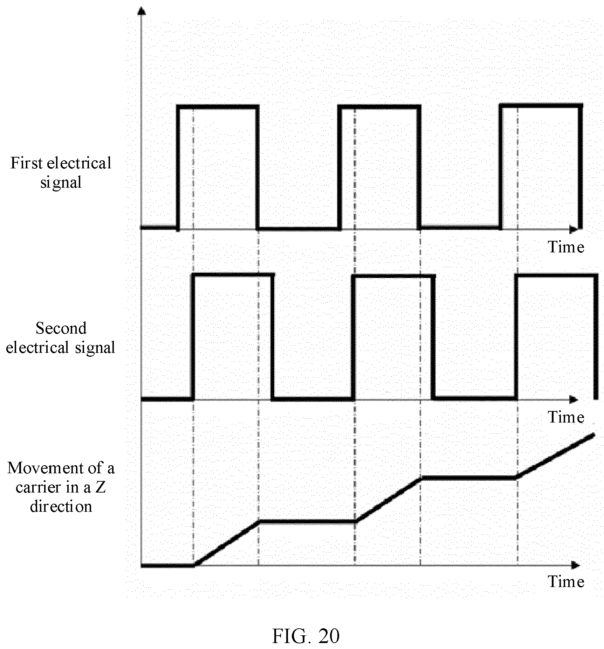

FIG. 19 is a schematic diagram of a Z-direction drive action of the Z-direction piezoelectric driver 28 shown in FIG. 15 in another use state, and FIG. 20 is a schematic diagram of a current waveform of an electrical signal and displacement of the carrier 23 that are corresponding to the Z-direction drive action shown in FIG. 19.

In some embodiments, a deformation action of the Z-direction base block 281 and a deformation action of the Z-direction extend block 282 are performed synchronously. The first electrical signal and the second electrical signal may be pulse width modulation (pulse width modulation, PWM) signals. When a current of the first electrical signal is at a wave peak, the Z-direction base block 281 extends. When the current of the first electrical signal is at a wave trough, the Z-direction base block 281 contracts. When a current of the second electrical signal is at a wave peak, the Z-direction extend block 282 extends. When the current of the second electrical signal is at a wave trough, the Z-direction extend block 282 contracts.

As shown in FIG. 20, when the first electrical signal is at a wave peak, the second electrical signal is first at a wave trough and then changes to a wave peak. Correspondingly, the Z-direction piezoelectric driver 28 first implements an action in (a) in FIG. 19, that is, the Z-direction base block 281 extends, and the Z-direction extend block 282 contracts, so that the Z-direction touch block 283 moves along a first arc track. The Z-direction touch block 283 approaches the carrier 23, and then implements an action in (b) in FIG. 19, that is, the Z-direction base block 281 continues to extend, and the Z-direction extend block 282 extends, so that the Z-direction touch block 283 moves along a second arc track, and the Z-direction touch block 283 abuts against the carrier 23 and drives the carrier 23 to move upward in the Z direction. As shown in FIG. 20, when the first electrical signal is at a wave trough, the second electrical signal is first at a wave peak and then changes to a wave trough. Correspondingly, the Z-direction piezoelectric driver 28 first implements an action in (c) in FIG. 19, that is, the Z-direction base block 281 contracts, and the Z-direction extend block 282 continues to extend, so that the Z-direction touch block 283 moves along a third arc track. The Z-direction touch block 283 leaves the carrier 23, and then implements an action in (d) in FIG. 19, that is, the Z-direction base block 281 continues to contract, and the Z-direction extend block 282 contracts, so that the Z-direction touch block 283 moves along a fourth arc track, and the Z-direction touch block 283 moves back to the initial location. The first arc track, the second arc track, the third arc track, and the fourth arc track are jointly spliced into an elliptical track, so that the Z-direction drive action of the Z-direction piezoelectric driver 28 is in an elliptical track.

Under control of the first electrical signal and the second electrical signal, the Z-direction piezoelectric driver 28 performs the Z-direction drive action a plurality of times, and may drive the Z-direction touch block 283 to implement an elliptical track movement a plurality of times, to periodically squeeze and drive the carrier 23 to move upward, leave the carrier 23, and return to the initial location, so as to drive the carrier 23 to move upward in the Z direction continuously, to meet a displacement requirement of auto focus.

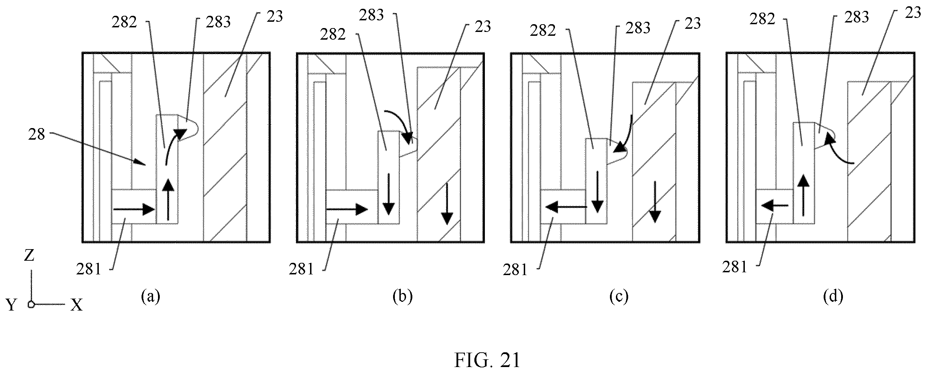

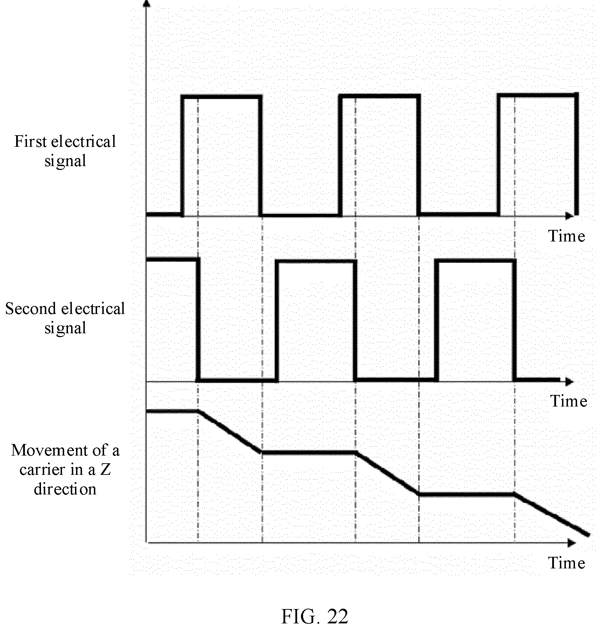

FIG. 21 is a schematic diagram of a Z-direction drive action of the Z-direction piezoelectric driver 28 shown in FIG. 15 in another use state, and FIG. 22 is a schematic diagram of a current waveform of an electrical signal and displacement of the carrier 23 that are corresponding to the Z-direction drive action shown in FIG. 21.

A difference between the Z-direction drive action shown in FIG. 21 and FIG. 22 and the Z-direction drive action shown in FIG. 19 and FIG. 20 lies in that a phase difference between a first electrical signal and a second electrical signal is changed, so that the Z-direction drive action of the Z-direction piezoelectric driver 28 drives the carrier 23 to move in an opposite direction. Details are as follows.

In some embodiments, a deformation action of the Z-direction base block 281 and a deformation action of the Z-direction extend block 282 are performed synchronously. When a current of the first electrical signal is at a wave peak, the Z-direction base block 281 extends. When the current of the first electrical signal is at a wave trough, the Z-direction base block 281 contracts. When a current of the second electrical signal is at a wave peak, the Z-direction extend block 282 extends. When the current of the second electrical signal is at a wave trough, the Z-direction extend block 282 contracts.

As shown in FIG. 22, when the first electrical signal is at a wave peak, the second electrical signal is first at a wave peak and then changes to a wave trough. Correspondingly, the Z-direction piezoelectric driver 28 first implements an action in (a) in FIG. 21, that is, the Z-direction base block 281 extends, and the Z-direction extend block 282 extends, so that the Z-direction touch block 283 moves along a first arc track. The Z-direction touch block 283 approaches the carrier 23, and then implements an action in (b) in FIG. 21, that is, the Z-direction base block 281 continues to extend, and the Z-direction extend block 282 contracts, so that the Z-direction touch block 283 moves along a second arc track, and the Z-direction touch block 283 abuts against the carrier 23 and drives the carrier 23 to move downward in the Z direction. As shown in FIG. 22, when the first electrical signal is at a wave trough, the second electrical signal is first at a wave trough and then changes to a wave peak. Correspondingly, the Z-direction piezoelectric driver 28 first implements an action in (c) in FIG. 21, that is, the Z-direction base block 281 contracts, and the Z-direction extend block 282 continues to contract, so that the Z-direction touch block 283 moves along a third arc track. The Z-direction touch block 283 leaves the carrier 23, and then implements an action in (d) in FIG. 21, that is, the Z-direction base block 281 continues to contract, and the Z-direction extend block 282 extends, so that the Z-direction touch block 283 moves along a fourth arc track, and the Z-direction touch block 283 moves back to an initial location. The first arc track, the second arc track, the third arc track, and the fourth arc track are jointly spliced into an elliptical track, so that the Z-direction drive action of the Z-direction piezoelectric driver 28 is in an elliptical track.

Under control of the first electrical signal and the second electrical signal, the Z-direction piezoelectric driver 28 performs the Z-direction drive action a plurality of times, and may drive the Z-direction touch block 283 to implement an ellipse a plurality of times, to periodically squeeze and drive the carrier 23 to move downward, leave the carrier 23, and return to the initial location, so as to drive the carrier 23 to move downward in the Z direction continuously, so as to meet a displacement requirement of auto focus.

With reference to the accompanying drawings, the following describes a process in which the X-direction piezoelectric driver 29 of the ultrasonic piezoelectric motor 20 drives the frame 22 to move in the X direction, and the Y-direction piezoelectric driver 210 of the ultrasonic piezoelectric motor 20 drives the frame 22 to move in the Y direction, to implement optical image stabilization.

In some embodiments, the X-direction drive circuit 240 may generate a third electrical signal and a fourth electrical signal based on an image stabilization signal. The X-direction base block 291 deforms based on the third electrical signal, to drive the X-direction touch block 293 to abut against the frame 22 or leave the frame 22. The X-direction extend block 292 deforms based on the fourth electrical signal, to drive the X-direction touch block 293 to move in the X direction, so that the X-direction piezoelectric driver 29 performs an X-direction drive action at least once, and the X-direction drive action drives the frame 22 to move in the X direction. When the X-direction touch block 293 abuts against the frame 22 and the X-direction extend block 292 deforms, the X-direction touch block 293 drives the frame 22 to move in the X direction.

A maximum distance that may be used in a single X-direction drive action to drive the carrier 23 is S3, that is, a drive stroke of the single X-direction drive action is S3. When the carrier 23 needs to move in the X direction by a distance S to meet an image stabilization requirement, if S/S3=M, and M is an integer, the X-direction piezoelectric driver 29 performs an X-direction drive action M times whose drive stroke is S3; or if S/S3=M, M is an integer, and there is a remainder S4, the X-direction piezoelectric driver 29 performs an X-direction drive action M times whose drive stroke is S3, and performs an X-direction drive action once whose drive stroke is S4; or if S/S3 is less than 1, the X-direction piezoelectric driver 29 performs an X-direction drive action once whose stroke is S.

In some embodiments, the Y-direction drive circuit 250 may generate a fifth electrical signal and a sixth electrical signal based on an image stabilization signal. The Y-direction base block 2101 deforms based on the fifth electrical signal, to drive the Y-direction touch block 2103 to abut against the frame 22 or leave the frame 22. The Y-direction extend block 2102 deforms based on the sixth electrical signal, to drive the Y-direction touch block 2103 to move in the Y direction, so that the Y-direction piezoelectric driver 210 performs a Y-direction drive action at least once, and the Y-direction drive action drives the frame 22 to move in the Y direction. When the Y-direction touch block 2103 abuts against the frame 22 and the Y-direction extend block 2102 deforms, the Y-direction touch block 2103 drives the frame 22 to move in the Y direction.

A maximum distance that may be used in a single Y-direction drive action to drive the carrier 23 is S5, that is, a drive stroke of the single Y-direction drive action is S5. When the carrier 23 needs to move in the Y direction by a distance S to meet an image stabilization requirement, if S/S5=M, and M is an integer, the Y-direction piezoelectric driver 210 performs a Y-direction drive action M times whose drive stroke is S5; or if S/S5=M, M is an integer, and there is a remainder S6, the Y-direction piezoelectric driver 210 performs a Y-direction drive action M times whose drive stroke is S5, and performs a Y-direction drive action once whose drive stroke is S6; or if S/S5 is less than 1, the Y-direction piezoelectric driver 210 performs a Y-direction drive action once whose stroke is S.

In this embodiment, the ultrasonic piezoelectric motor 20 performs at least once the X-direction drive action by using the X-direction piezoelectric driver 29, to drive the frame 22 to drive the carrier 23 and the camera lens 10 to move in the X direction, and performs at least once the Y-direction drive action by using the Y-direction piezoelectric driver 210, to drive the frame 22 to drive the carrier 23 and the camera lens 10 to move in the Y direction. Therefore, the camera lens 10 can be driven by the ultrasonic piezoelectric motor 20 to move on a plane perpendicular to the Z direction, so that the camera module 200 implements optical image stabilization. It may be understood that, in some use scenarios, if an image stabilization requirement can be met by moving the camera lens 10 only in the X direction, the X-direction piezoelectric driver 29 performs at least once the X-direction drive action, and the Y-direction piezoelectric driver 210 does not work; or if an image stabilization requirement can be met by moving the camera lens 10 only in the Y direction, the Y-direction piezoelectric driver 210 performs at least once the Y-direction drive action, and the X-direction piezoelectric driver 29 does not work; or if an image stabilization requirement needs to be met by moving the camera lens 10 in the X direction and moving the camera lens 10 in the Y direction, the X-direction piezoelectric driver 29 performs at least once the X-direction drive action, and the Y-direction piezoelectric driver 210 performs at least once the Y-direction drive action.

In some embodiments, the X-direction drive action includes: The X-direction base block 291 extends to drive the X-direction touch block 293 to abut against the frame 22; the X-direction extend block 292 extends or contracts to drive the X-direction touch block 293 to drive the frame 22 to move in the X direction; the X-direction base block 291 contracts to drive the X-direction touch block 293 to leave the frame 22; and the X-direction extend block 292 contracts or extends to drive the X-direction touch block 293 to move back to an initial location.

In this embodiment, in the X-direction drive action, the X-direction touch block 293 abuts against the frame 22 by an extending action of the X-direction base block 291, and when the X-direction touch block 293 abuts against the frame 22, the X-direction touch block 293 is enabled to drive the frame 22 to move by an extending or contracting action of the X-direction extend block 292, so as to drive the frame 22 to move in the X direction, to drive the camera lens 10 to move in the X direction. In the X-direction drive action, the X-direction touch block 293 leaves the frame 22 by a contracting action of the X-direction base block 291, and when the X-direction touch block 293 leaves the frame 22, the X-direction touch block moves back to the initial location by an extending or contracting action of the X-direction extend block 292, to prepare to start the X-direction drive action next time.

When a phase difference between the third electrical signal and the fourth electrical signal changes, a direction in which the X-direction drive action drives the frame 22 to move changes, so that the X-direction drive action drives the frame 22 to implement a bidirectional movement in the X direction, so as to meet a displacement requirement of image stabilization.

It may be understood that, when the X-direction drive action is performed once, the X-direction extend block 292 performs the extending action once and the contracting action once, and when the X-direction drive action is performed for a plurality of times, the extending action and the contracting action of the X-direction extend block 292 are alternately performed.

A deformation action of the X-direction base block 291 and a deformation action of the X-direction extend block 292 may be performed non-synchronously, or may be performed synchronously, and may be controlled by designing a current waveform of the third electrical signal and a current waveform of the fourth electrical signal.

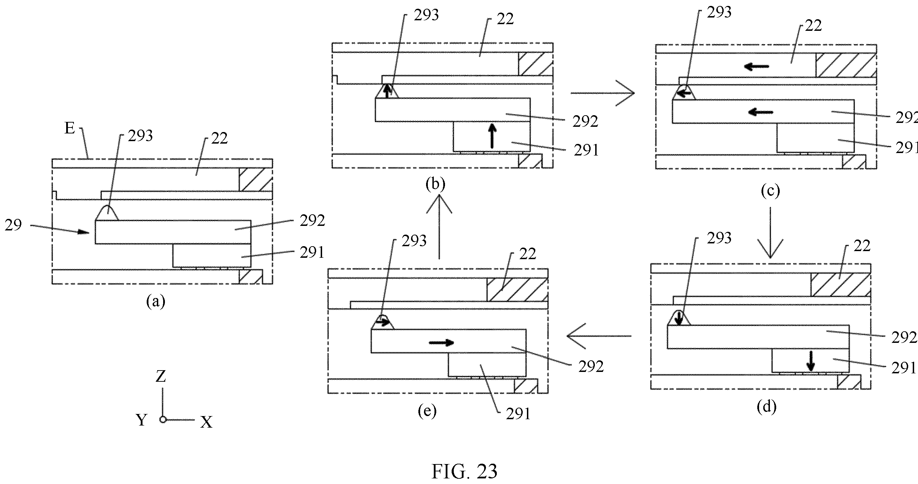

FIG. 23 is a schematic diagram of movement of an X-direction drive action of the X-direction piezoelectric driver 29 shown in FIG. 15 in a use state. The schematic structure in FIG. 23 corresponds to a structure at E in FIG. 15.

In an embodiment, a deformation action of the X-direction base block 291 and a deformation action of the X-direction extend block 292 are performed non-synchronously. An initial location of the frame 22 and an initial state of the X-direction piezoelectric driver 29 are shown in (a) in FIG. 23, and the X-direction touch block 293 is in an initial location.

In a use state, as shown in (b) in FIG. 23, in an X-direction drive action, the X-direction base block 291 first extends, so that the X-direction touch block 293 moves upward to abut against the frame 22; as shown in (c) in FIG. 23, after the X-direction touch block 293 abuts against the frame 22, the X-direction extend block 292 extends, so that the X-direction touch block 293 drives the frame 22 to move left; as shown in (d) in FIG. 23, the X-direction base block 291 contracts, so that the X-direction touch block 293 moves downward to leave the frame 22; and as shown in (e) in FIG. 23, the X-direction extend block 292 contracts, so that the X-direction touch block 293 moves right to move back to the initial location. In this embodiment, a movement track of the X-direction touch block 293 of the X-direction piezoelectric driver 29 is a rectangular track, and the X-direction piezoelectric driver 29 can drive the frame 22 to move leftward, to drive the camera lens 10 to move leftward, so as to implement image stabilization.

In another use state, the X-direction drive action controls, after the X-direction base block 291 extends, and the X-direction touch block 293 abuts against the frame 22, the X-direction extend block 292 to contract to enable the X-direction touch block 293 to drive the frame 22 to move rightward; and after the X-direction base block 291 contracts, and the X-direction touch block 293 leaves the frame 22, controls the X-direction extend block 292 to extend, so that the X-direction touch block 293 moves back to the initial location. In this embodiment, the X-direction piezoelectric driver 29 can drive the frame 22 to move rightward, to drive the camera lens 10 to move rightward, so as to implement image stabilization.

In some other embodiments, when an end of the X-direction extend block 292 connected to the X-direction touch block 293 is located on a right side of an end of the X-direction extend block 292 connected to the X-direction base block 291, and when the foregoing drive action is performed, the frame 22 moves in a direction opposite to that in the foregoing embodiment.

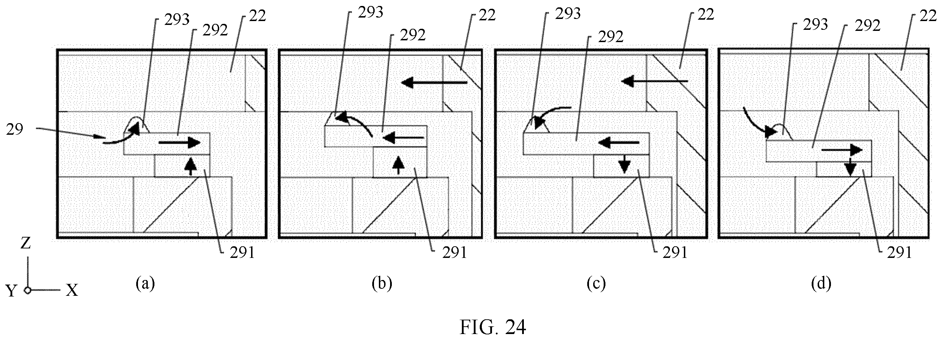

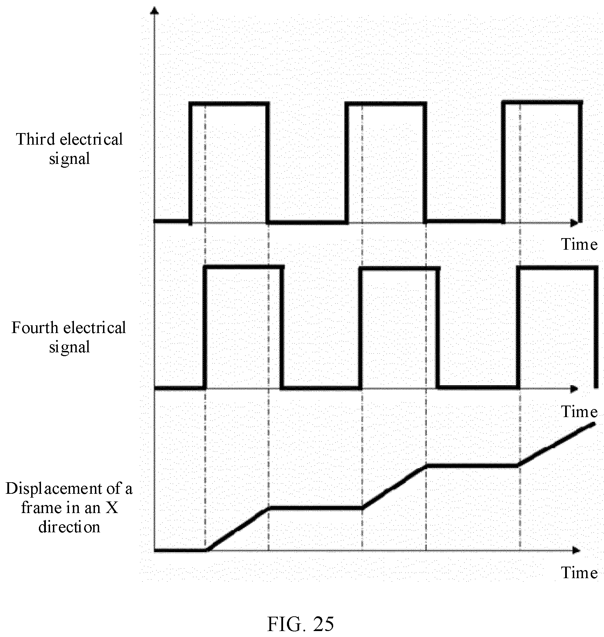

FIG. 24 is a schematic diagram of movement of an X-direction drive action of the X-direction piezoelectric driver 29 shown in FIG. 15 in another use state, and FIG. 25 is a schematic diagram of a current waveform of an electrical signal and displacement of the frame 22 that are corresponding to the X-direction drive action shown in FIG. 24.

In some embodiments, a deformation action of the X-direction base block 291 and a deformation action of the X-direction extend block 292 are performed synchronously. The third electrical signal and the fourth electrical signal may be pulse width modulation (pulse width modulation, PWM) signals. When a current of the third electrical signal is at a wave peak, the X-direction base block 291 extends. When the current of the third electrical signal is at a wave trough, the X-direction base block 291 contracts. When a current of the fourth electrical signal is at a wave peak, the X-direction extend block 292 extends. When the current of the fourth electrical signal is at a wave trough, the X-direction extend block 292 contracts.

As shown in FIG. 25, when the third electrical signal is at a wave peak, the fourth electrical signal is first at a wave trough and then changes to a wave peak. Correspondingly, the X-direction piezoelectric driver 29 first implements an action in (a) in FIG. 24, that is, the X-direction base block 291 extends, and the X-direction extend block 292 contracts, so that the X-direction touch block 293 moves along a first arc track. The X-direction touch block 293 approaches the frame 22, and then implements an action in (b) in FIG. 24, that is, the X-direction base block 291 continues to extend, and the X-direction extend block 292 extends, so that the X-direction touch block 293 moves along a second arc track, and the X-direction touch block 293 abuts against the frame 22 and drives the frame 22 to move leftward in the X direction. As shown in FIG. 25, when the third electrical signal is at a wave trough, the fourth electrical signal is first at a wave peak and then changes to a wave trough. Correspondingly, the X-direction piezoelectric driver 29 first implements an action in (c) in FIG. 24, that is, the X-direction base block 291 contracts, and the X-direction extend block 292 continues to extend, so that the X-direction touch block 293 moves along a third arc track. The X-direction touch block 293 leaves the frame 22, and then implements an action in (d) in FIG. 24, that is, the X-direction base block 291 continues to contract, and the X-direction extend block 292 contracts, so that the X-direction touch block 293 moves along a fourth arc track, and the X-direction touch block 293 moves back to the initial location. The first arc track, the second arc track, the third arc track, and the fourth arc track are jointly spliced into an elliptical track, so that the X-direction drive action of the X-direction piezoelectric driver 29 is in an elliptical track.

Under control of the third electrical signal and the fourth electrical signal, the X-direction piezoelectric driver 29 performs the X-direction drive action a plurality of times, and may drive the X-direction touch block 293 to implement an ellipsis a plurality of times, to periodically squeeze and drive the frame 22 to move leftward, leave the frame 22, and return to the initial location, so as to drive the frame 22 to drive the camera lens 10 to move leftward in the X direction, to meet a displacement requirement of optical image stabilization.

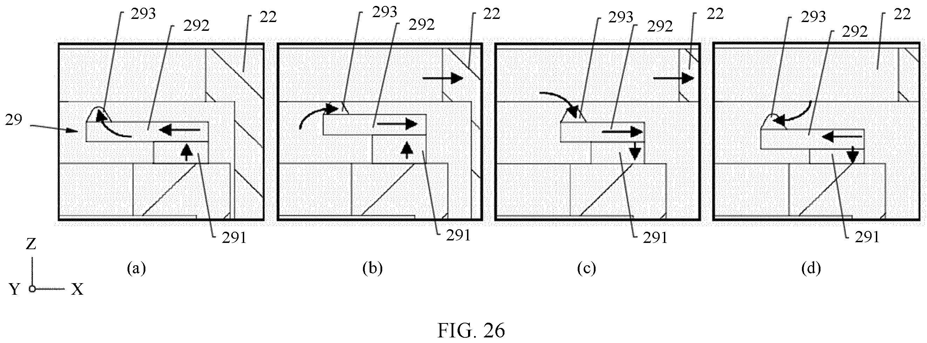

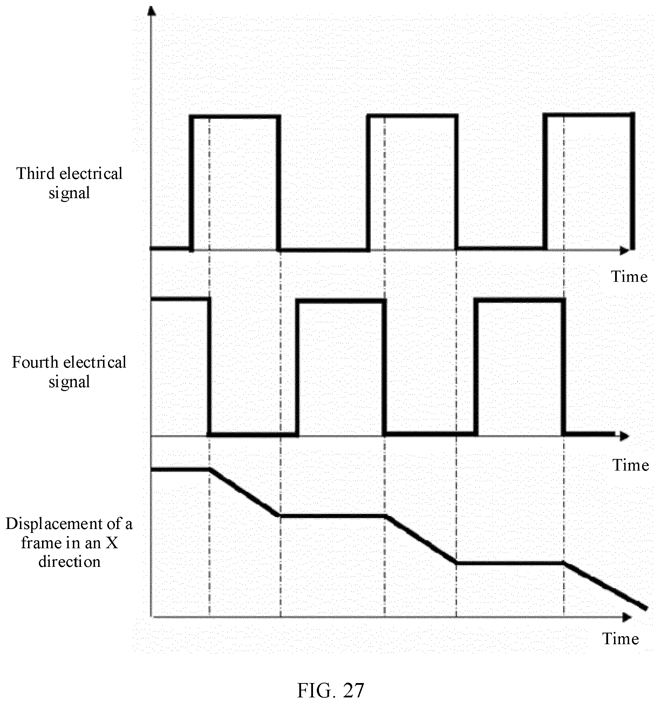

FIG. 26 is a schematic diagram of movement of an X-direction drive action of the X-direction piezoelectric driver 29 shown in FIG. 15 in another use state, and FIG. 27 is a schematic diagram of a current waveform of an electrical signal and displacement of the frame 22 that are corresponding to the X-direction drive action shown in FIG. 26.

In this embodiment, a difference between the X-direction drive action shown in FIG. 22 and FIG. 23 and the X-direction drive action shown in FIG. 24 and FIG. 25 lies in that a phase difference between a third electrical signal and a fourth electrical signal is changed, so that the X-direction drive action of the X-direction piezoelectric driver 29 drives the frame 22 to move in an opposite direction. Details are as follows.

In some embodiments, a deformation action of the X-direction base block 291 and a deformation action of the X-direction extend block 292 are performed synchronously. When a current of the third electrical signal is at a wave peak, the X-direction base block 291 extends. When the current of the third electrical signal is at a wave trough, the X-direction base block 291 contracts. When a current of the fourth electrical signal is at a wave peak, the X-direction extend block 292 extends. When the current of the fourth electrical signal is at a wave trough, the X-direction extend block 292 contracts.

As shown in FIG. 27, when the third electrical signal is at a wave peak, the fourth electrical signal is first at a wave peak and then changes to a wave trough. Correspondingly, the X-direction piezoelectric driver 29 first implements an action in (a) in FIG. 26, that is, the X-direction base block 291 extends, and the X-direction extend block 292 extends, so that the X-direction touch block 293 moves along a first arc track. The X-direction touch block 293 approaches the frame 22, and then implements an action in (b) in FIG. 26, that is, the X-direction base block 291 continues to extend, and the X-direction extend block 292 contracts, so that the X-direction touch block 293 moves along a second arc track, and the X-direction touch block 293 abuts against the frame 22 and drives the frame 22 to move rightward in the X direction. As shown in FIG. 27, when the third electrical signal is at a wave trough, the fourth electrical signal is first at a wave trough and then changes to a wave peak. Correspondingly, the X-direction piezoelectric driver 29 first implements an action in (c) in FIG. 26, that is, the X-direction base block 291 contracts, and the X-direction extend block 292 continues to contract, so that the X-direction touch block 293 moves along a third arc track. The X-direction touch block 293 leaves the frame 22, and then implements an action in (d) in FIG. 26, that is, the X-direction base block 291 continues to contract, and the X-direction extend block 292 extends, so that the X-direction touch block 293 moves along a fourth arc track, and the X-direction touch block 293 moves back to the initial location. The first arc track, the second arc track, the third arc track, and the fourth arc track are jointly spliced into an elliptical track, so that the X-direction drive action of the X-direction piezoelectric driver 29 is in an elliptical track.

Under control of the third electrical signal and the fourth electrical signal, the X-direction piezoelectric driver 29 performs the X-direction drive action a plurality of times, and may drive the X-direction touch block 293 to implement an ellipsis a plurality of times, to periodically squeeze and drive the frame 22 to move rightward, leave the frame 22, and return to the initial location, so as to drive the frame 22 to drive the camera lens 10 to move rightward in the X direction, to meet a displacement requirement of optical image stabilization.

In some embodiments, the Y-direction drive action includes: The Y-direction base block 2101 extends to drive the Y-direction touch block 2103 to abut against the frame 22; the Y-direction extend block 2102 extends or contracts to drive the Y-direction touch block 2103 to drive the frame 22 to move in the Y direction; the Y-direction base block 2101 contracts to drive the Y-direction touch block 2103 to leave the frame 22; and the Y-direction extend block 2102 contracts or extends to drive the Y-direction touch block 2103 to move back to an initial location.

In this embodiment, in the Y-direction drive action, the Y-direction touch block 2103 abuts against the frame 22 by an extending action of the Y-direction base block 2101, and when the Y-direction touch block 2103 abuts against the frame 22, the Y-direction touch block 2103 is enabled to drive the frame 22 to move by an extending or contracting action of the Y-direction extend block 2102, so as to drive the frame 22 to move in the Y direction, to drive the camera lens 10 to move in the Y direction. In the Y-direction drive action, the Y-direction touch block 2103 leaves the frame 22 by a contracting action of the Y-direction base block 2101, and when the Y-direction touch block 2103 leaves the frame 22, the Y-direction touch block moves back to the initial location by an extending or contracting action of the Y-direction extend block 2102, to prepare to start the Y-direction drive action next time.

When a phase difference between the fifth electrical signal and the sixth electrical signal changes, a direction in which the Y-direction drive action drives the frame 22 to move changes, so that the Y-direction drive action drives the frame 22 to implement a bidirectional movement in the Y direction, so as to meet a displacement requirement of optical image stabilization.

It may be understood that, when the Y-direction drive action is performed once, the Y-direction extend block 2102 performs the extending action once and the contracting action once, and when the Y-direction drive action is performed for a plurality of times, the extending action and the contracting action of the Y-direction extend block 2102 are alternately performed.

A deformation action of the Y-direction base block 2101 and a deformation action of the Y-direction extend block 2102 may be performed non-synchronously, or may be performed synchronously.

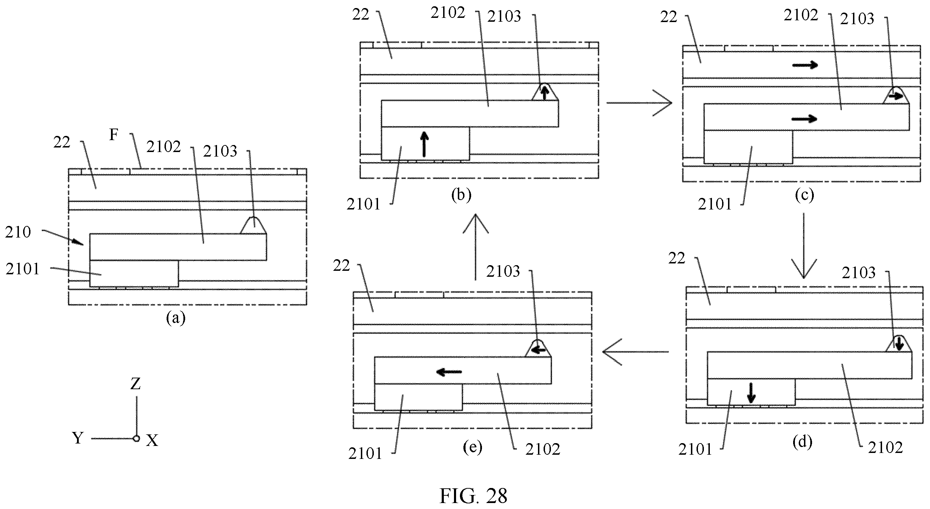

FIG. 28 is a schematic diagram of movement of a direction drive action of the Y-direction piezoelectric driver 210 shown in FIG. 15 in a use state. The schematic structure in FIG. 28 corresponds to a structure at E in FIG. 15.

In some embodiments, a deformation action of the Y-direction base block 2101 and a deformation action of the Y-direction extend block 2102 are performed non-synchronously. An initial location of the frame 22 and an initial state of the Y-direction piezoelectric driver 210 are shown in (a) in FIG. 28, and the Y-direction touch block 2103 is in an initial location.

In a use state, as shown in (b) in FIG. 28, in a Y-direction drive action, the Y-direction base block 2101 first extends, so that the Y-direction touch block 2103 moves upward to abut against the frame 22; as shown in (c) in FIG. 28, after the Y-direction touch block 2103 abuts against the frame 22, the Y-direction extend block 2102 extends, so that the Y-direction touch block 2103 drives the frame 22 to move rightward (corresponding to a backward movement in FIG. 4); as shown in (d) in FIG. 28, the Y-direction base block 2101 contracts, so that the Y-direction touch block 2103 moves downward to leave the frame 22; and as shown in (e) in FIG. 28, the Y-direction extend block 2102 contracts, so that the Y-direction touch block 2103 moves leftward (corresponding to a forward movement in FIG. 4) to move back to the initial location. In this embodiment, a movement track of the Y-direction touch block 2103 of the Y-direction piezoelectric driver 210 is a rectangular track, and the Y-direction piezoelectric driver 210 can drive the frame 22 to move backward, to drive the camera lens 10 to move backward, so as to implement image stabilization.

In another use state, the Y-direction drive action controls, after the Y-direction base block 2101 extends, and the Y-direction touch block 2103 abuts against the frame 22, the Y-direction extend block 2102 to contract to enable the Y-direction touch block 2103 to drive the frame 22 to move leftward (corresponding to a forward movement in FIG. 4), and after the Y-direction base block 2101 contracts, and the Y-direction touch block 2103 leaves the frame 22, controls the Y-direction extend block 2102 to extend, so that the Y-direction touch block 2103 moves back to the initial location. In this embodiment, the Y-direction piezoelectric driver 210 can drive the frame 22 to move forward, to drive the camera lens 10 to move forward, so as to implement image stabilization.

In some other embodiments, when an end of the Y-direction extend block 2102 connected to the Y-direction touch block 2103 is located on a left side of an end of the Y-direction extend block 2102 connected to the Y-direction base block 2101, and when the foregoing drive action is performed, the frame 22 moves in a direction opposite to that in the foregoing embodiment.

In some other embodiments, the deformation action of the Y-direction base block 2101 and the deformation action of the Y-direction extend block 2102 may alternatively be performed synchronously. For designs such as the Y-direction drive action, the fifth electrical signal, and the sixth electrical signal, refer to related descriptions of the X-direction drive action of the X-direction piezoelectric driver 29 corresponding to FIG. 24 to FIG. 27. Details are not described herein again.

It may be understood that, in some other embodiments, the ultrasonic piezoelectric motor 20 may implement auto focus, but does not have an optical image stabilization function. In this case, the ultrasonic piezoelectric motor 20 may omit related structures such as the X-direction piezoelectric driver 29, the Y-direction piezoelectric driver 210, and the base 21.

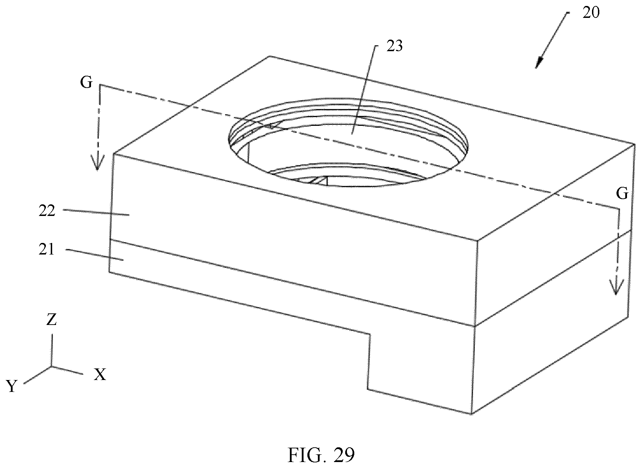

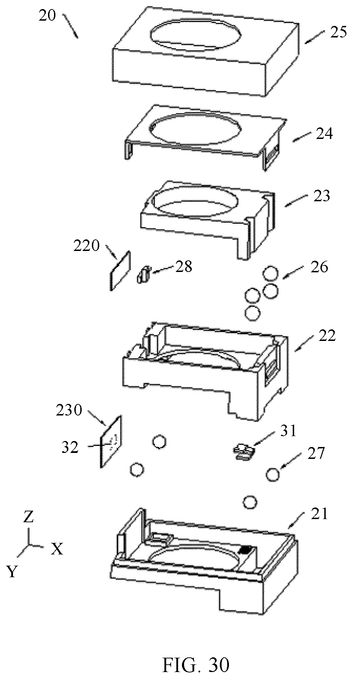

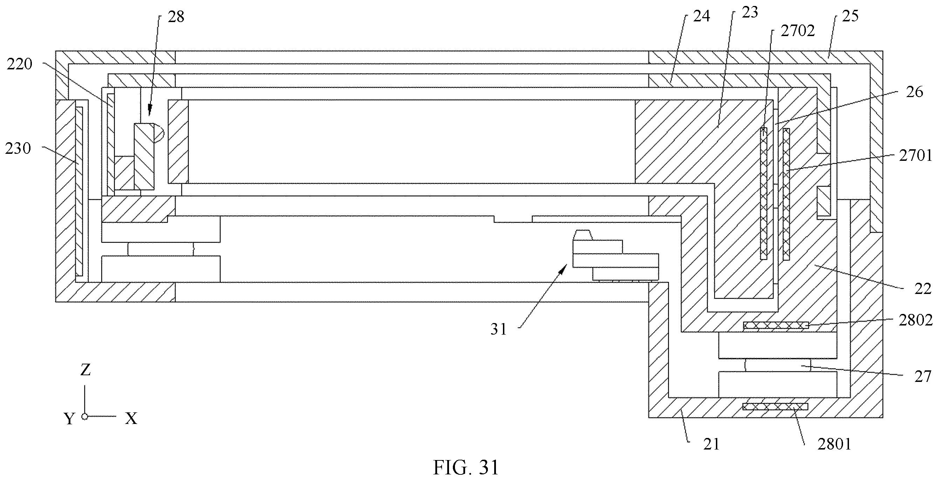

FIG. 29 is a schematic diagram of a structure of an ultrasonic piezoelectric motor 20 of the camera module 200 shown in FIG. 2 in some other embodiments, FIG. 30 is a schematic diagram of a partially-exploded structure of the ultrasonic piezoelectric motor 20 shown in FIG. 29, and FIG. 31 is a schematic sectional view of the ultrasonic piezoelectric motor 20 shown in FIG. 29 cut along G-G. The ultrasonic piezoelectric motor 20 in this embodiment may include some features of the ultrasonic piezoelectric motor 20 in the foregoing embodiment. The following mainly describes a difference between the two, and same parts of the two are not described again.

In some embodiments, the ultrasonic piezoelectric motor 20 may include a base 21, a frame 22, a carrier 23, a frame upper cover 24, an outer cover 25, a plurality of first balls 26, a plurality of second balls 27, a Z-direction piezoelectric driver 28, an XY-direction piezoelectric driver 31, a first circuit board 220, and a second circuit board 230. The outer cover 25 and the base 21 are fastened to each other to form a housing of the ultrasonic piezoelectric motor 20 together. Other parts of the ultrasonic piezoelectric motor 20 are installed on an inner side of the outer cover 25 and the base 21.

The carrier 23 is installed on an inner side of the frame 22, and can move in the Z direction relative to the frame 22. The Z-direction piezoelectric driver 28 is located between the frame 22 and the carrier 23. The Z-direction piezoelectric driver 28 is configured to drive the carrier 23 to move in a Z direction. The frame 22 is installed on the inner side of the base 21, and can move in an X direction and move in a Y direction relative to the base 21. The XY-direction piezoelectric driver 31 is located between the base 21 and the frame 22. The XY-direction piezoelectric driver 31 is configured to drive the frame 22 to move in the X direction and move in the Y direction.

In this embodiment, the Z-direction piezoelectric driver 28 can drive the carrier 23 to drive the camera lens 10 to move in the Z direction, so as to implement auto focus. The XY-direction piezoelectric driver 31 is configured to drive the frame 22 to drive the carrier 23 and the camera lens 10 to move on an XY plane perpendicular to the Z direction, to implement optical image stabilization.

The ultrasonic piezoelectric motor 20 further includes an XY-direction drive circuit 32. The XY-direction drive circuit 32 may be formed on the second circuit board 230, or may be fastened and electrically connected to the second circuit board 230, and the XY-direction drive circuit 32 is electrically connected to the XY-direction piezoelectric driver 31. The XY-direction drive circuit 32 is configured to generate a drive signal for driving the XY-direction piezoelectric driver 31.

In this embodiment, a drive principle and a drive action of the Z-direction piezoelectric driver 28 for the carrier 23 are the same as those in the foregoing embodiment. Refer to the foregoing embodiment. The following mainly describes a drive principle and a drive action of the XY-direction piezoelectric driver 31 for the frame 22.

As shown in FIG. 31, the carrier 23 is slidably connected to the frame 22. The ultrasonic piezoelectric motor 20 further includes a first magnetic member 2701 and a second magnetic member 2702. The first magnetic member 2701 is embedded in the frame 22, the second magnetic member 2702 is embedded in the carrier 23, and the second magnetic member 2702 and the first magnetic member 2701 are attracted to each other. The first ball 26 is located between the carrier 23 and the frame 22. The frame 22 is slidably connected to the base 21. The ultrasonic piezoelectric motor 20 further includes a third magnetic member 2801 and a fourth magnetic member 2802. The third magnetic member 2801 is embedded in the base 21, the fourth magnetic member 2802 is embedded in the frame 22, and the fourth magnetic member 2802 and the third magnetic member 2801 are attracted to each other. The second ball 27 is located between the frame 22 and the base 21.

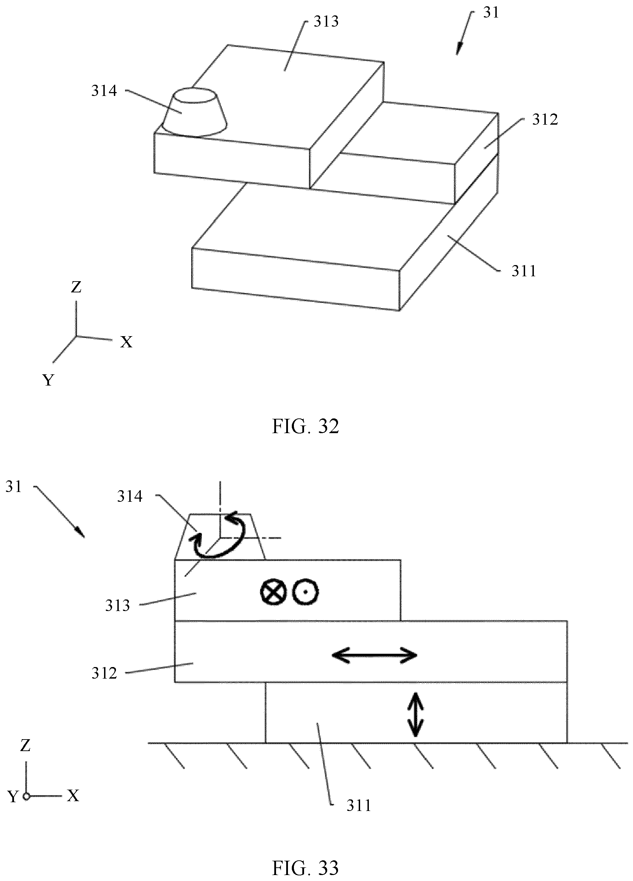

FIG. 32 is a schematic diagram of a structure of the XY-direction piezoelectric driver 31 shown in FIG. 30, and FIG. 33 is a schematic diagram of a structure of the XY-direction piezoelectric driver 31 shown in FIG. 32 from another angle.

In some embodiments, the XY-direction piezoelectric driver 31 includes an XY-direction base block 311, an X-direction extend block 312, a Y-direction extend block 313, and an XY-direction touch block 314. One end of the XY-direction base block 311 is fastened to the base 21, one end of the X-direction extend block 312 is fastened to the other end of the XY-direction base block 311, one end of the Y-direction extend block 313 is fastened to the other end of the X-direction extend block 312, and the XY-direction touch block 314 is fastened to the other end of the Y-direction extend block 313. The XY-direction base block 311, the X-direction extend block 312, the Y-direction extend block 313, and the XY-direction touch block 314 are stacked. For example, the XY-direction base block 311 is soldered on a solder pad 214 on the base 21, to electrically connect to the circuit on the base 21. The XY-direction base block 311 may further be bonded to the base 21, to implement a firm structural connection to the base 21 by soldering and bonding. For example, a bottom side of one end of the X-direction extend block 312 is fastened to a top side of the XY-direction base block 311, a bottom side of one end of the Y-direction extend block 313 is fastened to a top side of the other end of the X-direction extend block 312, and the XY-direction touch block 314 is fastened to a top side of the other end of the Y-direction extend block 313. The XY-direction touch block 314 may be in a truncated cone shape or another shape.

In this embodiment, the XY-direction piezoelectric driver 31 is a six-axis piezoelectric driver, and may be formed by one XY-direction base block 311, one X-direction extend block 312, and one Y-direction extend block 313 whose deformation directions are orthogonal. The XY-direction base block 311, the X-direction extend block 312, and the Y-direction extend block 313 may be a piezoelectric material stack. When currents of different phases and different amplitudes are input to the XY-direction base block 311, the X-direction extend block 312, and the Y-direction extend block 313 respectively, the XY-direction base block 311, the X-direction extend block 312, and the Y-direction extend block 313 each deform in a corresponding deformation direction, to synthesize movement of an ellipsoid track or a cylinder track on the XY-direction touch block 314. The cylinder track may include a cylinder, a cuboid, a prism, or the like.

As shown in FIG. 33, the XY-direction base block 311 can deform under control of an electrical signal, for example, extend and contract in the Z direction, to drive the X-direction extend block 312, the Y-direction extend block 313, and the XY-direction touch block 314 to move in the Z direction. The XY-direction touch block 314 may abut against the frame 22 and leave the frame 22 under deformation of the XY-direction base block 311. The X-direction extend block 312 can deform under control of an electrical signal, for example, extend and contract in the X direction, to drive the Y-direction extend block 313 and the XY-direction touch block 314 to move in the X direction. The Y-direction extend block 313 can deform under control of an electrical signal, for example, extend and contract in the Y direction, to drive the XY-direction touch block 314 to move in the Y direction. Therefore, by controlling deformation of the XY-direction base block 311 and the X-direction extend block 312, the XY-direction touch block 314 can move in an XZ plane, for example, move along a track such as an elliptical track or a rectangular track, to drive the frame 22 to move in the X direction. By controlling deformation of the XY-direction base block 311 and the Y-direction extend block 313, the XY-direction touch block 314 can move in an XY plane, for example, move along a track such as an elliptical track or a rectangular track, to drive the frame 22 to move in the Y direction. By controlling deformation of the XY-direction base block 311, the X-direction extend block 312, and the Y-direction extend block 313, the XY-direction touch block 314 can implement a three-dimensional movement of an ellipsoid track or a cylinder track, so as to drive the frame 22 to move in the X direction and move in the Y direction.

The XY-direction base block 311 may include a bottom, a deformation part, and a top. The bottom and the top of the XY-direction base block 311 may be fixed structures that do not deform. The bottom of the XY-direction base block 311 is fixedly connected to the base 21, and the top of the XY-direction base block 311 is fixedly connected to the X-direction extend block 312. The deformation part of the XY-directionbase block 311 is made of a piezoelectric material, and deforms under control of the electrical signal.

The X-direction extend block 312 may include a first end part, a deformation part, and a second end part. The first end part and the second end part of the X-direction extend block 312 may be fixed structures that do not deform. The first end part of the X-direction extend block 312 is fixedly connected to the top of the XY-direction base block 311, and the second end part of the X-direction extend block 312 is fixedly connected to the Y-direction extend block 313. The deformation part of the X-direction extend block 312 is made of a piezoelectric material, and deforms under control of the electrical signal.

The Y-direction extend block 313 may include a first end part, a deformation part, and a second end part. The first end part and the second end part of the Y-direction extend block 313 may be fixed structures that do not deform. The first end part of the Y-direction extend block 313 is fixedly connected to a top of the X-direction extend block 312, and the second end part of the Y-direction extend block 313 is fixedly connected to the XY-direction touch block 314. The deformation part of the Y-direction extend block 313 is made of a piezoelectric material, and deforms under control of the electrical signal.

A top surface that is of the XY-direction touch block 314 and that is away from the Y-direction extend block 313 may have a large friction coefficient. For example, a top that is of the XY-direction touch block 314 and that is away from the Y-direction extend block 313 or the entire XY-direction touch block 314 may be made of a material with a large surface friction coefficient, to increase a friction force between the XY-direction touch block 314 and another component. Alternatively, the top surface of the XY-direction touch block 314 may obtain a large friction coefficient by surface roughening. The top of the XY-direction touch block 314 or the entire XY-direction touch block 314 may alternatively be made of a material having a specific flexibility, so that the XY-direction touch block 314 has a specific buffering performance, to protect the XY-direction touch block 314 and a component that touches the XY-direction touch block 314 when the XY-direction piezoelectric driver 31 works. For example, the XY-direction touch block 314 may be made of rubber or the like.

With reference to the accompanying drawings, the following describes a process in which the XY-direction piezoelectric driver 31 of the ultrasonic piezoelectric motor 20 drives the carrier 23 to move in the X direction and move in the Y direction, to implement optical image stabilization.

In some embodiments, the XY-direction drive circuit 32 is configured to generate a seventh electrical signal, an eighth electrical signal, and a ninth electrical signal based on an image stabilization signal. The XY-direction base block 311 deforms based on the seventh electrical signal, to drive the XY-direction touch block 314 to abut against the frame 22 or leave the frame 22. The X-direction extend block 312 deforms based on the eighth electrical signal, to drive the XY-direction touch block 314 to move in the X direction. The Y-direction extend block 313 deforms based on the ninth electrical signal, to drive the XY-direction touch block 314 to move in the Y direction. In this way, the XY-direction piezoelectric driver 31 performs at least once an X-direction drive action, at least once a Y-direction drive action, or at least once an XY-direction drive action. When the XY-direction touch block 314 abuts against the frame 22, and the X-direction extend block 312 and/or the Y-direction extend block 313 deform/deforms, the XY-direction touch block 314 drives the frame 22 to move on the XY plane, where the XY plane is perpendicular to the Z direction. The X-direction drive action is used to drive the frame 22 to move in the X direction. The Y-direction drive action is used to drive the frame to move in the Y direction. The XY-direction drive action is used to drive the frame to move on the XY plane, that is, drive the frame to move in the X direction and move in the Y direction.

In this embodiment, the ultrasonic piezoelectric motor 20 performs at least once the X-direction drive action, at least once the Y-direction drive action, or at least once the XY-direction drive action by using the XY-direction piezoelectric driver 31, to drive the frame 22 to drive the carrier 23 and the camera lens 10 to move in the X direction and/or move in the Y direction. Therefore, the camera lens 10 can be driven by the ultrasonic piezoelectric motor 20 to move on a plane perpendicular to the Z direction, so that the camera module 200 implements optical image stabilization.

It may be understood that, in some use scenarios, if an image stabilization requirement can be met by moving the camera lens 10 only in the X direction, the XY-direction piezoelectric driver 31 performs at least once the X-direction drive action; or if an image stabilization requirement can be met by moving the camera lens 10 only in the Y direction, the XY-direction piezoelectric driver 31 performs at least once the Y-direction drive action; or if an image stabilization requirement needs to be met by moving the camera lens 10 in the X direction and moving the camera lens 10 in the Y direction, the XY-direction piezoelectric driver 31 performs at least once the XY-direction drive action. In some application scenarios, the X-direction drive action, the Y-direction drive action, and the XY-direction drive action may alternatively be combined, to better meet a displacement requirement required by optical image stabilization. Drive strokes and quantities of drive times of the X-direction drive action, the Y-direction drive action, and the XY-direction drive action may be designed based on an image stabilization requirement. For a design manner, refer to the foregoing embodiments, and details are not described herein again.

In some embodiments, the X-direction drive action includes: The XY-direction base block 311 extends, and the XY-direction touch block 314 abuts against the frame 22; the X-direction extend block 312 extends or contracts, and the XY-direction touch block 314 drives the frame 22 to move in the X direction; the XY-direction base block 311 contracts, and the XY-direction touch block 314 leaves the frame 22; and the X-direction extend block 312 contracts or extends, and the XY-direction touch block 314 moves back to an initial location. In this embodiment, the Y-direction extend block 313 keeps a specific length, and the Y-direction extend block 313 may not be powered on, or the ninth electrical signal is in a state in which a current does not change. It may be understood that, when the X-direction drive action is performed once, the X-direction extend block 312 performs the extending action once and the contracting action once, and when the X-direction drive action is performed for a plurality of times, the extending action and the contracting action of the X-direction extend block 312 are alternately performed.

In some embodiments, the Y-direction drive action includes: The XY-direction base block 311 extends, and the XY-direction touch block 314 abuts against the frame 22; the Y-direction extend block 313 extends or contracts, and the XY-direction touch block 314 drives the frame 22 to move in the Y direction; the XY-direction base block 311 contracts, and the XY-direction touch block 314 leaves the frame 22; and the Y-direction extend block 313 contracts or extends, and the XY-direction touch block 314 moves back to an initial location. In this embodiment, the X-direction extend block 312 keeps a specific length, and the X-direction extend block 312 may not be powered on, or the eighth electrical signal is in a state in which a current does not change. When the Y-direction drive action is performed once, the Y-direction extend block 313 performs the extending action once and the contracting action once, and when the Y-direction drive action is performed for a plurality of times, the extending action and the contracting action of the Y-direction extend block 313 are alternately performed.

In some embodiments, the XY-direction drive action includes: The XY-direction base block 311 extends to drive the XY-direction touch block 314 to abut against the frame 22; the X-direction extend block 312 extends or contracts, and the Y-direction extend block 313 extends or contracts, to drive the XY-direction touch block 314 to drive the frame 22 to move on the XY plane, where the XY plane is perpendicular to the Z direction; the XY-direction base block 311 contracts to drive the XY-direction touch block 314 to leave the frame 22; and the X-direction extend block 312 contracts or extends, and the Y-direction extend block 313 contracts or extends, to drive the XY-direction touch block 314 to move back to an initial location. When the X-direction extend block 312 extends, the Y-direction extend block 313 may extend or contract. When the X-direction extend block 312 contracts, the Y-direction extend block 313 may extend or contract. When the XY-direction drive action is performed once, the X-direction extend block 312 performs the extending action once and the contracting action once, and the Y-direction extend block 313 performs the extending action once and the contracting action once, and when the XY-direction drive action is performed for a plurality of times, the extending action and the contracting action of the X-direction extend block 312 are alternately performed, and the extending action and the contracting action of the Y-direction extend block 313 are alternately performed.

When a phase difference between the eighth electrical signal and the seventh electrical signal changes, a direction in which the X-direction drive action drives the frame 22 to move changes, so that the X-direction drive action drives the frame 22 to implement a bidirectional movement in the X direction, so as to meet a displacement requirement of optical image stabilization. When a phase difference between the ninth electrical signal and the seventh electrical signal changes, a direction in which the Y-direction drive action drives the frame 22 to move changes, so that the Y-direction drive action drives the frame 22 to implement a bidirectional movement in the Y direction, so as to meet a displacement requirement of optical image stabilization.

A deformation action of the XY-direction base block 311, a deformation action of the X-direction extend block 312, and a deformation action of the Y-direction extend block 313 may be performed non-synchronously, or may be performed synchronously, and may be controlled by designing a current waveform of the seventh electrical signal, a current waveform of the eighth electrical signal and a current waveform of the ninth electrical signal.

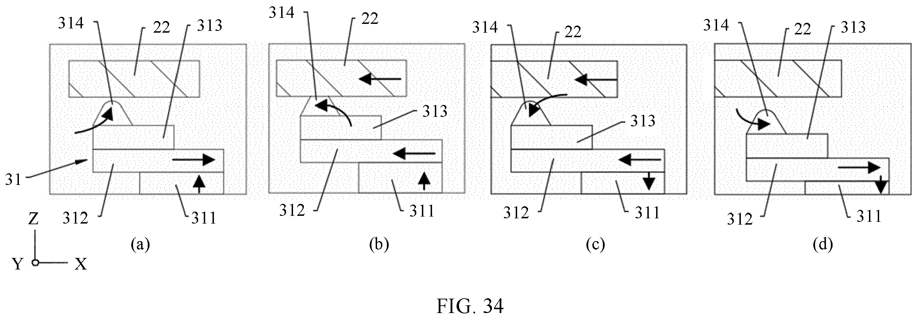

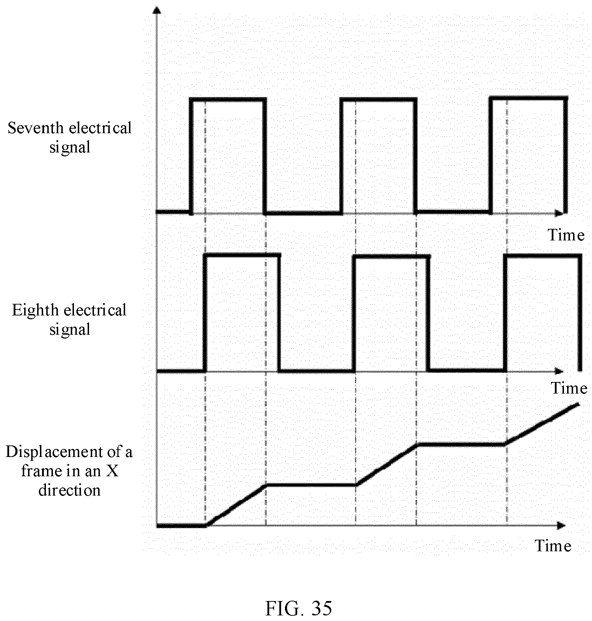

FIG. 34 is a schematic diagram of movement of an X-direction drive action of the XY-direction piezoelectric driver 31 shown in FIG. 31 in a use state, and FIG. 35 is a schematic diagram of a current waveform of an electrical signal and displacement of the frame 22 that are corresponding to the X-direction drive action shown in FIG. 34.

In some embodiments, a deformation action of the XY-direction base block 311 and a deformation action of the X-direction extend block 312 are performed synchronously. The seventh electrical signal and the eighth electrical signal may be pulse width modulation (pulse width modulation, PWM) signals. When a current of the seventh electrical signal is at a wave peak, the XY-direction base block 311 extends. When the current of the seventh electrical signal is at a wave trough, the XY-direction base block 311 contracts. When a current of the eighth electrical signal is at a wave peak, the X-direction extend block 312 extends. When the current of the eighth electrical signal is at a wave trough, the X-direction extend block 312 contracts.

In a use state, as shown in FIG. 35, when the seventh electrical signal is at a wave peak, the eighth electrical signal is first at a wave trough and then changes to a wave peak. Correspondingly, the XY-direction piezoelectric driver 31 first implements an action in (a) in FIG. 34, that is, the XY-direction base block 311 extends, and the X-direction extend block 312 contracts, so that the XY-direction touch block 314 moves along a first arc track. The XY-direction touch block 314 approaches the frame 22, and then implements an action in (b) in FIG. 34, that is, the XY-direction base block 311 continues to extend, and the X-direction extend block 312 extends, so that the XY-direction touch block 314 moves along a second arc track, and the XY-direction touch block 314 abuts against the frame 22 and drives the frame 22 to move leftward in the X direction. As shown in FIG. 35, when the seventh electrical signal is at a wave trough, the eighth electrical signal is first at a wave peak and then changes to a wave trough. Correspondingly, the XY-direction piezoelectric driver 31 first implements an action in (c) in FIG. 34, that is, the XY-direction base block 311 contracts, and the X-direction extend block 312 continues to extend, so that the XY-direction touch block 314 moves along a third arc track. The XY-direction touch block 314 leaves the frame 22, and then implements an action in (d) in FIG. 34, that is, the XY-direction base block 311 continues to contract, and the X-direction extend block 312 contracts, so that the XY-direction touch block 314 moves along a fourth arc track, and the XY-direction touch block 314 moves back to the initial location. The first arc track, the second arc track, the third arc track, and the fourth arc track are jointly spliced into an elliptical track, so that the X-direction drive action of the XY-direction piezoelectric driver 31 is in an elliptical track.

Under control of the seventh electrical signal and the eighth electrical signal, the XY-direction piezoelectric driver 31 performs the X-direction drive action a plurality of times, and may drive the XY-direction touch block 314 to implement an ellipsis a plurality of times, to periodically squeeze and drive the frame 22 to move, leave the frame 22, and return to the initial location, so as to drive the frame 22 to drive the camera lens 10 to move in the X direction continuously, to meet a displacement requirement of optical image stabilization.

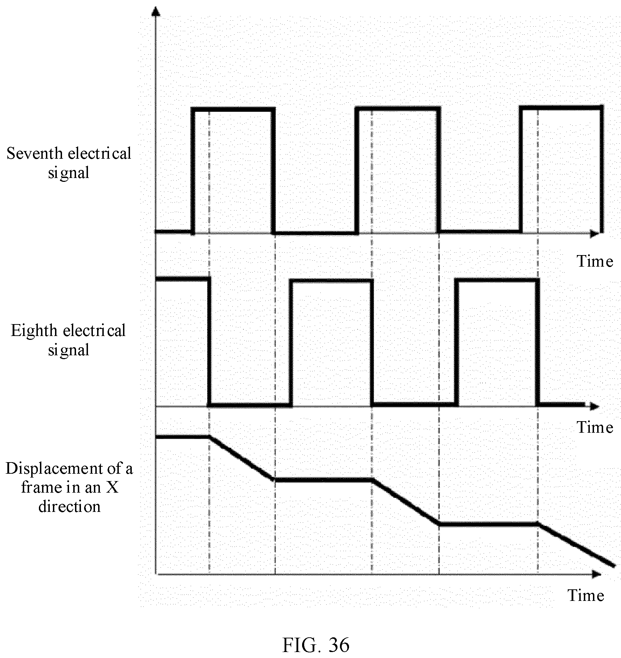

FIG. 36 is a schematic diagram of a current waveform of an electrical signal and displacement of the frame 22 that are corresponding to an X-direction drive action of the XY-direction piezoelectric driver 31 shown in FIG. 31 in another use state.

In another use state, a phase difference between the seventh electrical signal and the eighth electrical signal may be changed, so that the X-direction drive action of the XY-direction piezoelectric driver 31 drives the frame 22 to move in an opposite direction. As shown in FIG. 36, when the seventh electrical signal is at a wave peak, the eighth electrical signal is first at a wave peak and then changed to a wave trough; and when the seventh electrical signal is at a wave trough, the eighth electrical signal is first at a wave trough and then changed to a wave peak. A phase of the seventh electrical signal in FIG. 36 is the same as a phase of the seventh electrical signal in FIG. 35, a phase of the eighth electrical signal in FIG. 36 is opposite to a phase of the eighth electrical signal in FIG. 35, and a displacement direction of the frame 22 in the X direction in FIG. 36 is opposite to a displacement direction of the frame 22 in the X direction in FIG. 35.

In some other embodiments, a deformation action of the XY-direction base block 311 and a deformation action of the X-direction extend block 312 may alternatively be performed non-synchronously. For example, in an X-direction drive action, the XY-direction base block 311 first extends, so that the XY-direction touch block 314 moves upward to approach the frame 22; after the XY-direction touch block 314 abuts against the frame 22, the X-direction extend block 312 extends, so that the XY-direction touch block 314 drives the frame 22 to move; then, the XY-direction base block 311 contracts, so that the XY-direction touch block 314 moves downward to leave the frame 22; and finally, the X-direction extend block 312 contracts, so that the XY-direction touch block 314 moves back to the initial location.

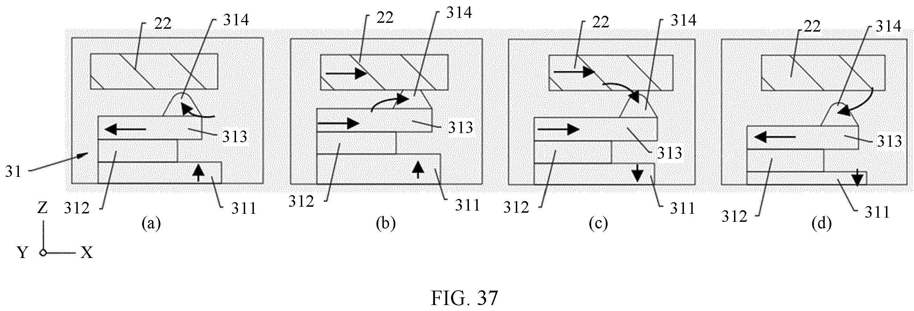

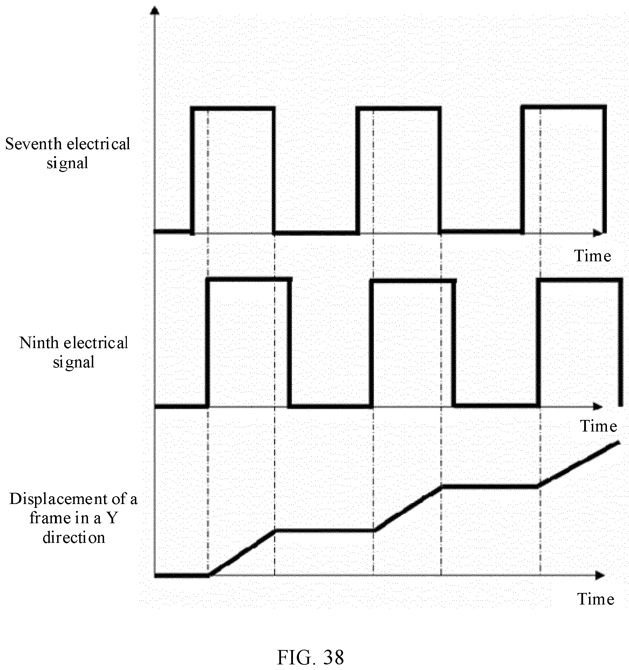

FIG. 37 is a schematic diagram of movement of a Y-direction drive action of the XY-direction piezoelectric driver 31 shown in FIG. 31 in another use state, and FIG. 38 is a schematic diagram of a current waveform of an electrical signal and displacement of the frame 22 that are corresponding to the Y-direction drive action shown in FIG. 37.

In some embodiments, a deformation action of the XY-direction base block 311 and a deformation action of the Y-direction extend block 313 are performed synchronously. The seventh electrical signal and the ninth electrical signal may be pulse width modulation (pulse width modulation, PWM) signals. When a current of the seventh electrical signal is at a wave peak, the XY-direction base block 311 extends. When the current of the seventh electrical signal is at a wave trough, the XY-direction base block 311 contracts. When a current of the ninth electrical signal is at a wave peak, the Y-direction extend block 313 extends. When the current of the ninth electrical signal is at a wave trough, the Y-direction extend block 313 contracts.

In a use state, as shown in FIG. 38, when the seventh electrical signal is at a wave peak, the ninth electrical signal is first at a wave trough and then changes to a wave peak. Correspondingly, the XY-direction piezoelectric driver 31 first implements an action in (a) in FIG. 37, that is, the XY-direction base block 311 extends, and the Y-direction extend block 313 contracts, so that the XY-direction touch block 314 moves along a first arc track. The XY-direction touch block 314 approaches the frame 22, and then implements an action in (b) in FIG. 37, that is, the XY-direction base block 311 continues to extend, and the Y-direction extend block 313 extends, so that the XY-direction touch block 314 moves along a second arc track, and the XY-direction touch block 314 abuts against the frame 22 and drives the frame 22 to move leftward in the Y direction. As shown in FIG. 38, when the seventh electrical signal is at a wave trough, the ninth electrical signal is first at a wave peak and then changes to a wave trough. Correspondingly, the XY-direction piezoelectric driver 31 first implements an action in (c) in FIG. 37, that is, the XY-direction base block 311 contracts, and the Y-direction extend block 313 continues to extend, so that the XY-direction touch block 314 moves along a third arc track. The XY-direction touch block 314 leaves the frame 22, and then implements an action in (d) in FIG. 37, that is, the XY-direction base block 311 continues to contract, and the Y-direction extend block 313 contracts, so that the XY-direction touch block 314 moves along a fourth arc track, and the XY-direction touch block 314 moves back to the initial location. The first arc track, the second arc track, the third arc track, and the fourth arc track are jointly spliced into an elliptical track, so that the Y-direction drive action of the XY-direction piezoelectric driver 31 is in an elliptical track.

Under control of the seventh electrical signal and the ninth electrical signal, the XY-direction piezoelectric driver 31 performs the Y-direction drive action a plurality of times, and may drive the XY-direction touch block 314 to implement an ellipsis a plurality of times, to periodically squeeze and drive the frame 22 to move, leave the frame 22, and return to the initial location, so as to drive the frame 22 to drive the camera lens 10 to move in the Y direction continuously, to meet a displacement requirement of optical image stabilization.

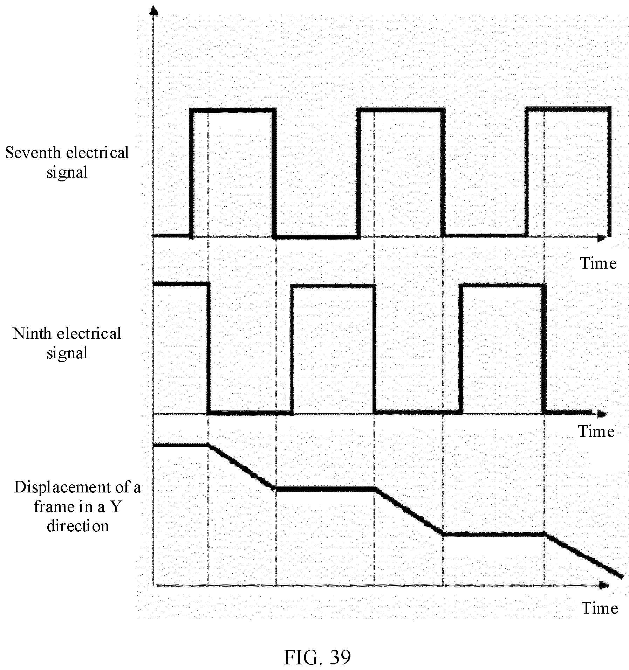

FIG. 39 is a schematic diagram of a current waveform of an electrical signal and displacement of the frame 22 that are corresponding to a Y-direction drive action of the XY-direction piezoelectric driver 31 shown in FIG. 31 in another use state.

In another use state, a phase difference between the seventh electrical signal and the ninth electrical signal may be changed, so that the Y-direction drive action of the XY-direction piezoelectric driver 31 drives the frame 22 to move in an opposite direction. As shown in FIG. 39, when the seventh electrical signal is at a wave peak, the ninth electrical signal is first at a wave peak and then changed to a wave trough; and when the seventh electrical signal is at a wave trough, the ninth electrical signal is first at a wave trough and then changed to a wave peak. A phase of the seventh electrical signal in FIG. 39 is the same as a phase of the seventh electrical signal in FIG. 38, a phase of the ninth electrical signal in FIG. 39 is opposite to a phase of the ninth electrical signal in FIG. 38, and a displacement direction of the frame 22 in the Y direction in FIG. 39 is opposite to a displacement direction of the frame 22 in the Y direction in FIG. 38.

In some other embodiments, a deformation action of the XY-direction base block 311 and a deformation action of the Y-direction extend block 313 may alternatively be performed non-synchronously. For example, in a Y-direction drive action, the XY-direction base block 311 first extends, so that the XY-direction touch block 314 moves upward to approach the frame 22; after the XY-direction touch block 314 abuts against the frame 22, the Y-direction extend block 313 extends, so that the XY-direction touch block 314 drives the frame 22 to move; then, the XY-direction base block 311 contracts, so that the XY-direction touch block 314 moves downward to leave the frame 22; and finally, the Y-direction extend block 313 contracts, so that the XY-direction touch block 314 moves back to the initial location.

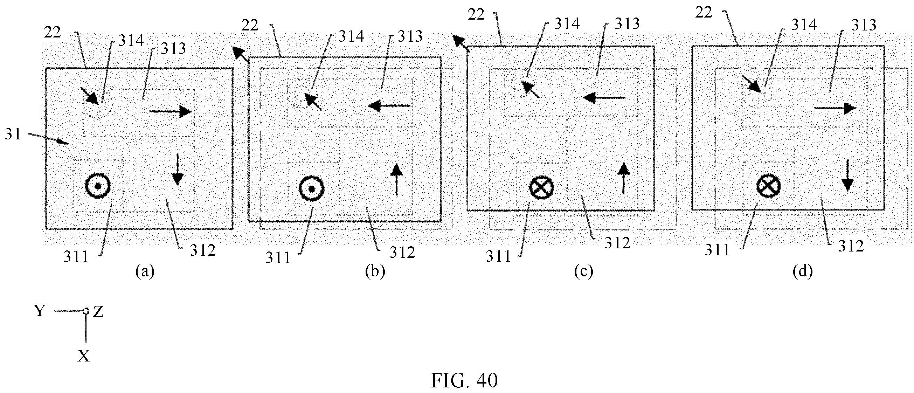

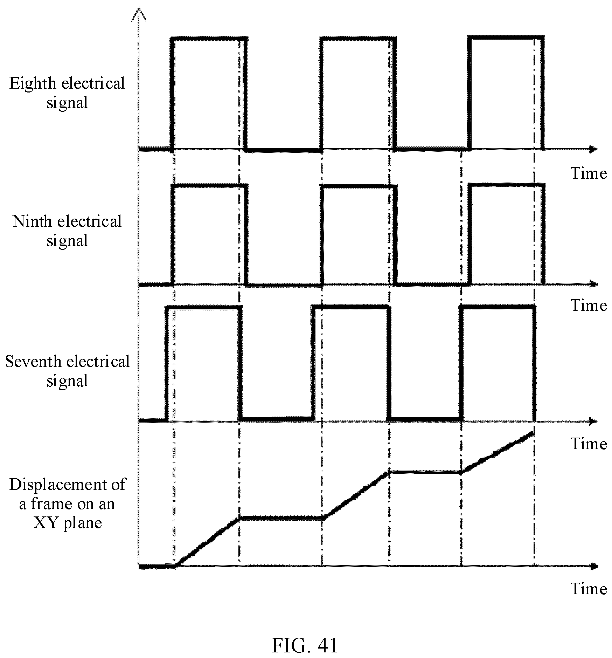

FIG. 40 is a schematic diagram of movement of an XY-direction drive action of the XY-direction piezoelectric driver 31 shown in FIG. 31 in another use state, and FIG. 41 is a schematic diagram of a current waveform of an electrical signal and displacement of the frame 22 that are corresponding to the XY-direction drive action shown in FIG. 40.

In some embodiments, a deformation action of the XY-direction base block 311, a deformation action of the X-direction extend block 312, and a deformation action of the Y-direction extend block 313 are performed synchronously. The seventh electrical signal, the eighth electrical signal, and the ninth electrical signal may be pulse width modulation (pulse width modulation, PWM) signals. When a current of the seventh electrical signal is at a wave peak, the XY-direction base block 311 extends. When the current of the seventh electrical signal is at a wave trough, the XY-direction base block 311 contracts. When a current of the eighth electrical signal is at a wave peak, the X-direction extend block 312 extends. When the current of the eighth electrical signal is at a wave trough, the X-direction extend block 312 contracts. When a current of the ninth electrical signal is at a wave peak, the Y-direction extend block 313 extends. When the current of the ninth electrical signal is at a wave trough, the Y-direction extend block 313 contracts.

In a use state, as shown in FIG. 41, when the seventh electrical signal is at a wave peak, the eighth electrical signal and the ninth electrical signal each are first at a wave trough and then change to a wave peak. Correspondingly, the XY-direction piezoelectric driver 31 first implements an action in (a) in FIG. 40, that is, the XY-direction base block 311 extends, the X-direction extend block 312 contracts, and the Y-direction extend block 313 contracts. The XY-direction touch block 314 approaches the frame 22, and then implements an action in (b) in FIG. 40, that is, the XY-direction base block 311 continues to extend, the X-direction extend block 312 extends, and the Y-direction extend block 313 extends, so that the XY-direction touch block 314 abuts against the frame 22 and drives the frame 22 to move toward an upper left corner. As shown in FIG. 41, when the seventh electrical signal is at a wave trough, the eighth electrical signal and the ninth electrical signal each are first at a wave peak and then change to a wave trough. Correspondingly, the XY-direction piezoelectric driver 31 first implements an action in (c) in FIG. 40, that is, the XY-direction base block 311 contracts, the X-direction extend block 312 continues to extend, and the Y-direction extend block 313 continues to extend. The XY-direction touch block 314 leaves the frame 22, and then implements an action in (d) in FIG. 40, that is, the XY-direction base block 311 continues to contract, the X-direction extend block 312 contracts, and the Y-direction extend block 313 contracts, so that the XY-direction touch block 314 moves toward a lower right corner to move back to the initial location.

Under control of the seventh electrical signal, the eighth electrical signal, and the ninth electrical signal, the XY-direction piezoelectric driver 31 performs the Y-direction drive action a plurality of times, and may drive the XY-direction touch block 314 to implement an ellipsis a plurality of times, to periodically squeeze and drive the frame 22 to move, leave the frame 22, and return to the initial location, so as to drive the frame 22 to drive the camera lens 10 to move on the XY plane continuously, to meet a displacement requirement of optical image stabilization.

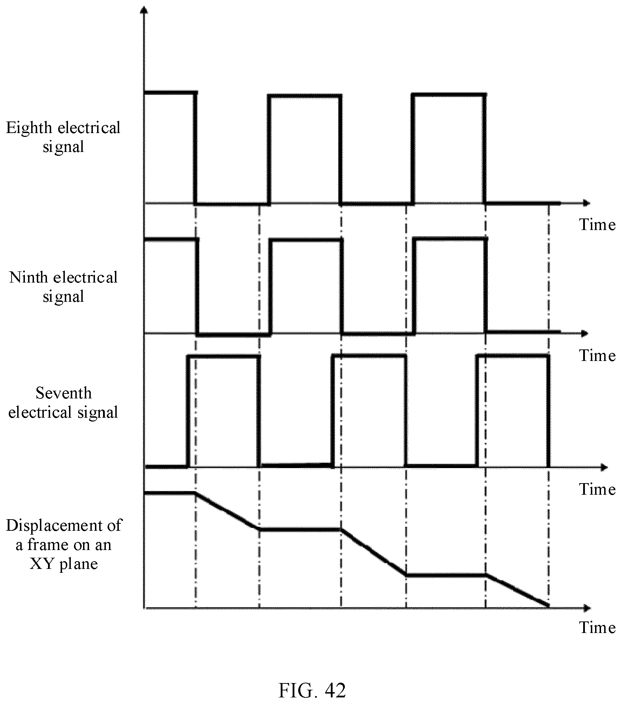

FIG. 42 is a schematic diagram of a current waveform of an electrical signal and displacement of the frame 22 that are corresponding to a Y-direction drive action of the XY-direction piezoelectric driver 31 shown in FIG. 31 in another use state.

In another use state, a phase difference between the eighth electrical signal and the ninth electrical signal, and the seventh electrical signal may be changed, so that the XY-direction drive action of the XY-direction piezoelectric driver 31 drives the frame 22 to move in an opposite direction. As shown in FIG. 42, when the seventh electrical signal is at a wave peak, the eighth electrical signal and the ninth electrical signal each are first at a wave peak and then changed to a wave trough; and when the seventh electrical signal is at a wave trough, the eighth electrical signal and the ninth electrical signal each are first at a wave trough and then changed to a wave peak. A phase of the seventh electrical signal in FIG. 42 is the same as a phase of the seventh electrical signal in FIG. 41, a phase of the eighth electrical signal in FIG. 42 is opposite to a phase of the eighth electrical signal in FIG. 41, a phase of the ninth electrical signal in FIG. 42 is opposite to a phase of the ninth electrical signal in FIG. 41, and a displacement direction of the frame 22 on the XY plane in FIG. 42 is opposite to a displacement direction of the frame 22 on the XY plane in FIG. 41.

In some other embodiments, a deformation action of the XY-direction base block 311, a deformation action of the X-direction extend block 312, and a deformation action of the Y-direction extend block 313 may alternatively be performed non-synchronously. For example, in a Y-direction drive action, the XY-direction base block 311 first extends, so that the XY-direction touch block 314 moves upward to approach the frame 22; after the XY-direction touch block 314 abuts against the frame 22, the X-direction extend block 312 extends, and the Y-direction extend block 313 extends, so that the XY-direction touch block 314 drives the frame 22 to move; then, the XY-direction base block 311 contracts, so that the XY-direction touch block 314 moves downward to leave the frame 22; and finally, the X-direction extend block 312 contracts, and the Y-direction extend block 313 contracts, so that the XY-direction touch block 314 moves back to the initial location.

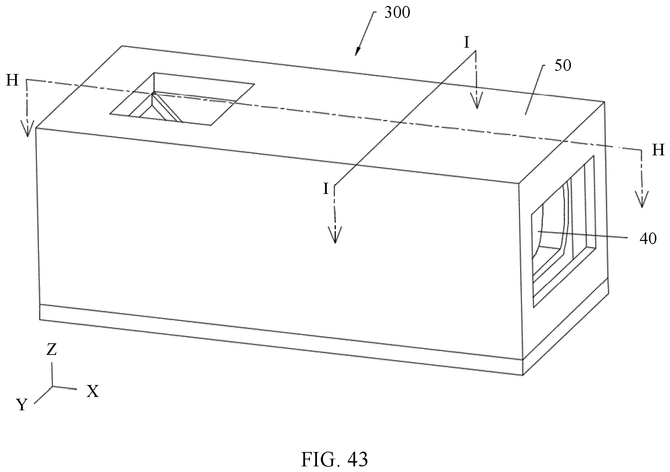

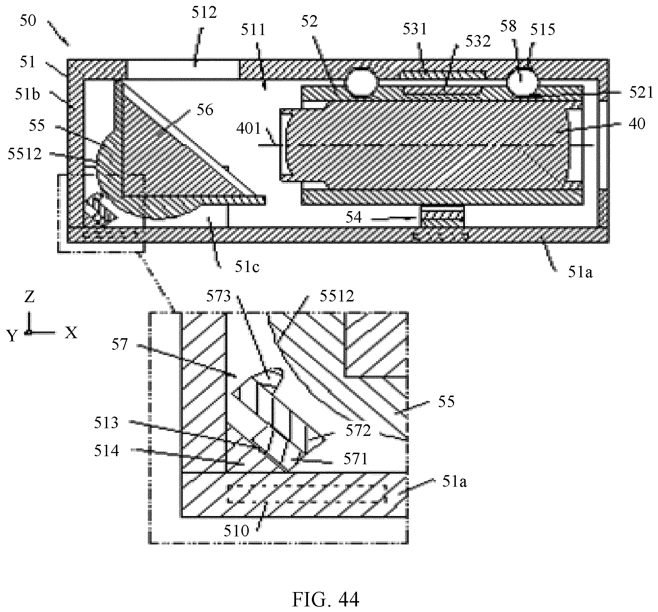

FIG. 43 is a schematic diagram of a structure of another camera module 300 according to an embodiment of this application. FIG. 44 is a schematic sectional view of the camera module 300 shown in FIG. 43 cut along H-H. The camera module 300 in this embodiment is a periscope camera module. The camera module 300 in this embodiment may include some features of the camera module 200 in the foregoing embodiment, and most content that is the same between the camera module 300 and the camera module 200 in the foregoing embodiment is not described herein again. The following mainly describes main differences between the two. The camera module 300 shown in FIG. 43 may be used as a rear-facing camera 102 of the electronic device 100 in this embodiment. In some other embodiments, the camera module 300 may alternatively be used as a front-facing camera of the electronic device 100. This is not strictly limited in this application.

In some embodiments, the camera module 300 includes a camera lens 40 and an ultrasonic piezoelectric motor 50, and the camera lens 40 is installed on the ultrasonic piezoelectric motor 50. The ultrasonic piezoelectric motor 50 may drive the camera lens 40 to move in a Y direction, so that the camera lens 40 implements Y-direction image stabilization. The ultrasonic piezoelectric motor 50 may further drive the camera lens 40 to rotate around the Y direction (that is, rotate on an XZ plane perpendicular to the Y direction), so that the camera lens 40 implements auto focus and X-direction image stabilization. Therefore, the camera module 300 can implement auto focus and optical image stabilization.

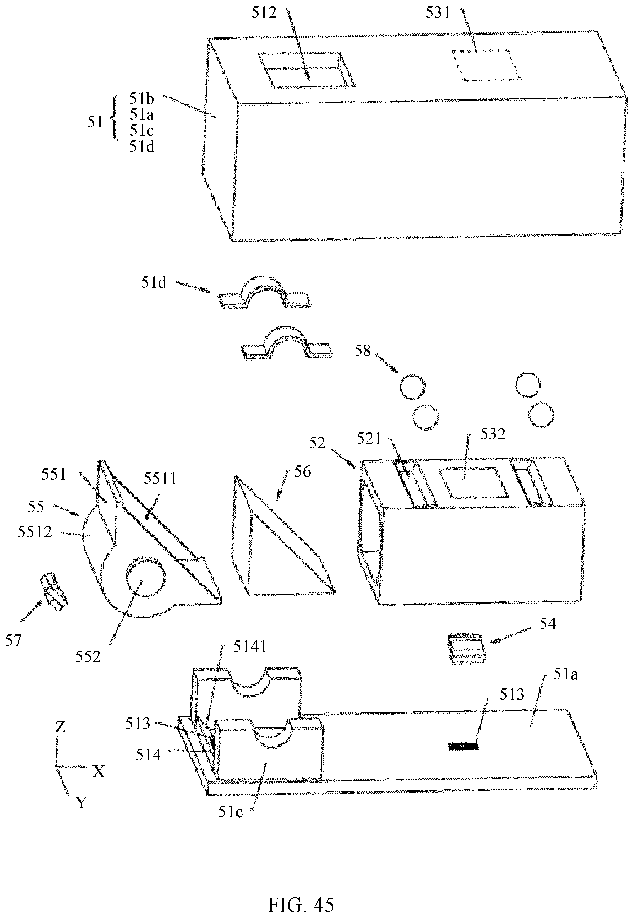

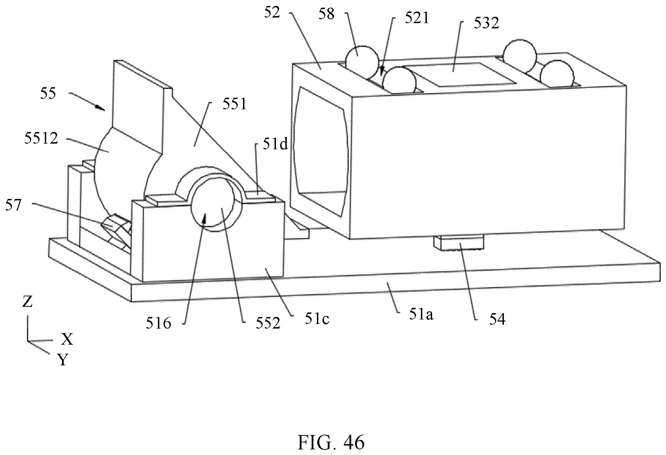

Refer to FIG. 44 to FIG. 46 together. FIG. 45 is a schematic diagram of an exploded structure of an ultrasonic piezoelectric motor 50 of the camera module 300 shown in FIG. 43. FIG. 46 is a schematic diagram of a partial structure of an ultrasonic piezoelectric motor 50 of the camera module 300 shown in FIG. 43.

In some embodiments, the ultrasonic piezoelectric motor 50 includes a bracket 51, a carrier 52, a fifth magnetic member 531, a sixth magnetic member 532, a Y-direction piezoelectric driver 54, a rotating frame 55, a reflector 56, an XZ-direction piezoelectric driver 57, and at least one third ball 58.

The bracket 51 is provided with installation space 511 and a light-passing hole 512 communicating with the installation space 511. For example, the bracket 51 may include a bearing plate 51a and a cover body 51b. The cover body 51b is fastened to a circumference of the bearing plate 51a, and the cover body 51b and the bearing plate 51a jointly enclose the installation space 511. A solder pad 513 is disposed on the bearing plate 51a. For example, the bearing plate 51a may be a circuit board, a conducting wire is formed in the bearing plate 51a, and the conducting wire is electrically connected to the solder pad 513. Alternatively, the bearing plate 51a may be a structural plate, and a circuit board is disposed on the bearing plate 51a. The circuit board includes a solder pad 513, and the solder pad 513 is exposed relative to the bearing plate 51a.

The bracket 51 may further include a support frame 51c, the support frame 51c is located in the installation space 511, and the support frame 51c is fastened to the bearing plate 51a. For example, the support frame 51c and the bearing plate 51a may be an integrally-formed structure, or may be assembled to form an integrated structure. The bearing plate 51a has a protruding fixed block 514, the fixed block 514 has an inclined surface 5141 facing a top end of the support frame 51c, and one solder pad 513 of the bearing plate 51a is located on the inclined surface 5141.

The light-passing hole 512 is provided on the cover body 51b. The fifth magnetic member 531 is embedded in the bracket 51. For example, the fifth magnetic member 531 may be embedded in the cover body 51b. For example, a guide groove 515 may be further provided on the cover body 51b of the bracket 51. For example, there are two guide grooves 515, and the two guide grooves 515 are respectively located on two sides of the fifth magnetic member 531. The guide groove 515 may extend in the Y direction.

The carrier 52 is disposed in the installation space 511 and can move in the Y direction relative to the bracket 51. The carrier 52 is configured to install the camera lens 40, and the Y direction is perpendicular to an optical axis 401 of the camera lens 40. For example, the carrier 52 may be of a tubular structure, and the camera lens 40 is installed on an inner side of the carrier 52. For example, a guide groove 521 may be further disposed on the carrier 52. The guide groove 521 of the carrier 52 is disposed opposite to the guide groove 515 of the bracket 51.

The sixth magnetic member 532 is embedded in the carrier 52, the sixth magnetic member 532 and the fifth magnetic member 531 are attracted to each other, and the carrier 52 is slidably connected to the bracket 51. In this case, a magnetic attraction force between the sixth magnetic member 532 and the fifth magnetic member 531 enables the carrier 52 and the bracket 51 to be attracted to each other, a sliding connection relationship between the carrier 52 and the bracket 51 is stable and reliable, and the carrier 52 and the bracket 51 can be self-locked by friction, so that stability of image stabilization of the camera module 300 is high.

The at least one third ball 58 is located between the carrier 52 and the bracket 51, and when the carrier 52 slides relative to the bracket 51, the at least one third ball 58 rolls. The third ball 58 is partially located in the guide groove 521 of the carrier 52, and partially located in the guide groove 515 of the bracket 51.

The rotating frame 55 is installed in the installation space 511 and can rotate around the Y direction relative to the bracket 51. In other words, the rotating frame 55 can rotate on the XZ plane. For example, the rotating frame 55 includes a rotating body 551 and a rotating shaft 552 fastened to the rotating body 551, and the rotating shaft 552 is rotatably connected to the support frame 51c. For example, the bracket 51 may further include a fastening member 51d, the fastening member 51d is fastened to the support frame 51c and forms a rotating shaft hole 516 together with the support frame 51c, and the rotating shaft 552 is inserted into the rotating shaft hole 516, so that the rotating frame 55 is rotatably connected to the bracket 51. For example, there is a fastening groove 5511 and a touch surface 5512 on the rotating body 551 of the rotating frame 55, the touch surface 5512 is disposed back to the fastening groove 5511, and the touch surface 5512 is a curved surface.

The reflector 56 is fastened to the rotating frame 55, and the reflector 56 is configured to reflect a light ray from the light-passing hole 512 to the camera lens 40. For example, the reflector 56 may be installed in the fastening groove 5511 of the rotating frame 55. For example, the reflector 56 may be a prism or a reflector mirror. A shape of the fastening groove 5511 of the rotating frame 55 is adapted to a shape of the reflector 56.

The Y-direction piezoelectric driver 54 is located between the bracket 51 and the carrier 52. The Y-direction piezoelectric driver 54 is located in the installation space 511 and is fastened to the bracket 51. For example, the Y-direction piezoelectric driver 54 may be located between the carrier 52 and the bearing plate 51a, and the Y-direction piezoelectric driver 54 is fastened to the bearing plate 51a. The Y-direction piezoelectric driver 54 is configured to drive the carrier 52 to drive the camera lens 40 to move in the Y direction, so that the camera module 300 implements Y-direction image stabilization.

The XZ-direction piezoelectric driver 57 is located between the bracket 51 and the rotating frame 55. The XZ-direction piezoelectric driver 57 is located in the installation space 511 and is fastened to the bracket 51. For example, the XZ-direction piezoelectric driver 57 may be located between the rotating frame 55 and the bearing plate 51a, and the XZ-direction piezoelectric driver 57 is fastened to the bearing plate 51a. The XZ-direction piezoelectric driver 57 is configured to drive the rotating frame 55 to drive the reflector 56 to move around the Y direction, so that the camera module 300 implements auto focus and X-direction image stabilization.

In this embodiment, the ultrasonic piezoelectric motor 50 drives the carrier 52 by using the Y-direction piezoelectric driver 54, to drive the camera lens 40 to move in the Y direction, and drives the rotating frame 55 by using the XZ-direction piezoelectric driver 57, to drive the reflector 56 to rotate around the Y direction, so that the camera module 300 can implement auto focus and optical image stabilization.

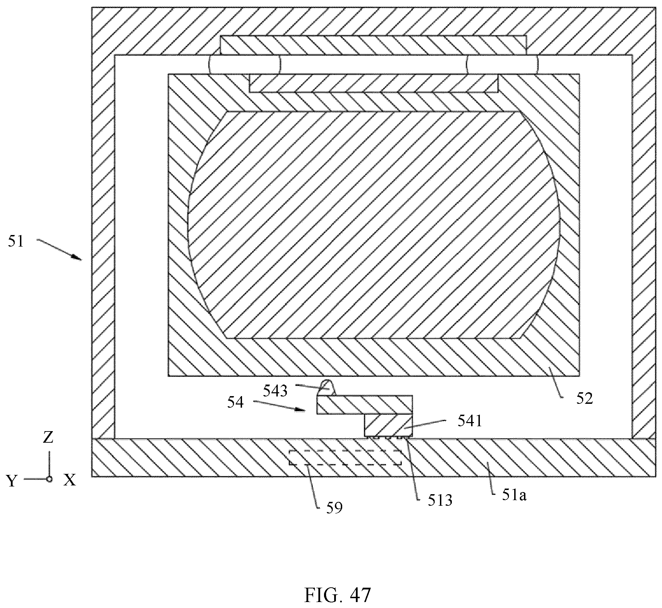

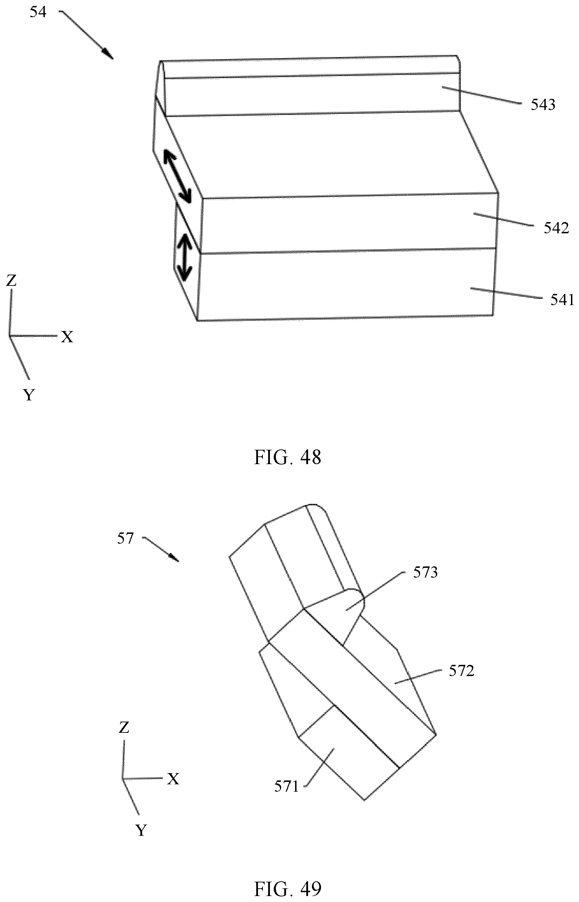

FIG. 47 is a schematic sectional view of the camera module 300 shown in FIG. 43 cut along I-I, and FIG. 48 is a schematic diagram of a structure of a Y-direction piezoelectric driver 54 of the ultrasonic piezoelectric motor 50 shown in FIG. 45.

In some embodiments, the Y-direction piezoelectric driver 54 includes a Y-direction base block 541, a Y-direction extend block 542, and a Y-direction touch block 543. One end of the Y-direction base block 541 is fastened to the bracket 51, one end of the Y-direction extend block 542 is fastened to the other end of the Y-direction base block 541, and the Y-direction touch block 543 is fastened to the other end of the Y-direction extend block 542. The Y-direction base block 541, the Y-direction extend block 542, and the Y-direction touch block 543 are stacked. For example, the Y-direction base block 541 is soldered on one solder pad 513 on the bearing plate 51a, to electrically connect to the circuit on the bearing plate 51a. The Y-direction base block 541 may further be bonded to the bearing plate 51a, to implement a firm structural connection to the bearing plate 51a by soldering and bonding. The Y-direction base block 541 is configured to deform based on a tenth electrical signal, so as to drive the Y-direction touch block 543 to abut against the carrier 52 or leave the carrier 52. The Y-direction extend block 542 is configured to deform based on an eleventh electrical signal, to drive the Y-direction touch block 543 to move in the Y direction. When the Y-direction touch block 543 abuts against the carrier 52 and the Y-direction extend block 542 deforms, the Y-direction touch block 543 drives the carrier 52 to move in the Y direction.

The ultrasonic piezoelectric motor 50 further includes a Y-direction drive circuit 59. The Y-direction drive circuit 59 may be formed on the bearing plate 51a, or may be fastened and electrically connected to the bearing plate 51a. The Y-direction drive circuit 59 is electrically connected to the Y-direction piezoelectric driver 54. The Y-direction drive circuit 59 is configured to generate the tenth electrical signal and the eleventh electrical signal based on an image stabilization signal, so that the Y-direction piezoelectric driver 54 performs at least once a Y-direction drive action.

In some embodiments, the Y-direction drive action includes: The Y-direction base block 541 extends to drive the Y-direction touch block 543 to abut against the carrier 52; the Y-direction extend block 542 extends or contracts to drive the Y-direction touch block 543 to drive the carrier 52 to move in the Y direction; the Y-direction base block 541 contracts to drive the Y-direction touch block 543 to leave the carrier 52; and the Y-direction extend block 542 contracts or extends to drive the Y-direction touch block 543 to move back to an initial location. A deformation action of the Y-direction base block 541 and a deformation action of the Y-direction extend block 542 may be performed non-synchronously, or may be performed synchronously.

For related designs such as a structure, a drive action, and a drive signal of the Y-direction piezoelectric driver 54 in this embodiment, refer to related descriptions of another four-axis piezoelectric driver in the foregoing embodiment. Details are not described herein again.

FIG. 49 is a schematic diagram of a structure of an XZ-direction piezoelectric driver 57 of the ultrasonic piezoelectric motor 50 shown in FIG. 45.

In some embodiments, the XZ-direction piezoelectric driver 57 includes an XZ-direction base block 571, an XZ-direction extend block 572, and an XZ-direction touch block 573. One end of the XZ-direction base block 571 is fastened to the bracket 51, one end of the XZ-direction extend block 572 is fastened to the other end of the XZ-direction base block 571, and the XZ-direction touch block 573 is fastened to the other end of the XZ-direction extend block 572. The XZ-direction base block 571, the XZ-direction extend block 572, and the XZ-direction touch block 573 are stacked. For example, the XZ-direction base block 571 is soldered on another solder pad 513 on the bearing plate 51a, to electrically connect to the circuit on the bearing plate 51a. The XZ-direction base block 571 may further be bonded to the bearing plate 51a, to implement a firm structural connection to the bearing plate 51a by soldering and bonding. The XZ-direction base block 571 is configured to deform based on a twelfth electrical signal, to drive the XZ-direction touch block 573 to abut against the rotating frame 55 or leave the rotating frame 55. When the XZ-direction touch block 573 abuts against the rotating frame 55, the XZ-direction touch block 573 touches the touch surface 5512 of the rotating frame 55. The XZ-direction extend block 572 is configured to deform based on a thirteenth electrical signal, to drive the XZ-direction touch block 573 to move in an XZ direction, where the XZ direction is perpendicular to the Y direction. When the XZ-direction touch block 573 abuts against the rotating frame 55 and the XZ-direction extend block 572 deforms, the XZ-direction touch block 573 drives the rotating frame 55 to rotate.

The XZ direction is any direction in the XZ plane, and includes an X direction and a Z direction. A location for mounting the XZ-direction piezoelectric driver 57 affects a specific direction of the XZ direction. When a deformation direction of the XZ-direction extend block 572 is parallel to the X direction or the Z direction because the XZ-direction piezoelectric driver 57 is mounted at a first location, the XZ direction corresponds to the X direction or the Z direction. When a deformation direction of the XZ-direction extend block 572 is equivalent to being tilted relative to the X direction and being tilted relative to the Y direction because the XZ-direction piezoelectric driver 57 is mounted at a second location, the XZ direction corresponds to a direction between the X direction and the Z direction.

The ultrasonic piezoelectric motor 50 further includes an XZ-direction drive circuit 510. The XZ-direction drive circuit 510 may be formed on the bearing plate 51a, or may be fastened and electrically connected to the bearing plate 51a. The XZ-direction drive circuit 510 is electrically connected to the XZ-direction piezoelectric driver 57, and the XZ-direction drive circuit 510 is configured to generate the twelfth electrical signal and the thirteenth electrical signal based on an auto focus signal and an image stabilization signal, so that the XZ-direction piezoelectric driver 57 performs at least once an XZ-direction drive action.

In some embodiments, the XZ-direction drive action includes: The XZ-direction base block 571 extends to drive the XZ-direction touch block 573 to abut against the rotating frame 55; the XZ-direction extend block 572 extends or contracts to drive the XZ-direction touch block 573 to move in the XZ direction and drive the rotating frame 55 to rotate around the Y direction; the XZ-direction base block 571 contracts to drive the XZ-direction touch block 573 to leave the rotating frame 55; and the XZ-direction extend block 572 contracts or extends to drive the XZ-direction touch block 573 to move back to an initial location. A deformation action of the XZ-direction base block 571 and a deformation action of the XZ-direction extend block 572 may be performed non-synchronously, or may be performed synchronously.

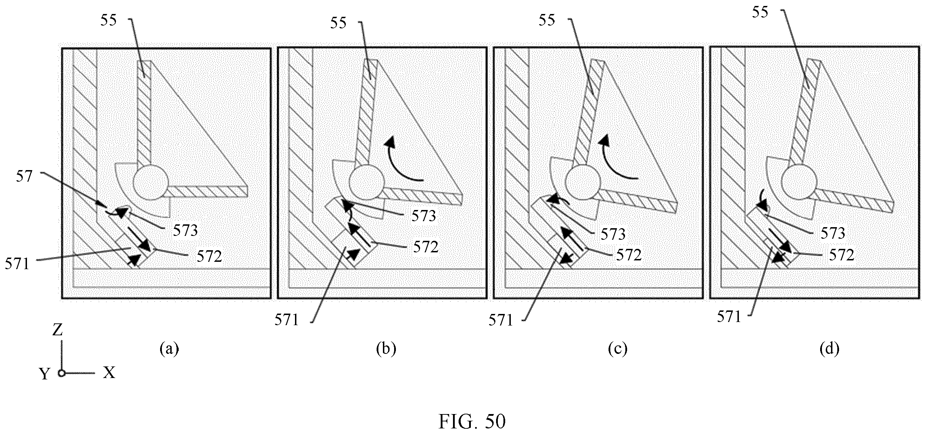

For example, FIG. 50 is a schematic diagram of movement in which the XZ-direction piezoelectric driver 57 shown in FIG. 49 drives the rotating frame 55 to rotate. In some embodiments, a deformation action of the XZ-direction base block 571 and a deformation action of the XZ-direction extend block 572 are performed synchronously. For example, the XZ-direction piezoelectric driver 57 first implements an action in (a) in FIG. 50, that is, the XZ-direction base block 571 extends, and the XZ-direction extend block 572 contracts, so that the XZ-direction touch block 573 moves along a first arc track. The XZ-direction touch block 573 approaches the rotating frame 55, and then implements an action in (b) in FIG. 50, that is, the XZ-direction base block 571 continues to extend, and the XZ-direction extend block 572 extends, so that the XZ-direction touch block 573 moves along a second arc track, the XZ-direction touch block 573 abuts against the rotating frame 55, the XZ-direction touch block 573 moves toward the upper left in the XZ direction, to drive the rotating frame 55 to rotate clockwise. Then, the XZ-direction piezoelectric driver 57 first implements an action in (c) in FIG. 50, that is, the XZ-direction base block 571 contracts, and the XZ-direction extend block 572 continues to extend, so that the XZ-direction touch block 573 moves along a third arc track. The XZ-direction touch block 573 leaves the rotating frame 55, and then implements an action in (d) in FIG. 50, that is, the XZ-direction base block 571 continues to contract, and the XZ-direction extend block 572 contracts, so that the XZ-direction touch block 573 moves along a fourth arc track, and the XZ-direction touch block 573 moves back to the initial location. The first arc track, the second arc track, the third arc track, and the fourth arc track are jointly spliced into an elliptical track, so that the XZ-direction drive action of the XZ-direction piezoelectric driver 57 is in an elliptical track. By changing a phase difference between the twelfth electrical signal and the thirteenth electrical signal, the XZ-direction piezoelectric driver 57 may drive the rotating frame 55 to rotate counterclockwise.

Under control of the twelfth electrical signal and the thirteenth electrical signal, the XZ-direction piezoelectric driver 57 performs the XZ-direction drive action a plurality of times, and may drive the XZ-direction touch block 573 to implement an ellipse a plurality of times, to periodically squeeze and drive the rotating frame 55 to move upward, leave the rotating frame 55, and return to the initial location, so as to drive the rotating frame 55 to move upward in the XZ direction continuously, to meet a displacement requirement of auto focus.

For related designs such as a structure, a drive action, and a drive signal of the XZ-direction piezoelectric driver 57 in this embodiment, refer to related descriptions of another four-axis piezoelectric driver in the foregoing embodiment. Details are not described herein again.

In this application, the ultrasonic piezoelectric motor includes one or more four-axis piezoelectric drivers. The four-axis piezoelectric driver may include two piezoelectric material stacks (that is, a base block and an extend block) whose deformation directions are orthogonal. The two piezoelectric material stacks may be separately driven by inputting electrical signals. When currents of different phases and different amplitudes are respectively input to the two piezoelectric material stacks, the two piezoelectric material stacks periodically deform in the deformation directions, so that a friction member (that is, a touch block) at a head of the four-axis piezoelectric driver implements a synthesized movement of an elliptical track or a rectangular track. The four-axis piezoelectric driver includes the X-direction piezoelectric driver, the Y-direction piezoelectric driver, the Z-direction piezoelectric driver, and the XZ-direction piezoelectric driver in the foregoing embodiments.

In this application, the friction member of the four-axis piezoelectric driver implements an elliptical movement or a rectangular movement, so that the friction member periodically touches and squeezes the frame or the carrier, to drive the frame or the camera lens to move in a straight line. Then, the friction member leaves and no longer touches the frame or the carrier, and returns to an origin point. In this way, the frame or the camera lens is driven to step, so that the camera module implements an optical image stabilization function or an auto focus function.

In this application, a phase difference between the input electrical signals of the two piezoelectric material stacks in the four-axis piezoelectric driver is changed, so that the friction member can move reversely, to implement reverse stepping of the camera lens.

In this application, the ultrasonic piezoelectric motor may alternatively include a six-axis piezoelectric driver. The six-axis piezoelectric driver includes three piezoelectric material stacks (that is, one base block and two extend blocks) whose deformation directions are an X direction, a Y direction, and a Z direction. The three piezoelectric material stacks may be separately driven by inputting electrical signals. When currents of different phases and different amplitudes are respectively input to two or three of the piezoelectric material stacks, the two or three piezoelectric material stacks periodically deform in a deformation direction, so as to implement a synthesized planar elliptical track movement, spatial ellipsoidal track movement, planar rectangular track, or spatial columnar track on a friction member (that is, a touch block) at a head of the six-axis piezoelectric driver.

In this application, cyclic movement of the friction member of the six-axis piezoelectric driver enables the friction member to periodically touch and squeeze the frame, so as to drive the frame to move in a straight line. Then, the friction member leaves and no longer touches the frame, and returns to an origin point. In this way, the frame is driven to step, to implement an optical image stabilization function.

In this application, a phase difference between the input electrical signals of the two or three piezoelectric material stacks in the six-axis piezoelectric driver is changed, so that the friction member can move reversely, to implement reverse stepping of the frame.

In short, embodiments of this application provide a four-axis piezoelectric driver structure and a six-axis piezoelectric driver structure. The ultrasonic piezoelectric motor may include at least one four-axis piezoelectric driver, and may further include a six-axis piezoelectric driver. A deformation direction of a piezoelectric material stack is designed, and locations and quantities of the four-axis piezoelectric drivers (and the six-axis piezoelectric drivers) are properly arranged, so that a plurality of piezoelectric drivers can drive a camera lens to move in a single direction and in a plurality of directions, to implement auto focus and optical image stabilization.

## Claims

1. An ultrasonic piezoelectric motor (20, 50), comprising a frame (22, 51c), a carrier (23, 52), and a Z-direction piezoelectric driver, wherein the carrier (23, 52) is installed on an inner side of the frame (22, 51c) and can move in a Z direction relative to the frame (22, 51c), the carrier (23, 52) is configured to install a camera lens (10, 40), and the Z direction is parallel to an optical axis (10a, 401) of the camera lens (10, 40);
the Z-direction piezoelectric driver is located between the frame (22, 51c) and the carrier (23, 52), the Z-direction piezoelectric driver comprises a Z-direction base block (281), a Z-direction extend block (282), and a Z-direction touch block (283), one end of the Z-direction base block (281) is fastened to the frame (22, 51c), **characterized in that** one end of the Z-direction extend block (282) is fastened to the other end of the Z-direction base block (281), and the Z-direction touch block (283) is fastened to the other end of the Z-direction extend block (282); and
the Z-direction base block (281) is configured to deform based on a first electrical signal to drive the Z-direction touch block (283) to abut against the carrier (23, 52) or leave the carrier (23, 52), and the Z-direction extend block (282) is configured to deform based on a second electrical signal to drive the Z-direction touch block (283) to move in the Z direction, wherein when the Z-direction touch block abuts against the carrier (23, 52) and the Z-direction extend block (282) deforms, the Z-direction touch block (283) drives the carrier (23, 52) to move in the Z direction.

2. The ultrasonic piezoelectric motor (20, 50) according to claim 1, wherein the ultrasonic piezoelectric motor (20, 50) further comprises a Z-direction drive circuit (260), the Z-direction drive circuit (260) is electrically connected to the Z-direction piezoelectric driver, and the Z-direction drive circuit (260) is configured to generate the first electrical signal and the second electrical signal based on an auto focus signal, so that the Z-direction piezoelectric driver performs at least once a Z-direction drive action, wherein the Z-direction drive action comprises:
the Z-direction base block (281) extends to drive the Z-direction touch block (283) to abut against the carrier (23, 52);
the Z-direction extend block (282) extends or contracts to drive the Z-direction touch block (283) to drive the carrier (23, 52) to move in the Z direction;
the Z-direction base block contracts to drive the Z-direction touch block (283) to leave the carrier (23, 52); and
the Z-direction extend block (282) contracts or extends to drive the Z-direction touch block (283) to move back to an initial location.

3. The ultrasonic piezoelectric motor (20, 50) according to claim 1 or 2, wherein the ultrasonic piezoelectric motor (20, 50) further comprises a first magnetic member (2701) and a second magnetic member (2702), the first magnetic member (2701) is embedded in the frame (22, 51c), the second magnetic member (2702) is embedded in the carrier (23, 52), the second magnetic member (2702) and the first magnetic member (2701) are attracted to each other, and the carrier (23, 52) is slidably connected to the frame (22, 51c).

4. The ultrasonic piezoelectric motor (20, 50) according to claim 3, wherein the ultrasonic piezoelectric motor (20, 50) further comprises at least one first ball (26), the at least one first ball (26) is located between the carrier (23, 52) and the frame (22, 51c), and when the carrier slides relative to the frame (22, 51c), the at least one first ball (26) rolls.

5. The ultrasonic piezoelectric motor (20, 50) according to claim 4, wherein the frame (22, 51c) is provided with a first groove (226), an extension direction of the first groove (226) is parallel to the Z direction, the carrier (23, 52) is provided with a second groove (231), the second groove (231) is disposed opposite to the first groove (226), and the first ball (26) is partially located in the first groove (226) and partially located in the second groove (231).

6. The ultrasonic piezoelectric motor (20, 50) according to any one of claims 1 to 5, wherein the ultrasonic piezoelectric motor (20, 50) further comprises a base (21), an X-direction piezoelectric driver, and a Y-direction piezoelectric driver, the frame (22, 51c) is disposed on an inner side of the base (21) and can move in an X direction and a Y direction relative to the base (21), and the X direction, the Y direction, and the Z direction are perpendicular to each other;
the X-direction piezoelectric driver is located between the base (21) and the bracket (51), the X-direction piezoelectric driver comprises an X-direction base block (291), an X-direction extend block (292, 312), and an X-direction touch block (293), one end of the X-direction base block (291) is fastened to the base (21), one end of the X-direction extend block (292, 312) is fastened to the other end of the X-direction base block (291), and the X-direction touch block (293) is fastened to the other end of the X-direction extend block (292, 312);
the X-direction base block (291) is configured to deform based on a third electrical signal to drive the X-direction touch block (293) to abut against the frame (22, 51c) or leave the frame (22, 51c), and the X-direction extend block (292, 312) is configured to deform based on a fourth electrical signal to drive the X-direction touch block (293) to move in the X direction, wherein when the X-direction touch block abuts against the frame (22, 51c) and the X-direction extend block (292, 312) deforms, the X-direction touch block (293) drives the frame (22, 51c) to move in the X direction;
the Y-direction piezoelectric driver is located between the base (21) and the bracket (51), the Y-direction piezoelectric driver comprises a Y-direction base block (541, 2101), a Y-direction extend block (313, 542, 2102), and a Y-direction touch block (543, 2103), one end of the Y-direction base block (541, 2101) is fastened to the base (21), one end of the Y-direction extend block (313, 542, 2102) is fastened to the other end of the Y-direction base block (541, 2101), and the Y-direction touch block (543, 2103) is fastened to the other end of the Y-direction extend block (313, 542, 2102); and
the Y-direction base block (541, 2101) is configured to deform based on a fifth electrical signal to drive the Y-direction touch block (543, 2103) to abut against the frame (22, 51c) or leave the frame (22, 51c), and the Y-direction extend block (313, 542, 2102) is configured to deform based on a sixth electrical signal to drive the Y-direction touch block (543, 2103) to move in the Y direction, wherein when the Y-direction touch block abuts against the frame (22, 51c) and the Y-direction extend block (313, 542, 2102) deforms, the Y-direction touch block (543, 2103) drives the frame (22, 51c) to move in the Y direction.

7. The ultrasonic piezoelectric motor (20, 50) according to claim 6, wherein the ultrasonic piezoelectric motor (20, 50) further comprises an X-direction drive circuit (240) and a Y-direction drive circuit (59, 250);
the X-direction drive circuit (240) is electrically connected to the X-direction piezoelectric driver, and the X-direction drive circuit (240) is configured to generate the third electrical signal and the fourth electrical signal based on an image stabilization signal, so that the X-direction piezoelectric driver performs at least once an X-direction drive action, wherein the X-direction drive action comprises:
the X-direction base block (291) extends to drive the X-direction touch block (293) to abut against the frame (22, 51c);
the X-direction extend block (292, 312) extends or contracts to drive the X-direction touch block (293) to drive the frame (22, 51c) to move in the X direction;
the X-direction base block contracts to drive the X-direction touch block (293) to leave the frame (22, 51c); and
the X-direction extend block (292, 312) contracts or extends to drive the X-direction touch block (293) to move back to an initial location; and
the Y-direction drive circuit (59, 250) is electrically connected to the Y-direction piezoelectric driver, and the Y-direction drive circuit (59, 250) is configured to generate the fifth electrical signal and the sixth electrical signal based on an image stabilization signal, to drive the Y-direction piezoelectric driver to perform at least once a Y-direction drive action, wherein the Y-direction drive action comprises:
the Y-direction base block (541, 2101) extends to drive the Y-direction touch block (543, 2103) to abut against the frame (22, 51c);
the Y-direction extend block (313, 542, 2102) extends or contracts to drive the Y-direction touch block (543, 2103) to drive the frame (22, 51c) to move in the Y direction;
the Y-direction base block contracts to drive the Y-direction touch block (543, 2103) to leave the frame (22, 51c); and
the Y-direction extend block (313, 542, 2102) contracts or extends to drive the Y-direction touch block (543, 2103) to move back to an initial location.

8. The ultrasonic piezoelectric motor (20, 50) according to any one of claims 1 to 5, wherein the ultrasonic piezoelectric motor (20, 50) further comprises a base (21) and an XY-direction piezoelectric driver, the frame (22, 51c) is disposed on an inner side of the base (21) and can move in an X direction and a Y direction relative to the base (21), and the X direction, the Y direction, and the Z direction are perpendicular to each other;
the XY-direction piezoelectric driver is located between the base (21) and the bracket (51), the XY-direction piezoelectric driver comprises an XY-direction base block (311), an X-direction extend block (292, 312), a Y-direction extend block (313, 542, 2102), and an XY-direction touch block (314) that are stacked, one end of the XY-direction base block (311) is fastened to the base (21), one end of the X-direction extend block (292, 312) is fastened to the other end of the XY-direction base block (311), one end of the Y-direction extend block (313, 542, 2102) is fastened to the other end of the X-direction extend block (292, 312), and the XY-direction touch block (314) is fastened to the other end of the Y-direction extend block (313, 542, 2102); and
the XY-direction base block (311) is configured to deform based on a seventh electrical signal, to drive the XY-direction touch block (314) to abut against the frame (22, 51c) or leave the frame (22, 51c), the X-direction extend block (292, 312) is configured to deform based on an eighth electrical signal, to drive the XY-direction touch block (314) to move in the X direction, and the Y-direction extend block (313, 542, 2102) is configured to deform based on a ninth electrical signal, to drive the XY-direction touch block (314) to move in the Y direction, the XY-direction touch block abuts against the frame (22, 51c), and when the X-direction extend block (292, 312) and/or the Y-direction extend block (313, 542, 2102) deform/deforms, the XY-direction touch block (314) drives the frame (22, 51c) to move on an XY plane, wherein the XY plane is perpendicular to the Z direction.

9. The ultrasonic piezoelectric motor (20, 50) according to claim 8, wherein the ultrasonic piezoelectric motor (20, 50) further comprises an XY-direction drive circuit (32), the XY-direction drive circuit (32) is electrically connected to the XY-direction piezoelectric driver, and the XY-direction drive circuit (32) is configured to generate the seventh electrical signal, the eighth electrical signal, and the ninth electrical signal based on an image stabilization signal, so that the XY-direction piezoelectric driver performs at least once an X-direction drive action, at least once a Y-direction drive action, or at least once an XY-direction drive action;
the X-direction drive action comprises:
the XY-direction base block (311) extends to drive the XY-direction touch block (314) to abut against the frame (22, 51c);
the X-direction extend block (292, 312) extends or contracts to drive the XY-direction touch block (314) to drive the frame (22, 51c) to move in the X direction;
the XY-direction base block contracts to drive the XY-direction touch block (314) to leave the frame (22, 51c); and
the X-direction extend block (292, 312) contracts or extends to drive the XY-direction touch block (314) to move back to an initial location;
the Y-direction drive action comprises:
the XY-direction base block (311) extends to drive the XY-direction touch block (314) to abut against the frame (22, 51c);
the Y-direction extend block (313, 542, 2102) extends or contracts to drive the XY-direction touch block (314) to drive the frame (22, 51c) to move in the Y direction;
the XY-direction base block contracts to drive the XY-direction touch block (314) to leave the frame (22, 51c); and
the Y-direction extend block (313, 542, 2102) contracts or extends to drive the XY-direction touch block (314) to move back to an initial location; and
the XY-direction drive action comprises:
the XY-direction base block (311) extends to drive the XY-direction touch block (314) to abut against the frame (22, 51c);
the X-direction extend block (292, 312) extends or contracts, and the Y-direction extend block (313, 542, 2102) extends or contracts, to drive the XY-direction touch block (314) to drive the frame (22, 51c) to move on the XY plane;
the XY-direction base block contracts to drive the XY-direction touch block (314) to leave the frame (22, 51c); and
the X-direction extend block (292, 312) contracts or extends, and the Y-direction extend block (313, 542, 2102) contracts or extends, to drive the XY-direction touch block (314) to move back to an initial location.

10. The ultrasonic piezoelectric motor (20, 50) according to any one of claims 6 to 9, wherein the ultrasonic piezoelectric motor (20, 50) further comprises a third magnetic member (2801) and a fourth magnetic member (2802), the third magnetic member (2801) is embedded in the base (21), the fourth magnetic member (2802) is embedded in the frame (22, 51c), the fourth magnetic member (2802) and the third magnetic member (2801) are attracted to each other, and the frame (22, 51c) is slidably connected to the base (21).

11. The ultrasonic piezoelectric motor (20, 50) according to claim 10, wherein the ultrasonic piezoelectric motor (20, 50) further comprises at least one second ball, the at least one second ball is located between the frame (22, 51c) and the base (21), and when the frame (22, 51c) slides relative to the base (21), the at least one second ball rolls.

12. An ultrasonic piezoelectric motor (20, 50), comprising a bracket (51), a carrier (23, 52), a Y-direction piezoelectric driver, a rotating frame (55), a reflector (56), and an XZ-direction piezoelectric driver, wherein
the bracket (51) is provided with installation space (511) and a light-passing hole (512) communicating with the installation space (511), the carrier (23, 52) is disposed in the installation space (511) and can move in a Y direction relative to the bracket (51), the carrier (23, 52) is configured to install a camera lens (10, 40), the Y direction is perpendicular to an optical axis (10a, 401) of the camera lens (10, 40), the rotating frame (55) is disposed in the installation space (511) and can rotate around the Y direction relative to the bracket (51), the reflector (56) is fastened to the rotating frame (55), and the reflector (56) is configured to reflect a light ray from the light-passing hole (512) to the camera lens (10, 40);
the Y-direction piezoelectric driver is located between the bracket (51) and the carrier (23, 52), the Y-direction piezoelectric driver comprises a Y-direction base block (541, 2101), a Y-direction extend block (313, 542, 2102), and a Y-direction touch block (543, 2103), one end of the Y-direction base block (541, 2101) is fastened to the bracket (51), one end of the Y-direction extend block (313, 542, 2102) is fastened to the other end of the Y-direction base block (541, 2101), and the Y-direction touch block (543, 2103) is fastened to the other end of the Y-direction extend block (313, 542, 2102);
the Y-direction base block (541, 2101) is configured to deform based on a tenth electrical signal to drive the Y-direction touch block (543, 2103) to abut against the carrier (23, 52) or leave the carrier (23, 52), and the Y-direction extend block (313, 542, 2102) is configured to deform based on an eleventh electrical signal to drive the Y-direction touch block (543, 2103) to move in the Y direction, wherein when the Y-direction touch block abuts against the carrier (23, 52) and the Y-direction extend block (313, 542, 2102) deforms, the Y-direction touch block (543, 2103) drives the carrier (23, 52) to move in the Y direction;
the XZ-direction piezoelectric driver is located between the bracket (51) and the rotating frame (55), the XZ-direction piezoelectric driver comprises an XZ-direction base block (571), an XZ-direction extend block (572), and an XZ-direction touch block (573), one end of the XZ-direction base block (571) is fastened to the bracket (51), one end of the XZ-direction extend block (572) is fastened to the other end of the XZ-direction base block (571), and the XZ-direction touch block (573) is fastened to the other end of the XZ-direction extend block (572); and
the XZ-direction base block (571) is configured to deform based on a twelfth electrical signal, to drive the XZ-direction touch block (573) to abut against the rotating frame (55) or leave the rotating frame (55), the XZ-direction extend block (572) is configured to deform based on a thirteenth electrical signal, to drive the XZ-direction touch block (573) to move in an XZ direction, wherein the XZ direction is perpendicular to the Y direction, and when the XZ-direction touch block abuts against the rotating frame (55) and the XZ-direction extend block (572) deforms, the XZ-direction touch block (573) drives the rotating frame (55) to rotate.

13. The ultrasonic piezoelectric motor (20, 50) according to claim 12, wherein the ultrasonic piezoelectric motor (20, 50) further comprises a Y-direction drive circuit (59, 250) and an XZ-direction drive circuit (510);
the Y-direction drive circuit (59, 250) is electrically connected to the Y-direction piezoelectric driver, and the Y-direction drive circuit (59, 250) is configured to generate the tenth electrical signal and the eleventh electrical signal based on an image stabilization signal, so that the Y-direction piezoelectric driver performs at least once a Y-direction drive action, wherein the Y-direction drive action comprises:
the Y-direction base block (541, 2101) extends to drive the Y-direction touch block (543, 2103) to abut against the carrier (23, 52);
the Y-direction extend block (313, 542, 2102) extends or contracts to drive the Y-direction touch block (543, 2103) to drive the carrier (23, 52) to move in the Y direction;
the Y-direction base block contracts to drive the Y-direction touch block (543, 2103) to leave the carrier (23, 52); and
the Y-direction extend block (313, 542, 2102) contracts or extends to drive the Y-direction touch block (543, 2103) to move back to an initial location; and
the XZ-direction drive circuit (510) is electrically connected to the XZ-direction piezoelectric driver, and the XZ-direction drive circuit (510) is configured to generate the twelfth electrical signal and the thirteenth electrical signal based on an auto focus signal and an image stabilization signal, to drive the XZ-direction piezoelectric driver to perform at least once an XZ-direction drive action, wherein the XZ-direction drive action comprises:
the XZ-direction base block (571) extends to drive the XZ-direction touch block (573) to abut against the rotating frame (55);
the XZ-direction extend block (572) extends or contracts to drive the XZ-direction touch block (573) to move in the XZ-direction and drive the rotating frame (55) to rotate around the Y direction;
the XZ-direction base block contracts to drive the XZ-direction touch block (573) to leave the rotating frame (55); and
the XZ-direction extend block (572) contracts or extends to drive the XZ-direction touch block (573) to move back to an initial location.

14. A camera module, comprising a camera lens (10, 40) and the ultrasonic piezoelectric motor (20, 50) according to any one of claims 1 to 13, wherein the camera lens (10, 40) is installed on the carrier (23, 52).

15. An electronic device (100), comprising a processor (103) and the camera module according to claim 14, wherein the camera module is electrically connected to the processor (103).

## Patentansprüche

1. Piezoelektrischer Ultraschallmotor (20, 50), umfassend einen Rahmen (22, 51c), einen Träger (23, 52) und einen piezoelektrischen Richtungstreiber in Z-Richtung, wobei der Träger (23, 52) auf einer Innenseite des Rahmens (22, 51c) installiert ist und sich in einer Z-Richtung relativ zu dem Rahmen (22, 51c) bewegen kann, der Träger (23, 52) dazu konfiguriert ist, eine Kameralinse (10, 40) zu installieren, und die Z-Richtung parallel zu einer optischen Achse (10a, 401) der Kameralinse (10, 40) verläuft;
sich der piezoelektrische Richtungstreiber in Z-Richtung zwischen dem Rahmen (22, 51c) und dem Träger (23, 52) befindet, der piezoelektrische Richtungstreiber in Z-Richtung einen Basisblock in Z-Richtung (281), einen Ausfahrblock in Z-Richtung (282) und einen Berührungsblock in Z-Richtung (283) umfasst, ein Ende des Basisblocks in Z-Richtung (281) an dem Rahmen (22, 51c) befestigt ist, **dadurch gekennzeichnet, dass** ein Ende des Ausfahrblocks in Z-Richtung (282) an dem anderen Ende des Basisblocks in Z-Richtung (281) befestigt ist und der Berührungsblock in Z-Richtung (283) an dem anderen Ende des Ausfahrblocks in Z-Richtung (282) befestigt ist; und
der Basisblock in Z-Richtung (281) dazu konfiguriert ist, sich basierend auf einem ersten elektrischen Signal zu verformen, um den Berührungsblock in Z-Richtung (283) anzutreiben, um an den Träger (23, 52) anzustoßen oder den Träger (23, 52) zu verlassen, und der Ausfahrblock in Z-Richtung (282) dazu konfiguriert ist, sich basierend auf einem zweiten elektrischen Signal zu verformen, um den Berührungsblock in Z-Richtung (283) anzutreiben, um sich in der Z-Richtung zu bewegen, wobei, wenn der Berührungsblock in Z-Richtung an den Träger (23, 52) anstößt und sich der Ausfahrblock in Z-Richtung (282) verformt, der Berührungsblock in Z-Richtung (283) den Träger (23, 52) antreibt, um sich in die Z-Richtung zu bewegen.

2. Piezoelektrischer Ultraschallmotor (20, 50) nach Anspruch 1, wobei der piezoelektrische Ultraschallmotor (20, 50) ferner eine Antriebsschaltung in Z-Richtung (260) umfasst, die Antriebsschaltung in Z-Richtung(260) elektrisch mit dem piezoelektrischen Richtungstreiber in Z-Richtung verbunden ist, und die Antriebsschaltung in Z-Richtung (260) dazu konfiguriert ist, das erste elektrische Signal und das zweite elektrische Signal basierend auf einem Autofokussignal zu erzeugen, sodass der piezoelektrische Richtungstreiber in Z-Richtung mindestens einmal eine Antriebsaktion in Z-Richtung durchführt, wobei die Antriebsaktion in Z-Richtung Folgendes umfasst:
der Basisblock in Z-Richtung (281) fährt aus, um den Berührungsblock in Z-Richtung (283) anzutreiben, um an den Träger (23, 52) anzustoßen;
der Ausfahrblock in Z-Richtung (282) fährt aus oder zieht sich zusammen, um den Berührungsblock in Z-Richtung (283) anzutreiben, um den Träger (23, 52) anzutreiben, um sich in der Z-Richtung zu bewegen;
der Basisblock Z-Richtung zieht sich zusammen, um den Berührungsblock in Z-Richtung (283) anzutreiben, um den Träger (23, 52) zu verlassen; und
der Ausfahrblock Z-Richtung (282) zieht sich zusammen oder fährt aus, um den Z-Richtung-Berührungsblock (283) anzutreiben, um sich zurück zu einem anfänglichen Standort zu bewegen.

3. Piezoelektrischer Ultraschallmotor (20, 50) nach Anspruch 1 oder 2, wobei der piezoelektrische Ultraschallmotor (20, 50) ferner ein erstes Magnetelement (2701) und ein zweites Magnetelement (2702) umfasst, das erste Magnetelement (2701) in den Rahmen (22, 51c) eingebettet ist, das zweite Magnetelement (2702) in den Träger (23, 52) eingebettet ist, das zweite Magnetelement (2702) und das erste Magnetelement (2701) einander angezogen sind und der Träger (23, 52) verschiebbar mit dem Rahmen (22, 51c) verbunden ist.

4. Piezoelektrischer Ultraschallmotor (20, 50) nach Anspruch 3, wobei der piezoelektrische Ultraschallmotor (20, 50) ferner mindestens eine erste Kugel (26) umfasst, sich die mindestens eine erste Kugel (26) zwischen dem Träger (23, 52) und dem Rahmen (22, 51c) befindet und wenn sich der Träger relativ zu dem Rahmen (22, 51c) verschiebt, die mindestens eine erste Kugel (26) rollt.

5. Piezoelektrischer Ultraschallmotor (20, 50) nach Anspruch 4, wobei der Rahmen (22, 51c) mit einer ersten Nut (226) versehen ist, eine Verlängerungsrichtung der ersten Nut (226) parallel zu der Z-Richtung verläuft, der Träger (23, 52) mit einer zweiten Nut (231) versehen ist, die zweite Nut (231) gegenüberliegend zu der ersten Nut (226) angeordnet ist und sich die erste Kugel (26) teilweise in der ersten Nut (226) und teilweise in der zweiten Nut (231) befindet.

6. Piezoelektrischer Ultraschallmotor (20, 50) nach einem der Ansprüche 1 bis 5, wobei der piezoelektrische Ultraschallmotor (20, 50) ferner eine Basis (21), einen piezoelektrischen Richtungstreiber in X-Richtung und einen piezoelektrischen Richtungstreiber in Y-Richtung umfasst, der Rahmen (22, 51c) auf einer Innenseite der Basis (21) angeordnet ist und sich relativ zu der Basis (21) in einer X-Richtung und einer Y-Richtung bewegen kann und die X-Richtung, die Y-Richtung und die Z-Richtung zueinander senkrecht verlaufen;
sich der piezoelektrische Richtungstreiber in X-Richtung zwischen der Basis (21) und der Halterung (51) befindet, der piezoelektrische Richtungstreiber in X-Richtung einen Basisblock in X-Richtung (291), einen Ausfahrblock in X-Richtung (292, 312) und einen Berührungsblock in X-Richtung (293) umfasst, ein Ende des Basisblocks in X-Richtung (291) an der Basis (21) befestigt ist, ein Ende des Ausfahrblocks in X-Richtung (292, 312) an dem anderen Ende des Basisblock in X-Richtung (291) befestigt ist und der Berührungsblock in X-Richtung (293) an dem anderen Ende des Ausfahrblocks in X-Richtung (292, 312) befestigt ist;
der Basisblock in X-Richtung (291) dazu konfiguriert ist, sich basierend auf einem dritten elektrischen Signal zu verformen, um den Berührungsblock in X-Richtung (293) anzutreiben, um an den Rahmen (22, 51c) anzustoßen oder den Rahmen (22, 51c) zu verlassen, und der Ausfahrblock in X-Richtung (292, 312) dazu konfiguriert ist, sich basierend auf einem vierten elektrischen Signal zu verformen, um den Berührungsblock in X-Richtung (293) anzutreiben, um sich in der X-Richtung zu bewegen, wobei, wenn der Berührungsblock in X-Richtung an den Rahmen (22, 51c) anstößt und sich der Ausfahrblock in X-Richtung (292, 312) verformt, der Berührungsblock in X-Richtung (293) den Rahmen (22, 51c) antreibt, um sich in der X-Richtung zu bewegen;
sich der piezoelektrische Richtungstreiber in Y-Richtung zwischen der Basis (21) und der Halterung (51) befindet, der piezoelektrische Richtungstreiber in Y-Richtung einen Basisblock in Y-Richtung (541, 2101), einen Ausfahrblock in Y-Richtung (313, 542, 2102) und einen Berührungsblock in Y-Richtung (543, 2103) umfasst, ein Ende des Basisblock in Y-Richtung (541, 2101) an der Basis (21) befestigt ist, ein Ende des Basisblocks in Y-Richtung (313, 542, 2102) an dem anderen Ende des Basisblock in Y-Richtung (541, 2101) befestigt ist und der Berührungsblock in Y-Richtung (543, 2103) an dem anderen Ende des Basisblocks in Y-Richtung (313, 542, 2102) befestigt ist; und
der Basisblock in Y-Richtung (541, 2101) dazu konfiguriert ist, sich basierend auf einem fünften elektrischen Signal zu verformen, um den Berührungsblock in Y-Richtung (543, 2103) anzutreiben, um an den Rahmen (22, 51c) anzustoßen oder den Rahmen (22, 51c) zu verlassen, und der Ausfahrblock in Y-Richtung (313, 542, 2102) dazu konfiguriert ist, sich basierend auf einem sechsten elektrischen Signal zu verformen, um den Berührungsblock in Y-Richtung (543, 2103) anzutreiben, sich in der Y-Richtung zu bewegen, wobei, wenn der Berührungsblock in Y-Richtung an den Rahmen (22, 51c) anstößt und sich der Ausfahrblock in Ausfahrblock Y-Richtung (313, 542, 2102) verformt, der Berührungsblock in Y-Richtung (543, 2103) den Rahmen (22, 51c) antreibt, um sich in der Y-Richtung zu bewegen.

7. Piezoelektrischer Ultraschallmotor (20, 50) nach Anspruch 6, wobei der piezoelektrische Ultraschallmotor (20, 50) ferner eine Antriebsschaltung in X-Richtung (240) und eine Antriebsschaltung in Y-Richtung (59, 250) umfasst;
die Antriebsschaltung in X-Richtung (240) elektrisch mit dem piezoelektrischen Richtungstreiber in X-Richtung verbunden ist und die Antriebsschaltung in X-Richtung (240) dazu konfiguriert ist, das dritte elektrische Signal und das vierte elektrische Signal basierend auf einem Bildstabilisierungssignal zu erzeugen, sodass der piezoelektrische Richtungstreiber in X-Richtung mindestens einmal eine Antriebsaktion in X-Richtung durchführt, wobei die Antriebsaktion in X-Richtung Folgendes umfasst:
der Basisblock in X-Richtung (291) fährt aus, um den Berührungsblock in X-Richtung (293) anzutreiben, um an den Rahmen (22, 51c) anzustoßen;
den Ausfahrblock in X-Richtung (292, 312) fährt aus oder zieht sich zusammen, um den Berührungsblock in X-Richtung (293) anzutreiben, um den Rahmen (22, 51c) anzutreiben, um sich in der X-Richtung zu bewegen;
der Basisblock in X-Richtung zieht sich zusammen, um den Berührungsblock in X-Richtung (293) anzutreiben, um den Rahmen (22, 51c) zu verlassen; und
der Ausfahrblock in X-Richtung (292, 312) zieht sich zusammen oder fährt aus, um den Berührungsblock in X-Richtung (293) anzutreiben, um sich zurück zu einem anfänglichen Standort zu bewegen; und
die Antriebsschaltung in Y-Richtung (59, 250) elektrisch mit dem piezoelektrischen Richtungstreiber in Y-Richtung verbunden ist und die Antriebsschaltung in Y-Richtung (59, 250) dazu konfiguriert ist, das fünfte elektrische Signal und das sechste elektrische Signal basierend auf einem Bildstabilisierungssignal zu erzeugen, um den piezoelektrischen Richtungstreiber in Y-Richtung anzutreiben, um mindestens einmal eine Antriebsaktion in Y-Richtung durchzuführen, wobei die Antriebsaktion in Y-Richtung Folgendes umfasst:
der Basisblock in Y-Richtung (541, 2101) fährt aus, um den Berührungsblock in Y-Richtung (543, 2103) anzutreiben, um an den Rahmen (22, 51c) anzustoßen;
der Ausfahrblock in Y-Richtung (313, 542, 2102) fährt aus oder zieht sich zusammen, um den Berührungsblock in Y-Richtung (543, 2103) anzutreiben, um den Rahmen (22, 51c) zu anzutreiben, um sich in der Y-Richtung zu bewegen;
der Basisblock in Y-Richtung zieht sich zusammen, um den Berührungsblock in Y-Richtung (543, 2103) anzutreiben, um den Rahmen (22, 51c) zu verlassen; und
der Ausfahrblock in Y-Richtung (313, 542, 2102) zieht sich zusammen oder fährt aus, um den Berührungsblock in Y-Richtung (543, 2103) anzutreiben, um sich zurück zu einem anfänglichen Standort zu bewegen.

8. Piezoelektrischer Ultraschallmotor (20, 50) nach einem der Ansprüche 1 bis 5, wobei der piezoelektrische Ultraschallmotor (20, 50) ferner eine Basis (21) und einen piezoelektrischen Richtungstreiber in XY-Richtung umfasst, wobei der Rahmen (22, 51c) auf einer Innenseite der Basis (21) angeordnet ist und sich relativ zu der Basis (21) in einer X-Richtung und einer Y-Richtung bewegen kann und die X-Richtung, die Y-Richtung und die Z-Richtung zueinander senkrecht verlaufen;
sich der piezoelektrische Richtungstreiber in XY-Richtung in zwischen der Basis (21) und der Halterung (51) befindet, der piezoelektrische Richtungstreiber in XY-Richtung einen Basisblock in XY-Richtung (311), einen Ausfahrblock in X-Richtung (292, 312), einen Ausfahrblock in XY-Richtung (313, 542, 2102) und einen Berührungsblock in XY-Richtung (314) umfasst, die gestapelt sind, ein Ende des Basisblocks in XY-Richtung (311) an der Basis (21) befestigt ist, ein Ende des Ausfahrblocks in X-Richtung (292, 312) an dem anderen Ende des Basisblocks in Y-Richtung (311) befestigt ist, ein Ende des Basisblocks in Y-Richtung (313, 542, 2102) an dem anderen Ende des Ausfahrblock in X-Richtung (292, 312) befestigt ist und der Berührungsblock in XY-Richtung (314) an dem anderen Ende des Ausfahrblocks in Y-Richtung (313, 542, 2102) befestigt ist; und
der Basisblock in XY-Richtung (311) dazu konfiguriert ist, sich basierend auf einem siebten elektrischen Signal zu verformen, um den Berührungsblock in XY-Richtung (314) anzutreiben, an den Rahmen (22, 51c) anzustoßen oder den Rahmen (22, 51c) zu verlassen, der Ausfahrblock in X-Richtung (292, 312) dazu konfiguriert ist, sich basierend auf einem achten elektrischen Signal zu verformen, um den Berührungsblock in XY-Richtung (314) anzutreiben, sich in der X-Richtung zu bewegen, und der Ausfahrblock in Y-Richtung (313, 542, 2102) dazu konfiguriert ist, sich basierend auf einem neunten elektrischen Signal zu verformen, um den Berührungsblock in XY-Richtung (314) anzutreiben, um sich in der Y-Richtung zu bewegen, der Berührungsblock in XY-Richtung an den Rahmen (22, 51c) anstößt und wenn sich der Ausfahrblock in X-Richtung (292, 312) und/oder der Ausfahrblock in Y-Richtung (313, 542, 2102) verformt/verformen, der Berührungsblock in XY-Richtung (314) den Rahmen (22, 51c) antreibt, um sich auf einer XY-Ebene zu bewegen, wobei die XY-Ebene senkrecht zu der Z-Richtung verläuft.

9. Piezoelektrischer Ultraschallmotor (20, 50) nach Anspruch 8, wobei der Piezoelektrischer Ultraschallmotor (20, 50) ferner eine XY-Antriebsschaltung (32) umfasst, die XY-Antriebsschaltung (32) elektrisch mit dem XY-Piezoelektrotreiber verbunden ist, und die Antriebsschaltung in XY-Richtung (32) dazu konfiguriert ist, das siebte elektrische Signal, das achte elektrische Signal und das neunte elektrische Signal basierend auf einem Bildstabilisierungssignal zu erzeugen, sodass der piezoelektrische Richtungstreiber in XY-Richtung mindestens einmal eine Antriebsaktion in X-Richtung, mindestens einmal eine Antriebsaktion in Y-Richtung oder mindestens einmal eine Antriebsaktion in XY-Richtung durchführt;
die Antriebsaktion in X-Richtung Folgendes umfasst:
der Basisblock in XY-Richtung (311) fährt aus, um den Berührungsblock in XY-Richtung (314) anzutreiben, um an den Rahmen (22, 51c) anzustoßen;
den Ausfahrblock in X-Richtung (292, 312) fährt aus oder zieht sich zusammen, um den Berührungsblock in XY-Richtung (314) anzutreiben, um den Rahmen (22, 51c) anzutreiben, um sich in der X-Richtung zu bewegen;
der Basisblock in XY-Richtung zieht sich zusammen, um den Berührungsblock in XY-Richtung (314) anzutreiben, um den Rahmen (22, 51c) zu verlassen; und
der Ausfahrblock in X-Richtung (292, 312) zieht sich zusammen oder fährt aus, um den Berührungsblock in XY-Richtung (314) anzutreiben, um sich zurück zu einem anfänglichen Standort zu bewegen;
die Antriebsaktion in Y-Richtung Folgendes umfasst:
der Basisblock in XY-Richtung (311) fährt aus, um den Berührungsblock in XY-Richtung (314) anzutreiben, um an den Rahmen (22, 51c) anzustoßen;
der Ausfahrblock in Y-Richtung (313, 542, 2102) fährt aus oder zieht sich zusammen, um den Berührungsblock in XY-Richtung (314) anzutreiben, um den Rahmen (22, 51c) zu anzutreiben, um sich in der Y-Richtung zu bewegen;
der Basisblock in XY-Richtung zieht sich zusammen, um den Berührungsblock in XY-Richtung (314) anzutreiben, um den Rahmen (22, 51c) zu verlassen; und
der Ausfahrblock in Y-Richtung (313, 542, 2102) zieht sich zusammen oder fährt aus, um den Berührungsblock in XY-Richtung (314) anzutreiben, um sich zurück zu einem anfänglichen Standort zu bewegen; und
die Antriebsaktion in XY-Richtung Folgendes umfasst:
der Basisblock in XY-Richtung (311) fährt aus, um den Berührungsblock in XY-Richtung (314) anzutreiben, um an den Rahmen (22, 51c) anzustoßen;
der Ausfahrblock in X-Richtung (292, 312) fährt aus oder zieht sich zusammen und der Ausfahrblock in Y-Richtung (313, 542, 2102) fährt aus oder zieht sich zusammen, um den Berührungsblock in XY-Richtung (314) anzutreiben, um den Rahmen(22, 51c) anzutreiben, um sich auf der XY-Ebene zu bewegen;
der Basisblock in XY-Richtung zieht sich zusammen, um den Berührungsblock in XY-Richtung (314) anzutreiben, um den Rahmen (22, 51c) zu verlassen; und
der Ausfahrblock in X-Richtung (292, 312) zieht sich zusammen oder fährt aus und der Ausfahrblock in Y-Richtung (313, 542, 2102) zieht sich zusammen oder fährt aus, um den Berührungsblock in XY-Richtung (314) anzutreiben, um sich zurück zu einem anfänglichen Standort zu bewegen.

10. Piezoelektrischer Ultraschallmotor (20, 50) nach einem der Ansprüche 6 bis 9, wobei der Piezoelektrischer Ultraschallmotor (20, 50) ferner ein drittes Magnetelement (2801) und ein viertes Magnetelement (2802) umfasst, wobei das dritte Magnetelement (2801) in die Basis (21) eingebettet ist, das vierte Magnetelement (2802) in den Rahmen (22, 51c) eingebettet ist, das vierte Magnetelement (2802) und das dritte Magnetelement (2801) einander angezogen sind und der Rahmen (22, 51c) verschiebbar mit der Basis (21) verbunden ist.

11. Piezoelektrischer Ultraschallmotor (20, 50) nach Anspruch 10, wobei der piezoelektrische Ultraschallmotor (20, 50) ferner mindestens eine zweite Kugel umfasst, sich die mindestens eine zweite Kugel zwischen dem Rahmen (22, 51c) und der Basis (21) befindet und wenn sich der Rahmen (22, 51c) relativ zu der Basis (21) verschiebt, die mindestens eine zweite Kugel rollt.

12. Piezoelektrischer Ultraschallmotor (20, 50), umfassend eine Halterung (51), einen Träger (23, 52), einen piezoelektrischen Richtungstreiber in Y-Richtung, einen sich drehenden Rahmen (55), einen Reflektor (56) und einen piezoelektrischen Richtungstreiber in XZ-Richtung, wobei
die Halterung (51) mit einem Installationsraum (511) und einem mit dem Installationsraum (511) kommunizierenden lichtdurchlässigen Loch (512) versehen ist, der Träger (23, 52) in dem Installationsraum (511) angeordnet ist und sich in einer Y-Richtung relativ zu der Halterung (51) bewegen kann, der Träger (23, 52) dazu konfiguriert ist, eine Kameralinse (10, 40) zu installieren, die Y-Richtung senkrecht zu einer optischen Achse (10a, 401) der Kameralinse (10, 40) verläuft, der sich drehende Rahmen (55) in dem Installationsraum (511) angeordnet ist und relativ zu dem Halter (51) um die Y-Richtung drehen kann, der Reflektor (56) an dem sich drehenden Rahmen (55) befestigt ist und der Reflektor (56) dazu konfiguriert ist, einen Lichtstrahl von dem lichtdurchlässigen Loch (512) zu der Kameralinse (10, 40) zu reflektieren;
sich der piezoelektrische Richtungstreiber in Y-Richtung zwischen der Halterung (51) und dem Träger (23, 52) befindet, der piezoelektrische Richtungstreiber in Y-Richtung einen Basisblock in Y-Richtung (541, 2101), einen Ausfahrblock in Y-Richtung (313, 542, 2102) und einen Berührungsblock in Y-Richtung (543, 2103) umfasst, ein Ende des Basisblocks in Y-Richtung (541, 2101) an der Halterung (51) befestigt ist, ein Ende des Basisblocks in Y-Richtung (313, 542, 2102) an dem anderen Ende des Basisblocks in Y-Richtung (541, 2101) befestigt ist und der Berührungsblock in Y-Richtung (543, 2103) an dem anderen Ende des Basisblocks in Y-Richtung (313, 542, 2102) befestigt ist; der Basisblock in Y-Richtung (541, 2101) dazu konfiguriert ist, sich basierend auf einem zehnten elektrischen Signal zu verformen, um den Berührungsblock in Y-Richtung (543, 2103) anzutreiben, um an den Träger (23, 52) anzustoßen oder den Träger (23, 52) zu verlassen, und der Ausfahrblock in Y-Richtung (313, 542, 2102) dazu konfiguriert ist, sich basierend auf einem elften elektrischen Signal zu verformen, um den Berührungsblock in Y-Richtung (543, 2103) anzutreiben, sich in der Y-Richtung zu bewegen, wobei, wenn der Berührungsblock in Y-Richtung an den Träger (23, 52) anstößt und sich der Ausfahrblock in Y-Richtung (313, 542, 2102) verformt, der Berührungsblock in Y-Richtung (543, 2103) den Träger (23, 52) antreibt, um sich in der Y-Richtung zu bewegen;
der piezoelektrische Richtungstreiber in XZ-Richtung zwischen der Halterung (51) und dem sich drehenden Rahmen (55) angeordnet ist, der piezoelektrische Richtungstreiber in XZ-Richtung einen Basisblock in XZ-Richtung (571), einen Ausfahrblock in XZ-Richtung (572) und einen Berührungsblock in XZ-Richtung (573) umfasst, ein Ende des Basisblocks in XZ-Richtung (571) an der Halterung (51) befestigt ist, ein Ende des Ausfahrblocks in XZ-Richtung (572) an dem anderen Ende des Basisblocks in XZ-Richtung (571) befestigt ist und der Anschlagblock in XZ-Richtung (573) an dem anderen Ende des Ausfahrblocks in XZ-Richtung (572) befestigt ist; und
der Basisblock (571) in XZ-Richtung dazu konfiguriert ist, sich basierend auf einem zwölften elektrischen Signal zu verformen, um den Berührungsblock in XZ-Richtung (573) anzutreiben, um an dem sich drehenden Rahmen (55) anzustoßen oder den sich drehenden Rahmen (55) zu verlassen, der Ausfahrblock in XZ-Richtung (572) dazu konfiguriert ist, sich basierend auf einem dreizehnten elektrischen Signal zu verformen, um den Berührungsblock in XZ-Richtung (573) anzutreiben, sich in einer XZ-Richtung zu bewegen, wobei die XZ-Richtung senkrecht zur Y-Richtung verläuft, und wenn der Berührungsblock in XZ-Richtung an den sich drehenden Rahmen (55) anstößt und sich der Ausfahrblock in XZ-Richtung (572) verformt, treibt der Berührungsblock in XZ-Richtung (573) den sich drehenden Rahmen (55) an, um sich zu drehen.

13. Piezoelektrischer Ultraschallmotor (20, 50) nach Anspruch 12, wobei der piezoelektrische Ultraschallmotor (20, 50) ferner eine Antriebsschaltung in Y-Richtung (59, 250) und eine Antriebsschaltung in XZ-Richtung (510) umfasst;
die Antriebsschaltung in Y-Richtung (59, 250) elektrisch mit dem piezoelektrischen Richtungstreiber in Y-Richtung verbunden ist und die Antriebsschaltung in Y-Richtung (59, 250) dazu konfiguriert ist, das zehnte elektrische Signal und das elfte elektrische Signal basierend auf einem Bildstabilisierungssignal zu erzeugen, sodass der piezoelektrische Richtungstreiber in Y-Richtung mindestens einmal eine Antriebsaktion in Y-Richtung durchführt, wobei die Antriebsaktion in Y-Richtung Folgendes umfasst:
der Basisblock in Y-Richtung (541, 2101) fährt aus, um den Berührungsblock in Y-Richtung (543, 2103) anzutreiben, um an den Träger (23, 52) anzustoßen;
der Ausfahrblock in Y-Richtung (313, 542, 2102) fährt aus oder zieht sich zusammen, um den Berührungsblock in Y-Richtung (543, 2103) anzutreiben, um den Träger (23, 52) zu anzutreiben, um sich in der Y-Richtung zu bewegen;
der Basisblock in Y-Richtung zieht sich zusammen, um den Berührungsblock in Y-Richtung (543, 2103) anzutreiben, um den Träger (23, 52) zu verlassen; und
der Ausfahrblock in Y-Richtung (313, 542, 2102) zieht sich zusammen oder fährt aus, um den Berührungsblock in Y-Richtung (543, 2103) anzutreiben, um sich zurück zu einem anfänglichen Standort zu bewegen; und
die Antriebsschaltung in XZ-Richtung (510) elektrisch mit dem piezoelektrischen Richtungstreiber in XZ-Richtung verbunden ist und die Antriebsschaltung in XZ-Richtung (510) dazu konfiguriert ist, das zwölfte elektrische Signal und das dreizehnte elektrische Signal basierend auf einem Autofokussignal und einem Bildstabilisierungssignal zu erzeugen, um den piezoelektrischen Richtungstreiber in XZ-Richtung anzutreiben, um mindestens einmal eine Antriebsaktion in XZ-Richtung durchzuführen, wobei die Antriebsaktion in XZ-Richtung Folgendes umfasst:
der Basisblock in XZ-Richtung (571) fährt aus, um den Berührungsblock in XZ-Richtung (573) anzutreiben, um an den sich drehenden Rahmen (55) anzustoßen;
der Ausfahrblock in XZ-Richtung (572) fährt aus oder zieht sich zusammen, um den Berührungsblock in XZ-Richtung (573) anzutreiben, um sich in der XZ-Richtung zu bewegen und den sich drehenden Einzelbild (55) anzutreiben, um sich um die Y-Richtung zu drehen;
der Basisblock in XZ-Richtung zieht sich zusammen, um den Berührungsblock in XZ-Richtung (573) anzutreiben, um den sich drehenden Rahmen (55) zu verlassen; und
der Ausfahrblock in XZ-Richtung (572) zieht sich zusammen oder fährt aus, um den Berührungsblock in XZ-Richtung (573) anzutreiben, um sich zurück zu einem anfänglichen Standort zu bewegen.

14. Kameramodul, umfassend eine Kameralinse (10, 40) und den piezoelektrischen Ultraschallmotor (20, 50) nach einem der Ansprüche 1 bis 13, wobei die Kameralinse (10, 40) auf dem Träger (23, 52) installiert ist.

15. Elektronische Vorrichtung (100), umfassend einen Prozessor (103) und das Kameramodul nach Anspruch 14, wobei das Kameramodul elektrisch mit dem Prozessor (103) verbunden ist.

## Revendications

1. Moteur piézoélectrique à ultrasons (20, 50), comprenant un cadre (22, 51c), un support (23, 52) et un dispositif d'entraînement piézoélectrique dans la direction Z, dans lequel le support (23, 52) est installé sur un côté interne du cadre (22, 51c) et peut se déplacer dans la direction Z par rapport au cadre (22, 51c), le support (23, 52) est configuré pour installer un objectif de caméra (10, 40), et la direction Z étant parallèle à un axe optique (10a, 401) de l'objectif de caméra (10, 40) ;
le dispositif d'entraînement piézoélectrique dans la direction Z est situé entre le cadre (22, 51c) et le support (23, 52), le dispositif d'entraînement piézoélectrique dans la direction Z comprend un bloc de base dans la direction Z (281), un bloc de prolongement dans la direction Z (282) et un bloc de contact dans la direction Z (283), une extrémité du bloc de base dans la direction Z (281) est fixée au cadre (22, 51c), **caractérisé en ce qu'**une extrémité du bloc de prolongement dans la direction Z (282) est fixée à l'autre extrémité du bloc de base dans la direction Z (281), et le bloc de contact dans la direction Z (283) est fixé à l'autre extrémité du bloc de prolongement dans la direction Z (282) ; et
le bloc de base dans la direction Z (281) est configuré pour se déformer sur la base d'un premier signal électrique pour entraîner le bloc de contact dans la direction Z (283) afin qu'il vienne en butée contre le support (23, 52) ou qu'il quitte le support (23, 52), et le bloc de prolongement dans la direction Z (282) est configuré pour se déformer sur la base d'un deuxième signal électrique pour entraîner le bloc de contact dans la direction Z (283) afin qu'il se déplace dans la direction Z, dans lequel lorsque le bloc de contact dans la direction Z vient en butée contre le support (23, 52) et que le bloc de prolongement dans la direction Z (282) se déforme, le bloc de contact dans la direction Z (283) amène le support (23, 52) à se déplacer dans la direction Z.

2. Moteur piézoélectrique à ultrasons (20, 50) selon la revendication 1, dans lequel le moteur piézoélectrique à ultrasons (20, 50) comprend également un circuit d'entraînement dans la direction Z (260), le circuit d'entraînement dans la direction Z (260) est connecté électriquement au dispositif d'entraînement piézoélectrique dans la direction Z, et le circuit d'entraînement dans la direction Z (260) est configuré pour générer le premier signal électrique et le deuxième signal électrique sur la base d'un signal de mise au point automatique, de sorte que le dispositif d'entraînement piézoélectrique dans la direction Z réalise au moins une fois une action d'entraînement dans la direction Z, l'action d'entraînement dans la direction Z comprenant :
le bloc de base dans la direction Z (281) se prolonge pour entraîner le bloc de contact dans la direction Z (283) afin qu'il vienne en butée contre le support (23, 52) ;
le bloc de prolongement dans la direction Z (282) se prolonge ou se contracte pour entraîner le bloc de contact dans la direction Z (283) pour entraîner le support (23, 52) afin qu'il se déplace dans la direction Z ;
le bloc de base dans la direction Z se contracte pour entraîner le bloc de contact dans la direction Z (283) afin qu'il quitte le support (23, 52) ; et
le bloc de prolongement dans la direction Z (282) se contracte ou se prolonge pour entraîner le bloc de contact dans la direction Z (283) afin qu'il revienne à un emplacement initial.

3. Moteur piézoélectrique à ultrasons (20, 50) selon la revendication 1 ou 2, dans lequel le moteur piézoélectrique à ultrasons (20, 50) comprend également un premier élément magnétique (2701) et un deuxième élément magnétique (2702), le premier élément magnétique (2701) est intégré dans le cadre (22, 51c), le deuxième élément magnétique (2702) est intégré dans le support (23, 52), le deuxième élément magnétique (2702) et le premier élément magnétique (2701) sont attirés l'un vers l'autre, et le support (23, 52) est connecté de manière coulissante au cadre (22, 51c).

4. Moteur piézoélectrique à ultrasons (20, 50) selon la revendication 3, dans lequel le moteur piézoélectrique à ultrasons (20, 50) comprend également au moins une première bille (26), l'au moins une première bille (26) est située entre le support (23, 52) et le cadre (22, 51c), et lorsque le support coulisse par rapport au cadre (22, 51c), l'au moins une première bille (26) roule.

5. Moteur piézoélectrique à ultrasons (20, 50) selon la revendication 4, dans lequel le cadre (22, 51c) est doté d'une première rainure (226), une direction de prolongement de la première rainure (226) est parallèle à la direction Z, le support (23, 52) est doté d'une seconde rainure (231), la seconde rainure (231) est disposée à l'opposé de la première rainure (226), et la première bille (26) est partiellement située dans la première rainure (226) et partiellement située dans la seconde rainure (231).

6. Moteur piézoélectrique à ultrasons (20, 50) selon l'une quelconque des revendications 1 à 5, dans lequel le moteur piézoélectrique à ultrasons (20, 50) comprend également une base (21), un dispositif d'entraînement piézoélectrique dans la direction X et un dispositif d'entraînement piézoélectrique dans la direction Y, le cadre (22, 51c) est disposé sur un côté interne de la base (21) et peut se déplacer dans une direction X et une direction Y par rapport à la base (21), et la direction X, la direction Y et la direction Z sont perpendiculaires entre elles ;
le dispositif d'entraînement piézoélectrique dans la direction X est situé entre la base (21) et la fixation (51), le dispositif d'entraînement piézoélectrique dans la direction X comprend un bloc de base dans la direction X (291), un bloc de prolongement dans la direction X (292, 312) et un bloc de contact dans la direction X (293), une extrémité du bloc de base dans la direction X (291) est fixée à la base (21), une extrémité du bloc de prolongement dans la direction X (292, 312) est fixée à l'autre extrémité du bloc de base dans la direction X (291), et le bloc de contact dans la direction X (293) est fixé à l'autre extrémité du bloc de prolongement dans la direction X (292, 312) ;
le bloc de base dans la direction X (291) est configuré pour se déformer sur la base d'un troisième signal électrique pour entraîner le bloc de contact dans la direction X (293) afin qu'il vienne en butée contre le cadre (22, 51c) ou qu'il quitte le cadre (22, 51c), et le bloc de prolongement dans la direction X (292, 312) est configuré pour se déformer sur la base d'un quatrième signal électrique pour entraîner le bloc de contact dans la direction X (293) afin qu'il se déplace dans la direction X, dans lequel lorsque le bloc de contact dans la direction X vient en butée contre le cadre (22, 51c) et que le bloc de prolongement dans la direction X (292, 312) se déforme, le bloc de contact dans la direction X (293) entraîne le cadre (22, 51c) afin qu'il se déplace dans la direction X ;
le dispositif d'entraînement piézoélectrique dans la direction Y est situé entre la base (21) et la fixation (51), le dispositif d'entraînement piézoélectrique dans la direction Y comprend un bloc de base dans la direction Y (541, 2101), un bloc de prolongement dans la direction Y (313, 542, 2102) et un bloc de contact dans la direction Y (543, 2103), une extrémité du bloc de base dans la direction Y (541, 2101) est fixée à la base (21), une extrémité du bloc de prolongement dans la direction Y (313, 542, 2102) est fixée à l'autre extrémité du bloc de base dans la direction Y (541, 2101), et le bloc de contact dans la direction Y (543, 2103) est fixé à l'autre extrémité du bloc de prolongement dans la direction Y (313, 542, 2102) ; et
le bloc de base dans la direction Y (541, 2101) est configuré pour se déformer sur la base d'un cinquième signal électrique pour entraîner le bloc de contact dans la direction Y (543, 2103) afin qu'il vienne en butée contre le cadre (22, 51c) ou qu'il quitte le cadre (22, 51c), et le bloc de prolongement dans la direction Y (313, 542, 2102) est configuré pour se déformer sur la base d'un sixième signal électrique pour entraîner le bloc de contact dans la direction Y (543, 2103) afin qu'il se déplace dans la direction Y, dans lequel, lorsque le bloc de contact dans la direction Y vient en butée contre le cadre (22, 51c) et que le bloc de prolongement dans la direction Y (313, 542, 2102) se déforme, le bloc de contact dans la direction Y (543, 2103) entraîne le cadre (22, 51c) afin qu'il se déplace dans la direction Y.

7. Moteur piézoélectrique à ultrasons (20, 50) selon la revendication 6, dans lequel le moteur piézoélectrique à ultrasons (20, 50) comprend également un circuit d'entraînement dans la direction X (240) et un circuit d'entraînement dans la direction Y (59, 250) ;
le circuit d'entraînement dans la direction X (240) est connecté électriquement au dispositif d'entraînement piézoélectrique dans la direction X, et le circuit d'entraînement dans la direction X (240) est configuré pour générer le troisième signal électrique et le quatrième signal électrique sur la base d'un signal de stabilisation d'image, de sorte que le dispositif d'entraînement piézoélectrique dans la direction X réalise au moins une fois une action d'entraînement dans la direction X, dans lequel l'action d'entraînement dans la direction X comprend :
le bloc de base dans la direction X (291) se prolonge pour entraîner le bloc de contact dans la direction X (293) afin qu'il vienne en butée contre le cadre (22, 51c) ;
le bloc de prolongement dans la direction X (292, 312) se prolonge ou se contracte pour entraîner le bloc de contact dans la direction X (293) pour entraîner le cadre (22, 51c) afin qu'il se déplace dans la direction X ;
le bloc de base dans la direction X se contracte pour entraîner le bloc de contact dans la direction X (293) afin qu'il quitte le cadre (22, 51c) ; et
le bloc de prolongement dans la direction X (292, 312) se contracte ou se prolonge pour entraîner le bloc de contact dans la direction X (293) afin qu'il revienne à un emplacement initial ; et
le circuit d'entraînement dans la direction Y (59, 250) est connecté électriquement au dispositif d'entraînement piézoélectrique dans la direction Y, et le circuit d'entraînement dans la direction Y (59, 250) est configuré pour générer le cinquième signal électrique et le sixième signal électrique sur la base d'un signal de stabilisation d'image, pour entraîner le dispositif d'entraînement piézoélectrique dans la direction Y afin qu'il réalise au moins une fois une action d'entraînement dans la direction Y, dans lequel l'action d'entraînement dans la direction Y comprend :
le bloc de base dans la direction Y (541, 2101) se prolonge pour entraîner le bloc de contact dans la direction Y (543, 2103) afin qu'il vienne en butée contre le cadre (22, 51c) ;
le bloc de prolongement dans la direction Y (313, 542, 2102) se prolonge ou se contracte pour entraîner le bloc de contact dans la direction Y (543, 2103) pour entraîner le cadre (22, 51c) afin qu'il se déplace dans la direction Y ;
le bloc de base dans la direction Y se contracte pour entraîner le bloc de contact dans la direction Y (543, 2103) afin qu'il quitte le cadre (22, 51c) ; et
le bloc de prolongement dans la direction Y (313, 542, 2102) se contracte ou se prolonge pour entraîner le bloc de contact dans la direction Y (543, 2103) afin qu'il revienne à un emplacement initial.

8. Moteur piézoélectrique à ultrasons (20, 50) selon l'une quelconque des revendications 1 à 5, dans lequel le moteur piézoélectrique à ultrasons (20, 50) comprend également une base (21) et un dispositif d'entraînement piézoélectrique dans la direction XY, le cadre (22, 51c) est disposé sur un côté interne de la base (21) et peut se déplacer dans une direction X et une direction Y par rapport à la base (21), et la direction X, la direction Y et la direction Z sont perpendiculaires entre elles ;
le dispositif d'entraînement piézoélectrique dans la direction XY est situé entre la base (21) et la fixation (51), le dispositif d'entraînement piézoélectrique dans la direction XY comprend un bloc de base dans la direction XY (311), un bloc de prolongement dans la direction X (292, 312), un bloc de prolongement dans la direction Y (313, 542, 2102) et un bloc de contact dans la direction XY (314) qui sont empilés, une extrémité du bloc de base dans la direction XY (311) est fixée à la base (21), une extrémité du bloc de prolongement dans la direction X (292, 312) est fixée à l'autre extrémité du bloc de base dans la direction XY (311), une extrémité du bloc de prolongement dans la direction Y (313, 542, 2102) est fixée à l'autre extrémité du bloc de prolongement dans la direction X (292, 312), et le bloc de contact dans la direction XY (314) est fixé à l'autre extrémité du bloc de prolongement dans la direction Y (313, 542, 2102) ; et
le bloc de base dans la direction XY (311) est configuré pour se déformer sur la base d'un septième signal électrique, pour entraîner le bloc de contact dans la direction XY (314) afin qu'il vienne en butée contre le cadre (22, 51c) ou qu'il quitte le cadre (22, 51c), le bloc de prolongement dans la direction X (292, 312) est configuré pour se déformer sur la base d'un huitième signal électrique, pour entraîner le bloc de contact dans la direction XY (314) afin qu'il se déplace dans la direction X, et le bloc de prolongement dans la direction Y (313, 542, 2102) est configuré pour se déformer sur la base d'un neuvième signal électrique, pour entraîner le bloc de contact dans la direction XY (314) afin qu'il se déplace dans la direction Y, le bloc de contact dans la direction XY vient en butée contre le cadre (22, 51c), et lorsque le bloc de prolongement dans la direction X (292, 312) et/ou le bloc de prolongement dans la direction Y (313, 542, 2102) se déforme/déforment, le bloc de contact dans la direction XY (314) entraîne le cadre (22, 51c) afin qu'il se déplace sur un plan XY, dans lequel le plan XY est perpendiculaire à la direction **Z.**

9. Moteur piézoélectrique à ultrasons (20, 50) selon la revendication 8, dans lequel le moteur piézoélectrique à ultrasons (20, 50) comprend également un circuit d'entraînement dans la direction XY (32), le circuit d'entraînement dans la direction XY (32) est connecté électriquement au dispositif d'entraînement piézoélectrique dans la direction XY, et le circuit d'entraînement dans la direction XY (32) est configuré pour générer le septième signal électrique, le huitième signal électrique et le neuvième signal électrique sur la base d'un signal de stabilisation d'image, de sorte que le dispositif d'entraînement piézoélectrique dans la direction XY réalise au moins une fois une action d'entraînement dans la direction X, au moins une fois une action d'entraînement dans la direction Y, ou au moins une fois une action d'entraînement dans la direction XY ;
l'action d'entraînement dans la direction X comprend :
le bloc de base dans la direction XY (311) se prolonge pour entraîner le bloc de contact dans la direction XY (314) afin qu'il vienne en butée contre le cadre (22, 51c) ;
le bloc de prolongement dans la direction X (292, 312) se prolonge ou se contracte pour entraîner le bloc de contact dans la direction XY (314) pour entraîner le cadre (22, 51c) afin qu'il se déplace dans la direction X ;
le bloc de base dans la direction XY se contracte pour entraîner le bloc de contact dans la direction XY (314) afin qu'il quitte le cadre (22, 51c) ; et
le bloc de prolongement dans la direction X (292, 312) se contracte ou se prolonge pour entraîner le bloc de contact dans la direction XY (314) afin qu'il revienne à un emplacement initial ;
l'action d'entraînement dans la direction Y comprend :
le bloc de base dans la direction XY (311) se prolonge pour entraîner le bloc de contact dans la direction XY (314) afin qu'il vienne en butée contre le cadre (22, 51c) ;
le bloc de prolongement dans la direction Y (313, 542, 2102) se prolonge ou se contracte pour entraîner le bloc de contact dans la direction XY (314) pour entraîner le cadre (22, 51c) afin qu'il se déplace dans la direction Y ;
le bloc de base dans la direction XY se contracte pour entraîner le bloc de contact dans la direction XY (314) afin qu'il quitte le cadre (22, 51c) ; et
le bloc de prolongement dans la direction Y (313, 542, 2102) se contracte ou se prolonge pour entraîner le bloc de contact dans la direction XY (314) afin qu'il revienne à un emplacement initial ; et
l'action d'entraînement dans la direction XY comprend :
le bloc de base dans la direction XY (311) se prolonge pour entraîner le bloc de contact dans la direction XY (314) afin qu'il vienne en butée contre le cadre (22, 51c) ;
le bloc de prolongement dans la direction X (292, 312) se prolonge ou se contracte, et le bloc de prolongement dans la direction Y (313, 542, 2102) se prolonge ou se contracte, pour entraîner le bloc de contact dans la direction XY (314) pour entraîner le cadre (22, 51c) afin qu'il se déplace sur le plan XY ;
le bloc de base dans la direction XY se contracte pour entraîner le bloc de contact dans la direction XY (314) afin qu'il quitte le cadre (22, 51c) ; et
le bloc de prolongement dans la direction X (292, 312) se contracte ou se prolonge, et le bloc de prolongement dans la direction Y (313, 542, 2102) se contracte ou se prolonge, pour entraîner le bloc de contact dans la direction XY (314) afin qu'il revienne à un emplacement initial.

10. Moteur piézoélectrique à ultrasons (20, 50) selon l'une quelconque des revendications 6 à 9, dans lequel le moteur piézoélectrique à ultrasons (20, 50) comprend également un troisième élément magnétique (2801) et un quatrième élément magnétique (2802), le troisième élément magnétique (2801) est intégré dans la base (21), le quatrième élément magnétique (2802) est intégré dans le cadre (22, 51c), le quatrième élément magnétique (2802) et le troisième élément magnétique (2801) sont attirés l'un vers l'autre, et le cadre (22, 51c) est connecté de manière coulissante à la base (21).

11. Moteur piézoélectrique à ultrasons (20, 50) selon la revendication 10, dans lequel le moteur piézoélectrique à ultrasons (20, 50) comprend également au moins une seconde bille, l'au moins une seconde bille est située entre le cadre (22, 51c) et la base (21), et lorsque le cadre (22, 51c) coulisse par rapport à la base (21), l'au moins une seconde bille roule.

12. Moteur piézoélectrique à ultrasons (20, 50), comprenant une fixation (51), un support (23, 52), un dispositif d'entraînement piézoélectrique dans la direction Y, un cadre rotatif (55), un réflecteur (56) et un dispositif d'entraînement piézoélectrique dans la direction XZ, dans lequel
la fixation (51) est dotée d'un espace d'installation (511) et d'un trou de passage de lumière (512) communiquant avec l'espace d'installation (511), le support (23, 52) est disposé dans l'espace d'installation (511) et peut se déplacer dans une direction Y par rapport à la fixation (51), le support (23, 52) est configuré pour installer un objectif de caméra (10, 40), la direction Y est perpendiculaire à un axe optique (10a, 401) de l'objectif de caméra (10, 40), le cadre rotatif (55) est disposé dans l'espace d'installation (511) et peut tourner autour de la direction Y par rapport à la fixation (51), le réflecteur (56) est fixé au cadre rotatif (55), et le réflecteur (56) est configuré pour réfléchir un rayon lumineux du trou de passage de lumière (512) vers l'objectif de caméra (10, 40) ;
le dispositif d'entraînement piézoélectrique dans la direction Y est situé entre la fixation (51) et le support (23, 52), le dispositif d'entraînement piézoélectrique dans la direction Y comprend un bloc de base dans la direction Y (541, 2101), un bloc de prolongement dans la direction Y (313, 542, 2102) et un bloc de contact dans la direction Y (543, 2103), une extrémité du bloc de base dans la direction Y (541, 2101) est fixée à la fixation (51), une extrémité du bloc de prolongement dans la direction Y (313, 542, 2102) est fixée à l'autre extrémité du bloc de base dans la direction Y (541, 2101), et le bloc de contact dans la direction Y (543, 2103) est fixé à l'autre extrémité du bloc de prolongement dans la direction Y (313, 542, 2102) ;
le bloc de base dans la direction Y (541, 2101) est configuré pour se déformer sur la base d'un dixième signal électrique pour entraîner le bloc de contact dans la direction Y (543, 2103) afin qu'il vienne en butée contre le support (23, 52) ou qu'il quitte le support (23, 52), et le bloc de prolongement dans la direction Y (313, 542, 2102) est configuré pour se déformer sur la base d'un onzième signal électrique pour entraîner le bloc de contact dans la direction Y (543, 2103) afin qu'il se déplace dans la direction Y, dans lequel, lorsque le bloc de contact dans la direction Y vient en butée contre le support (23, 52) et que le bloc de prolongement dans la direction Y (313, 542, 2102) se déforme, le bloc de contact dans la direction Y (543, 2103) entraîne le support (23, 52) afin qu'il se déplace dans la direction Y ;
le dispositif d'entraînement piézoélectrique dans la direction XZ est situé entre la fixation (51) et le cadre rotatif (55), le dispositif d'entraînement piézoélectrique dans la direction XZ comprend un bloc de base dans la direction XZ (571), un bloc de prolongement dans la direction XZ (572) et un bloc de contact dans la direction XZ (573), une extrémité du bloc de base dans la direction XZ (571) est fixée à la fixation (51), une extrémité du bloc de prolongement dans la direction XZ (572) est fixée à l'autre extrémité du bloc de base dans la direction XZ (571), et le bloc de contact dans la direction XZ (573) est fixé à l'autre extrémité du bloc de prolongement dans la direction XZ (572) ; et
le bloc de base dans la direction XZ (571) est configuré pour se déformer sur la base d'un douzième signal électrique, pour entraîner le bloc de contact dans la direction XZ (573) afin qu'il vienne en butée contre le cadre rotatif (55) ou qu'il quitte le cadre rotatif (55), le bloc de prolongement dans la direction XZ (572) est configuré pour se déformer sur la base d'un treizième signal électrique, pour entraîner le bloc de contact dans la direction XZ (573) afin qu'il se déplace dans une direction XZ, dans lequel la direction XZ est perpendiculaire à la direction Y, et lorsque le bloc de contact dans la direction XZ vient en butée contre le cadre rotatif (55) et que le bloc de prolongement dans la direction XZ (572) se déforme, le bloc de contact dans la direction XZ (573) entraîne le cadre rotatif (55) afin qu'il tourne.

13. Moteur piézoélectrique à ultrasons (20, 50) selon la revendication 12, dans lequel le moteur piézoélectrique à ultrasons (20, 50) comprend également un circuit d'entraînement dans la direction Y (59, 250) et un circuit d'entraînement dans la direction XZ (510) ;
le circuit d'entraînement dans la direction Y (59, 250) est connecté électriquement au dispositif d'entraînement piézoélectrique dans la direction Y, et le circuit d'entraînement dans la direction Y (59, 250) est configuré pour générer le dixième signal électrique et le onzième signal électrique sur la base d'un signal de stabilisation d'image, de sorte que le dispositif d'entraînement piézoélectrique dans la direction Y réalise au moins une fois une action d'entraînement dans la direction Y, dans lequel l'action d'entraînement dans la direction Y comprend :
le bloc de base dans la direction Y (541, 2101) se prolonge pour entraîner le bloc de contact dans la direction Y (543, 2103) afin qu'il vienne en butée contre le support (23, 52) ;
le bloc de prolongement dans la direction Y (313, 542, 2102) se prolonge ou se contracte pour entraîner le bloc de contact dans la direction Y (543, 2103) pour entraîner le support (23, 52) afin qu'il se déplace dans la direction Y ;
le bloc de base dans la direction Y se contracte pour entraîner le bloc de contact dans la direction Y (543, 2103) afin qu'il quitte le support (23, 52) ; et
le bloc de prolongement dans la direction Y (313, 542, 2102) se contracte ou se prolonge pour entraîner le bloc de contact dans la direction Y (543, 2103) afin qu'il revienne à un emplacement initial ; et
le circuit d'entraînement dans la direction XZ (510) est connecté électriquement au dispositif d'entraînement piézoélectrique dans la direction XZ, et le circuit d'entraînement dans la direction XZ (510) est configuré pour générer le douxième signal électrique et le treizième signal électrique sur la base d'un signal de mise au point automatique et d'un signal de stabilisation d'image, pour entraîner le dispositif d'entraînement piézoélectrique dans la direction XZ afin qu'il réalise au moins une fois une action d'entraînement dans la direction XZ,
dans lequel l'action d'entraînement dans la direction XZ comprend :
le bloc de base dans la direction XZ (571) se prolonge pour entraîner le bloc de contact dans la direction XZ (573) afin qu'il vienne en butée contre le cadre rotatif (55) ;
le bloc de prolongement dans la direction XZ (572) se prolonge ou se contracte pour entraîner le bloc de contact dans la direction XZ (573) afin qu'il se déplace dans la direction XZ et entraîner le cadre rotatif (55) afin qu'il tourne autour de la direction Y ;
le bloc de base dans la direction XZ se contracte pour entraîner le bloc de contact dans la direction XZ (573) afin qu'il quitte le cadre rotatif (55) ; et
le bloc de prolongement dans la direction XZ (572) se contracte ou se prolonge pour entraîner le bloc de contact dans la direction XZ (573) afin qu'il revienne à un emplacement initial.

14. Module de caméra, comprenant un objectif de caméra (10, 40) et le moteur piézoélectrique à ultrasons (20, 50) selon l'une quelconque des revendications 1 à 13, dans lequel l'objectif de caméra (10, 40) est installé sur le support (23, 52).

15. Dispositif électronique (100), comprenant un processeur (103) et le module de caméra selon la revendication 14, dans lequel le module de caméra est connecté électriquement au processeur (103).
